# EUROPEAN PATENT APPLICATION

(11) **EP 1 219 567 A1**
(43) Date of publication of application: **03.07.2002**
(21) Application number: 00957095.3
(22) Date of filing: 11.09.2000
(51) Int. Cl.: C01B 31/02, C01B 31/04, C01B 3/00, H01M 4/24, H01M 4/38, H01M 10/24, H01M 12/08, H01M 8/04, B01J 20/20

(54) **CARBONACEOUS MATERIAL FOR HYDROGEN STORAGE AND METHOD FOR PREPARING THE SAME, AND CELL AND FUEL CELL**

(30) Priority: 09.09.1999 JP 25574399; 06.10.1999 JP 28563999; 22.10.1999 JP 30038199; 26.10.1999 JP 30396899; 12.11.1999 JP 32297599; 22.11.1999 JP 33094899; 10.12.1999 JP 35170199; 27.04.2000 JP 2000127113
(71) Applicant: Sony Corporation, Tokyo 141-0001 (JP)
(72) Inventor: SHIRAISHI, Masashi, Sony Corporation, Tokyo 141-0001 (JP); NEGISHI, Eisuke, Sony Corporation, Tokyo 141-0001 (JP); HINOKUMA, Koichiro, Sony Corporation, Tokyo 141-0001 (JP); YAMADA, Atsuo, Sony Corporation, Tokyo 141-0001 (JP); KAJIURA, Hisashi, Sony Corporation, Tokyo 141-0001 (JP); TANAKA, Koichi, Sony Corporation, Tokyo 141-0001 (JP); ATA, Masafumi, Sony Corporation, Tokyo 141-0001 (JP)
(74) Representative: Müller, Frithjof E., Dipl.-Ing.
(86) International application number: JP0006199
(87) International publication number: WO0117900

(57) **Abstract**

A carbonaceous material for hydrogen storage capable of storing hydrogen in the form of protons is provided. The carbonaceous material is composed of molecules having structural curvatures and has a work function of 4.9 eV or more. The carbonaceous material can be produced by an arc discharge process using a carbon based electrode. Examples of these carbonaceous materials include a baked body composed of a polymer produced from fullerenes by baking thereof, a polymer produced from fullerenes by electrolytic polymerization, a carbonaceous derivative produced by introducing groups allowing hydrogen bonding with protons to a carbonaceous material, a carbonaceous material composed of molecules having structural bending portions, and a carbonaceous material having a metal supported thereon, which exhibits a catalytic ability to separate a hydrogen molecule into hydrogen atoms and to further separate hydrogen atoms into protons and electrons. Also, the carbonaceous material can be a material for hydrogen storage into which a material capable of storing hydrogen to which a positive voltage is applied is processed in a gas atmosphere containing hydrogen. The carbonaceous materials for hydrogen storage are used for cells, such as an alkali battery, air cell, and a fuel cell.

## Description

### Technical Field

The present invention relates to a carbonaceous material for hydrogen storage, a production method thereof, and cells.

### Background Art

For a long while after the industrial revolution, so-called fossil fuel such as coal and petroleum (gasoline, light oil, kerosene, heavy oil, etc.) has been used, typically, as thermal sources for power generation and heating purposes or as power sources for automobiles, ships, and airplanes. In fact, fossil fuel use has significantly improved living conditions and resulted in significant industrial advancements.

In recent years, however, the environmental conditions of earth have deteriorated due to air pollutants such as sulfur dioxide and carbon dioxide produced upon burning of fossil fuel. Moreover, the use of fossil fuel itself has raised the issue of resource exhaustion, that is fossil fuels are increasingly becoming limited in supply.

On the other hand, attention has been given to hydrogen (gas) fuel as a clean energy source in place of fossil fuel. The reason why hydrogen gas is called a clean energy source is that upon burning, hydrogen generates only water, that is, it does not produce any air pollutant.

In recent years, a recognition has been promptly spread that hydrogen is an ideal clean, inexhaustible energy source because it has a large chemical energy amount per unit mass and does not release toxic substances and earth warming gases upon use of hydrogen as fuel. In particular, fuel cells capable of converting a hydrogen energy into an electric energy has been actively developed. Such fuel cells are expected to be used, typically, as thermal sources for large-scale power generation and on-site private power generation, and as power sources for electric cars.

The use of hydrogen as fuel, however, presents the following problems. Namely, since hydrogen is in a gaseous state at standard temperature and pressure, it is relatively difficult to handle as compared with coal or petroleum. Also, since the density of hydrogen is much smaller than that of coal or petroleum, the chemical energy per unit volume thereof becomes smaller, to cause a problem with storage and transportation thereof. Further, since hydrogen has possibilities of leakage and explosion, it is difficult to keep safety upon use of hydrogen as fuel.

For utilization of hydrogen as fuel, therefore, it becomes a key-point how to store a large amount of hydrogen in a state transportable with safety, and studies have been made to establish a new practical hydrogen storage technology.

To be more specific, to put a hydrogen energy system into practical use, it is most important how to efficiently accumulate hydrogen gas in a small volume with safety. It is an important duty of engineers and researchers in the art to establish the new practical hydrogen storage technology.

Various kinds of method for accumulating hydrogen gas have been already developed, which are classified into three groups:
(i) a method of accumulating hydrogen gas as a high pressure gas;
(ii) a method of accumulating hydrogen as a liquefied gas; and
(iii) a method of storing hydrogen gas in an alloy material or the like.

Each of these methods, however, has the following problems:

To carry out the method (i), a very strong metal made pressure vessel (gas tank) is required to accumulate hydrogen gas. The vessel is very heavy, and it cannot perfectly solve a question about safety against a high-pressure gas. Further, the accumulation density of a high-pressure gas is as very small as about 12 mg/ml (at 15 MPa).

The method (ii) for liquefying hydrogen gas and storing the liquefied gas is superior to the method (i) in that the accumulation density of liquefied hydrogen is about 70 mg/ml, which is much larger than the accumulation density of gaseous hydrogen in the method (i). The liquefaction of hydrogen gas, however, requires an additional apparatus for cooling hydrogen gas at a temperature of about -250°C or less. Accordingly, the method (ii) has problems in complicating the system and consuming energy for liquefying hydrogen gas.

The method (iii) is characterized by using a hydrogen storage material, particularly, a hydrogen storage alloy composed of a lanthanum-nickel alloy, a vanadium alloy, or a magnesium alloy. The practical accumulation (storage) density of hydrogen in this method (iii) is larger than the accumulation density of liquefied gas in the method (ii), although hydrogen is stored in an alloy in this method (iii). The merits of a hydrogen storage alloy lies in that hydrogen can be stored in and released from the alloy at room temperature, and that the handling of hydrogen is easier than that of a high-pressure hydrogen gas or liquefied hydrogen because the storage state depends on an equilibrium with a partial pressure of hydrogen.

A hydrogen storage alloy, however, has problems that since the alloy is relatively heavy, the storage amount per unit weight is not sufficiently large; an alloy structure is gradually damaged by repeated storage and release of hydrogen, resulting in deterioration of the storage characteristic; and a component contained in the alloy possibly causes a resource exhaustion problem or an environmental problem.

On the other hand, recently, a carbonaceous material such as fullerenes has gained the spotlight as a relatively new hydrogen storage material. The reason why the studies on the carbonaceous material of this type have been actively made is as follows: namely, it is expected that most of the above-described problems in the methods (i) to (iii) can be solved by making use of characteristics of the material.

Some problems, however, have been encountered in using the above carbonaceous material as a new hydrogen storage material.

A method of storing hydrogen in fullerenes by addition reaction of hydrogen thereto has been disclosed in Japanese Patent Laid-open No. Hei 5-270801. In this method, however, since chemical covalent bonding is formed between carbon atoms and hydrogen atoms, the "storage of hydrogen" should be rather called "addition of hydrogen". Specifically, since the upper limit of an added amount of hydrogen by chemical bonds is dependent on the number of unsaturated carbon bonds, this method has a limitation in increasing the stored amount of hydrogen. Further, to release hydrogen already stored in fullerenes therefrom, the fullerenes must be heated at a relatively high temperature. As a result, an excessive amount of energy is consumed for release of hydrogen. This is unsuitable as a hydrogen accumulation method.

Another method of making use of fullerenes for storage of hydrogen has been disclosed in Japanese Patent Laid-open No. Hei 10-72201. This method is characterized by covering surfaces of fullerene molecules with a catalytic metal such as platinum by vacuum vapor-deposition or sputtering, thereby storing hydrogen by making use of the catalytic reaction of the catalytic metal.

In general, carbonaceous materials, such as fullerenes, have minimal ability to dissolve or adsorb hydrogen molecules in order to induce the initial reaction for hydrogen storage. In this method, such an ability of inducing the initial reaction for storage is given by the catalytic metal such as platinum.

According to this method, however, the supported amount of the catalytic metal such as platinum must be increased to sufficiently achieve a hydrogen storage ability. This causes practical problems in terms of cost and resource obtainment.

From the above description, it becomes apparent that the known hydrogen accumulation methods are poor in practical utility. In particular, since the known methods have problems in terms of weight and usage, it is difficult to apply the methods for the case of using hydrogen as power sources for automobiles, ships, and household electric appliances, or the case of transporting a large amount of hydrogen.

In general, hydrogen gas is stored in accordance with the above-described three methods (i) to (iii). In the method (i) or (ii) in which hydrogen is stored in the form of a high-pressure gas or in a liquefied gas, there occur the problems that the vessel is heavy and is inconvenient in handling and transportation, and in the method (iii) in which hydrogen is stored in a hydrogen storage material, there occur the problems that the chemical energy per unit weight is smaller and the material cost is high. As a result, the commercial viability of each of these methods is adversely effected.

Accordingly, there exists a need to develop a new material capable of efficiently accumulating a large amount of hydrogen, reducing the weight of the material for easily transporting the material, allowing repeated operation of the material at room temperature, preventing deterioration of the material, keeping safety in handling, and effectively eliminating a resource problem and an environmental problem.

### Disclosure of the Invention

An object of the present invention is to provide a carbonaceous material for hydrogen storage, which is capable of exhibiting a high hydrogen storage, keeping safety in handling, lowering the cost, and reducing the weight for easily transporting the material, a production method thereof, and a cell and a fuel cell.

An embodiment of the present invention is to provide a carbonaceous material for hydrogen storage, which is capable of storing hydrogen in the state of protons.

According to the carbonaceous material for hydrogen storage of the present invention, since the material acting as a strong electron acceptor receives electrons from hydrogen and stores hydrogen in the form of protons, the occupied volume of hydrogen in the material becomes significantly small. As a result, the carbonaceous material for hydrogen storage can store a large amount of hydrogen as compared with the conventional hydrogen storage due to chemical absorption of hydrogen atoms. That is to say, the carbonaceous material for hydrogen storage stores protons (H⁺) produced by charge separation from hydrogen atoms, and subsequently densely stores a large amount of hydrogen in the state of protons.

Such a hydrogen storage mechanism, which has been newly found by the present inventors, is very important in that hydrogen is stored in a carbonaceous material not in the form of hydrogen but in the form of protons.

If a carbonaceous material for hydrogen storage contains carbon nanotubes, the hydrogen storage ability thereof becomes high. Further, if a transition metal is contained in the carbonaceous material, the hydrogen storage ability thereof becomes higher, and if a catalyst such as platinum is supported on the surface of the carbonaceous material, the hydrogen storage ability thereof becomes higher.

The carbonaceous material for hydrogen storage according to the present invention can release the already stored hydrogen from the material at a relatively low temperature. Unlike high-pressure hydrogen or liquefied hydrogen, hydrogen is confined in the carbonaceous material of a small-volume, and accordingly, even if the system is opened, the already stored hydrogen is not readily released at once. Accordingly, the carbonaceous material for hydrogen storage according to the present invention can keep safety in handling.

Since the carbonaceous material for hydrogen storage mainly contains carbon, it is lightweight and thereby easy in handling and transportation. The carbonaceous material is also advantageous in that the production cost is low, and there is no problem in terms of resource and environmental protection.

The present inventors have found, as described above, that the hydrogen storage mechanism of a carbonaceous material is essentially based on the behavior of protons, and further found that the hydrogen storage ability of a material for hydrogen storage, which is not limited to a carbonaceous material but may be any suitable material allowing migration of electric charges between hydrogen atoms and the material, can be accurately and simply evaluated by measuring a complex impedance or a direct current resistance of the material, and that the essential requirement of the carbonaceous material for hydrogen storage according to the present invention can be determined by measuring the complex impedance or direct current resistance thereof.

According to the present invention, there is provided a material for hydrogen storage, characterized in that a direct current resistance of said material in a hydrogen storage state is at least 50% lower than a direct current resistance of said material in a hydrogen non-storage state, or alternatively, a real number portion of a complex impedance component of said material in a hydrogen storage state is at least 50% lower than a real number portion of a complex impedance component of said material in a hydrogen non-storage state.

However, if the direct current resistance or the real number portion of the complex impedance component of the material in the hydrogen storage state is greater than about 50% of the direct current resistance or the real number portion of the complex impedance component of the material in the hydrogen non-storage state, the hydrogen storage ability is significantly reduced. As a result, the material for hydrogen storage becomes poor in serviceability.

A material for hydrogen storage, particularly, a carbonaceous material for hydrogen storage, which is characterized by its resistance lowering ratio, may be preferably applicable to the above-described cells (for example, alkali battery and air cell) and a fuel cell.

Another embodiment of the present invention is to provide a method of producing a hydrogen storage material, including the step of treating a material capable of storing hydrogen in a gas atmosphere containing hydrogen while applying a positive voltage to the material.

A carbonaceous material, which includes, for example, fullerenes, carbon nanofibers, carbon nanotubes, carbon soot, nanocapsules, Bucky onions, and carbon fibers, is composed of molecules each having a larger surface area and a structural curvature. Such a carbonaceous material has a property that since the orthogonality of a sigma electron orbital and a pi electron orbital disappears, both the HOMO (Highest Occupied Molecular Orbital) and LUMO (Lowest Unoccupied Molecular Orbital) levels become lower than those of a material having a sigma-pi orthogonal system, with a result that it functions as a strong electron acceptor. As a result of studies of the present inventors, it has been found that the reason why the above carbonaceous material has a high hydrogen storage ability is that, since the material functions as a strong electron acceptor, it stores hydrogen in the form of protons, with a result that it can store a larger amount of hydrogen per unit volume as compared with the storage of hydrogen in the form of hydrogen molecules. As a result of these studies, it has been also found that the fact that the above carbonaceous material has a high hydrogen storage ability is not due to the unique structure thereof but due to a value of a work function depending on the unique structure, that is, the position of a valence edge of each molecule of the material. Accordingly, the electron acceptability, that is, the hydrogen storage ability of a material capable of storing hydrogen can be controlled by applying an external electric field to the material so as to shift the entire electron level, thereby shifting both the HOMO and LUMO levels relative to the vacuum level. On the basis of the above-described knowledge, the present invention has been accomplished.

According to the present invention, a material for hydrogen storage can store a large amount of hydrogen by treating the material in a gas atmosphere containing hydrogen gas while applying a positive voltage to the material, to shift the entire electron level, thereby improving the hydrogen storage ability.

It should be noted that the hydrogen to be stored in a carbonaceous material contains not only hydrogen molecules and hydrogen atoms but also protons which are atomic nuclei of hydrogen.

According to the present invention, there is provided a method of controlling the storage and release of hydrogen in and from a hydrogen storage material, including the steps of stopping the release of hydrogen from a hydrogen storage material by applying a first positive voltage, which is set relative to a specific reference potential, to said hydrogen storage material, and releasing hydrogen from said hydrogen storage material by applying a second positive voltage lower than said first positive voltage to said hydrogen storage material.

With this configuration, since the hydrogen storage ability of the hydrogen storage material can be increased by applying the first positive voltage, which is set to the specific reference potential, to the hydrogen storage material, the release of hydrogen from the hydrogen storage material can be stopped. On the other hand, since the hydrogen storage ability can be decreased by applying the second positive voltage lower than the first positive voltage to the hydrogen storage material, the hydrogen can be released from the hydrogen storage material. As a result, the release of hydrogen from the hydrogen storage material can be adjusted by controlling the voltage applied to the hydrogen storage material.

According to the present invention, there is provided a hydrogen storing/releasing system including a chamber capable of containing a hydrogen storage material, a voltage source capable of applying a positive voltage to said hydrogen storage material, and a controller capable of controlling said voltage source.

With this configuration, since the hydrogen storage ability of the hydrogen storage material contained in the chamber can be increased by applying a positive voltage to the hydrogen storage material by control of the voltage source by the controller, the release of hydrogen from the hydrogen storage material can be stopped. On the other hand, since the hydrogen storage ability of the hydrogen storage material can be decreased by applying a lower positive voltage to the hydrogen storage material, hydrogen can be released from the hydrogen storage material. As a result, the release of hydrogen from the hydrogen storage material can be adjusted by controlling the voltage applied to the hydrogen storage material by the control of the voltage source by the controller.

An embodiment of the present invention is to provide a carbonaceous material for hydrogen storage using a specific carbonaceous material.

According to the present invention, there is provided a carbonaceous material for hydrogen storage, characterized in that the material mainly contains a carbonaceous material for hydrogen storage produced by an arc discharge process using carbon based electrodes.

According to the present invention, there is also provided a method of producing a carbonaceous material for hydrogen storage, including the step of producing a carbonaceous material capable of storing hydrogen by arc discharge in a reaction chamber (vacuum chamber) by using a carbon based electrode as at least one of the electrodes oppositely disposed in the reaction chamber.

As a result of studies of the present inventors, it has been found that when arc discharge is performed by using a carbon based electrode as at least one of electrodes oppositely disposed in a reaction chamber and applying a voltage between the electrodes, a soot-like carbonaceous material containing at least carbon nanotubes and fullerenes such as C₆₀ and C₇₀ is produced, and that such a soot-like carbonaceous material exhibits a desirable hydrogen storage ability.

The unique effect, that is, the hydrogen storage ability of the carbonaceous material is mainly derived from the presence of the carbon nanotubes as described later. If a transition metal is contained in the carbonaceous material for hydrogen storage, the hydrogen storage ability thereof can be enhanced, and if a catalyst such as platinum is supported on the surface of the carbonaceous material for hydrogen storage, the hydrogen storage ability thereof can be further enhanced.

The carbonaceous material for hydrogen storage according to the present invention can release the already stored hydrogen from the material at a relatively low temperature. Unlike high-pressure hydrogen or liquefied hydrogen, hydrogen is confined to small volume voids or interstitial regions of the carbonaceous material, and accordingly, even if the system is opened, the already stored hydrogen is not released at once. Accordingly, the carbonaceous material for hydrogen storage according to the present invention can keep safety in handling.

Since the carbonaceous material for hydrogen storage mainly contains carbon in an embodiment of the present invention, it is lightweight and thereby easy in handling and transportation. The carbonaceous material is also advantageous in that the production cost is low, and its use results in effectively no issues concerning resource limitations or exhaustion and environmental protection.

According to the present invention, there is provided a carbonaceous material for hydrogen storage, characterized in that the material mainly contains a baked body composed of a polymer produced from one kind or a mixture of fullerene molecules, i.e., at least one type of fullerene molecule.

According to the present invention, there is also provided a method of producing a carbonaceous material for hydrogen storage, including the step of polymerizing one kind or a mixture of fullerene molecules by baking them in a non-oxidizing gas.

The present inventors, who have studied fullerenes for a long time, have also examined a usability of fullerenes as a hydrogen storage material. As a result, the present inventors have found that, to derive the hydrogen storage ability of fullerenes, it is important to use the fullerenes as a precursor of a polymer (baked body) in order to make effective use of the characteristic of a pi electron structure having a curvature of each molecule of the fullerenes, and to modify the polymer into a polymer having a stable structure.

The present inventors have examined a fullerene polymer, and found that a polymer containing at least the above-described stable dimers can be obtained by baking one kind or a mixture of fullerenes in a non-oxidizing atmosphere at a suitable temperature, and that the baked body mainly containing the stable polymer can be used as a base material for producing a carbonaceous material having a high hydrogen storage.

A metal or a compound thereof for promoting ordering (stabilization of the structure) of carbon upon baking may be preferably added to the fullerene molecules as a raw material, and the mixture may be baked. Further, a metal catalyst having a catalytic ability capable of separating a hydrogen molecule into hydrogen atoms and further separating hydrogen atoms into protons and electrons may be preferably supported (in the form of fine particles or a layer) on the surface of a baked body including or not including the above-described ordering metal or compound thereof. The baked body on which the metal catalyst is supported can exhibit a high hydrogen storage ability even at room temperature.

A polymer produced from one kind or a mixture of fullerene molecules by electrolytic polymerization or mechanical vibration can be used as a carbonaceous material for hydrogen storage.

To obtain a fullerene polymer having a high hydrogen storage ability, the polymer contains at least a polymer portion having a cycloaddition structure. Such a fullerene polymer can be produced by an electrolytic polymerization process, a mechanical shaking process, or an ultrasonic process. The fullerene polymer thus produced is excellent not only in hydrogen storage ability but also in practical utility.

As a result of examination by the present inventors, the cycloaddition polymer, which is difficult to be selectively obtained by the related art process such as the plasma polymerization process, particularly, a polymer of fullerenes polymerized by 1,2-addition reaction (at the cyclohexatrienyl sites), can be used as a hydrogen storage material capable of achieving a high hydrogen ability. If metal ions or clusters thereof are incorporated in the above polymer material, there can be obtained a charge separation effect, and if particles of a metal such as platinum is supported on the surface of the polymer material, there can be obtained an effect of increasing the hydrogen storage ability of the polymer material.

The above-described hydrogen storage ability can be given not only to a cycloaddition polymer of fullerene C₆₀ but also a cycloaddition polymer of a higher molecular weight fullerene such as fullerene C₇₀, and further given not only to fullerene dimers but also to an cycloaddition polymer having a relatively large degree of polymerization, such as trimers.

The hydrogen storage material of the present invention mainly contains a cycloaddition polymer having a hydrogen storage ability as described above. Such a polymer can be produced by an electrolytic polymerization process for fullerenes, which has been developed by the present inventors. The polymer can be also produced by a mechanical shaking process or an ultrasonic wave vibration process. The electrolytic polymerization process involves dissolving fullerene molecules as a raw material and a supporting electrolyte for accelerating electrolyzation in a nonaqueous solvent to prepare an electrolytic solution, and applying a DC potential between electrodes in the electrolytic solution, to obtain a fullerene polymer.

A carbonaceous material derivative obtained by introducing groups allowing hydrogen bonding with protons to carbon atoms constituting a carbonaceous material mainly containing carbon is also suitable as a carbonaceous material for hydrogen storage.

According to the present invention, there is provided a method of producing a carbonaceous material for hydrogen storage, including the step of introducing groups allowing hydrogen bonding with protons to carbon atoms of a raw carbon material composed of a carbonaceous material mainly by baking the raw carbon material in a gas atmosphere containing the groups allowing hydrogen bonding with protons, or treating the raw carbon material in a liquid containing the groups allowing hydrogen bonding with protons.

Of the carbon raw material for the above carbonaceous material for hydrogen storage, fullerene molecules, carbon nanotubes, and carbon clusters having partial structures of fullerene molecules (sometimes called fullerene soot) can be practically produced by the arc discharge process using carbon based electrodes.

As a result of studies of the present inventors, it has been found that a derivative obtained by introducing substitutional groups allowing hydrogen bonding with protons to carbon atoms constituting a carbon raw material exhibits a desirable hydrogen storage ability at a temperature near room temperature, and releases the already stored hydrogen at a temperature near room temperature.

The substitutional groups may be preferably oxygen atoms, fluorine atoms, nitrogen atoms, sulfur atoms, or chlorine atoms, or groups containing at least one of these atoms.

As a method for introducing such substitutional groups into carbon atoms of the carbonaceous material to obtain a derivative, a method for baking the raw carbon material in a gas atmosphere containing the groups allowing hydrogen bonding with protons, or a method for treating the raw carbon material in a liquid containing the groups allowing hydrogen bonding with protons is effective.

The carbonaceous material for hydrogen storage according to the present invention mainly contains one kind or more of derivatives produced as described above, which material can store and release hydrogen at a temperature near room temperature. Also, since the carbonaceous material for hydrogen storage mainly contains carbon, it is lightweight and thereby easy in handling and transportation. The carbonaceous material is also advantageous in that the production cost is low, and it use results in effectively no issues relating to resource limitations and environmental protection. Further, according to the present invention, since hydrogen is confined in the small volume voids of the carbonaceous material, unlike high-pressure hydrogen or liquefied hydrogen, the already stored hydrogen is not readily released at once, even if the system is opened. Accordingly, the carbonaceous material for hydrogen storage according to the present invention can be handled safely.

According to the present invention, there is provided a carbonaceous material for hydrogen storage, characterized in that the material includes a carbonaceous material composed of molecules having structural bending portions.

According to the present invention, there is also provided a method of producing a carbonaceous material for hydrogen storage, including the step of thermally decomposing a carbon-containing compound on a catalyst selected from a transition metal, an oxide thereof, and a carbide thereof, to produce a carbonaceous material on the surface of the catalyst.

The present inventors have studied for a long time to develop an ideal hydrogen storage material, and found that, by thermally decomposing a carbon-containing compound such as toluene or acetone on a catalyst such as a transition metal, a layer of graphite or the like is formed on the catalyst, and that the layer thus formed can exhibit a good or desirable hydrogen storage ability at room temperature and also release the already stored hydrogen at room temperature.

The reason why the above layer of graphite or the like exhibits the above unique effect, that is, the hydrogen storage ability, is not perfectly revealed, but it is suggested that at least the presence of a bending portion partially formed on the layer significantly promotes storage and release of hydrogen at room temperature.

To form a carbonaceous material layer such as the graphite, it is preferable to use a transition metal, an oxide thereof, or a carbide thereof as a catalyst, as will be described later, and then thermally decompose the carbon-containing compound.

The above unique effect of the present invention is not limited to the layer structure of graphite but may be common to other carbon materials having a bending structure similar to that of graphite, for example, carbon fibers.

According to the present invention, there is provided a carbonaceous material for hydrogen storage, characterized in that the material includes a carbonaceous material on which fine particles of a metal having a catalytic ability capable of separating a hydrogen molecule into hydrogen atoms or further separating hydrogen atoms into protons and electrons are supported.

According to the present invention, there is also provided a method of producing a carbonaceous material for hydrogen storage, including the step of contacting fine particles of a metal having a catalytic ability capable of separating a hydrogen molecule into hydrogen atoms or further separating hydrogen atoms into protons and electrons at least with the surface of a carbonaceous material, to support the catalytic metal on the surface of the carbonaceous material.

The above carbonaceous material for hydrogen storage uses a carbonaceous material mainly containing carbon as a base material, at least on the surface of which fine particles of a metal, for example, a platinum alloy, having a catalytic ability capable of separating a hydrogen molecule into hydrogen atoms or further separating hydrogen atoms into protons and electrons, are supported. With this configuration, the carbonaceous material for hydrogen storage can exhibit a good hydrogen ability at a temperature near room temperature and release the already stored hydrogen at a temperature near room temperature, and further, the carbonaceous material for hydrogen storage is less deteriorated even by repeating storage/release of hydrogen gas.

According to the carbonaceous material for hydrogen storage of the present invention, since hydrogen is confined in the carbonaceous material of a small-volume unlike high-pressure hydrogen or liquefied hydrogen, even if the system is opened, the already stored hydrogen is not released at once. Accordingly, the carbonaceous material for hydrogen storage according to the present invention can be safely handled and transported. Further, since the metal having the catalytic ability such as platinum is supported in the form of fine particles on the surface of the carbonaceous material, a minimal amount or content of the metal can be effectively utilized.

Since the carbonaceous material for hydrogen storage mainly contains carbon, it is lightweight and thereby easy in handling and transportation. The carbonaceous material is also advantageous in that the production cost is low, and there are effectively no resource limitations. Furthermore, as previously discussed, the carbonaceous material can be desirably utilized as an energy source material having effectively no adverse impacts on the environment.

The above-described carbonaceous materials for hydrogen storage can be applied to specific components of cells by making use of the unique features of the materials.

According to the present invention, there is provided a cell, in particular, an alkali battery or an air cell, that includes, for example, a negative electrode, a positive electrode, and an electrolyte interposed therebetween, wherein at least one of the negative electrode and the positive electrode includes the above-described carbonaceous material for hydrogen storage.

For an alkali battery using an alkali water solution such as potassium hydroxide water solution as an electrolyte, upon charging, protons migrate from a positive electrode to a negative electrode via the alkali water solution and stored in the negative electrode, and upon discharging, protons migrate from the negative electrode to the positive electrode via the alkali water solution.

For an air cell using, for example, a perfluorosulfonic acid based high polymer electrolyte film as an electrolyte, protons previously stored in a hydrogen electrode by charging or storage operation are supplied to an air electrode via the high polymer electrolyte film upon discharging.

Accordingly, each of the above cells can stably and desirably produce electric power, and maintain basic discharging characteristic as will be described later.

The carbonaceous material for hydrogen storage according to the present invention can be applied to a fuel cell. The fuel cell has a stacked structure including a negative electrode, a proton conductor, and a positive electrode, wherein a hydrogen storing portion including the carbonaceous material for hydrogen storage is assembled in the stacked structure. In the fuel cell, hydrogen is released from the hydrogen storing portion to the negative electrode, to produce protons by a catalytic action of the negative electrode, and the protons migrate to the positive electrode together with protons produced by the proton conductor, to react with oxygen, thereby generating electromotive force while producing water. Such a fuel cell is advantageous in efficiently supplying hydrogen and enhancing the conductivity of protons as compared with a fuel cell with no hydrogen storing portion.

In this way, according to the present invention, there can be provided a lightweight, inexpensive carbonaceous material for hydrogen storage, which is effectively capable of, safely storing and releasing hydrogen as a next generation clean energy source, and improving the transportation and handling performance thereof.

According to the present invention, there is provided a cell, in particular, an alkali battery or an air cell, including a negative electrode, a positive electrode, and an electrolyte interposed therebetween, wherein at least one of the negative electrode and the positive electrode includes a hydrogen storage material obtained by treating a material capable of storing hydrogen in a gas atmosphere containing hydrogen while applying a positive voltage, which is set relative to a specific reference potential, to the material.

For an alkali battery using an alkali water solution such as potassium hydroxide water solution as an electrolyte, upon charging, protons migrate from a positive electrode to a negative electrode via the alkali water solution and are stored in the negative electrode, and upon discharging, protons migrate from the negative electrode to the positive electrode via the alkali water solution. For an air cell using, for example, a perfluorosulfonic acid based high polymer electrolyte film as an electrolyte, protons previously stored in a hydrogen electrode by charging or storage operation are supplied to an air electrode via the high polymer electrolyte film upon discharging. Accordingly, each of the above cells can stably and desirably produce electric power.

According to the present invention, there is provided a fuel cell including a stack of a negative electrode, a proton conductor, and a positive electrode, and a hydrogen supply portion containing a hydrogen storage material for supplying hydrogen released from the hydrogen storage material to the negative electrode, wherein the hydrogen supply portion includes a voltage applying mechanism capable of applying a positive voltage, which is set relative to a specific reference potential, to the hydrogen storage material.

With this configuration, hydrogen released from the hydrogen supply portion produces protons by a catalytic action of the negative electrode, and the protons migrate to the positive electrode together with protons produced by the proton conductor, to react with oxygen, thereby generating electromotive force while producing water. Such a fuel cell is advantageous in efficiently supplying hydrogen and enhancing the conductivity of protons as compared with a fuel cell with no hydrogen supply portion.

Further, according to the present invention, since the hydrogen supply portion of the fuel cell includes the voltage applying mechanism capable of applying a positive voltage, which is set relative to a specific reference potential, to the hydrogen supply material, the amount of hydrogen released from the hydrogen supply portion can be desirably adjusted by controlling the positive voltage applied to the hydrogen storage material by the voltage applying mechanism, to thereby desirably control an electromotive force generated from the fuel cell.

According to the present invention, there is provided a method of controlling the release of hydrogen from a fuel cell including a stack of a negative electrode, a proton conductor, and a positive electrode; and a hydrogen supply portion containing a hydrogen storage material for supplying hydrogen released from the hydrogen storage material to the negative electrode, the method including the step of controlling a positive voltage, which is set relative to a specific reference potential, applied to the hydrogen storage material.

According to the present invention, it is possible to adjust the amount of hydrogen released from the hydrogen storage material by controlling a positive voltage applied to the hydrogen storage material, and hence to desirably adjust the amount of hydrogen to be supplied from the hydrogen supply portion to the negative electrode.

### Brief Description of the Drawings

Fig. 1 is a schematic view showing a configuration of an arc discharge apparatus using carbon based electrodes;
Figs. 2A to 2C are schematic diagrams showing structures of carbonaceous materials produced by the arc discharge apparatus, wherein Fig. 2A shows a carbon nanotube, Fig. 2B shows a fullerene molecule C₆₀; and Fig. 2C shows an example of a molecular structure of carbon soot having a structure curvature;
Fig. 3 is a graph showing results of measuring complex impedances of C₆₀, on which platinum is supported, before and after hydrogen storage;
Fig. 4 is a graph showing a result of measuring a direct current resistance of single-wall carbon nanotubes before hydrogen storage by a PEE (Photo Electron Emission) method;
Fig. 5 is a graph showing a result of measuring a direct current resistance of the single-wall carbon nanotubes after hydrogen storage by the PEE method;
Fig. 6 is a graph showing a result of measuring a direct current resistance of multi-wall carbon nanotubes before hydrogen storage by the PEE method;
Fig. 7 is a schematic sectional view of a hydrogen storing/releasing system;
Fig. 8 is a diagram showing a structure of a fullerene molecule C₆₀;
Fig. 9 is a diagram showing a structure of a fullerene molecule C₇₀;
Figs. 10A and 10B are schematic diagrams each showing a structure of a polymer (polymerization degree: 2) of fullerene molecules C₆₀, wherein Fig. 10A shows a structure of 1,2-(C₆₀)₂ polymerized by [2 + 2] type cycloaddition reaction; and Fig. 10B shows a structure of D2h-symmetric C₁₁₆ polymerized by [2 + 2] cycloaddition reaction;
Fig.11 is a schematic diagram showing a structure of a polymer (polymerization degree: 2) of fullerene molecules C₇₀;
Fig. 12 is a schematic diagram showing a crystal state of fullerene molecules C₆₀;
Fig. 13 is a schematic diagram showing a polymerization state (polymerization degree: 3) of fullerene molecules C₆₀;
Fig. 14 is a schematic diagram showing a polymerization state of the fullerene molecules C₆₀ shown in Fig. 13 after treatment at a high temperature;
Fig. 15 is a schematic diagram showing a molecular structure of C₁₂₀ (b) estimated to be produced in the process of the structure relief of 1,2-(C₆₀)₂;
Fig. 16 is a schematic diagram showing a molecular structure of C₁₂₀ (c) estimated to be produced by the process of structure relief;
Fig. 17 is a schematic diagram showing a molecular structure of C₁₂₀ (d) estimated to be produced by the process of structure relief;
Fig. 18 is a schematic diagram showing a structure of molecules C₁₁₈ estimated to be produced by the process of a fullerene polymer;
Fig. 19 is a schematic diagram showing a structure of molecules C₁₁₆ estimated to be produced by the process of a fullerene polymer;
Fig. 20 is a schematic diagram showing a structure of a polymer [1,2-(C₆₀)₂, polymerization degree: 2] of fullerene molecules C₆₀ polymerized by [2 + 2] type cycloaddition reaction;
Fig. 21 is a schematic diagram showing one example of an apparatus for polymerizing fullerene molecules by electrolytic polymerization;
Fig. 22 is a schematic diagram showing a structure of a polymer (tetramer) of fullerene molecules C₆₀;
Fig. 23 is a diagram showing a dimer structure [C₁₄₀ (a)] of molecules C₇₀ illustrative of the dimer structure produced in the process of producing a fullerene polymer;
Fig. 24 is a diagram showing another dimer structure [C₁₄₀ (b)] of molecules C₇₀ illustrative of the dimer structure produced in the process of producing a fullerene polymer;
Fig. 25 is a diagram showing a further dimer structure [C₁₄₀ (c)] of molecules C₇₀ illustrative of the dimer structure produced in the process of producing a fullerene polymer;
Fig. 26 is a diagram showing a further dimer structure [C₁₄₀ (d)] of molecules C₇₀ illustrative of the dimer structure produced in the process of producing a fullerene polymer;
Fig. 27 is a diagram showing a further dimer structure [C₁₄₀ (e)] of molecules C₇₀ illustrative of the dimer structure produced in the process of producing a fullerene polymer;
Fig. 28 is a diagram showing a further dimer structure [C₁₄₀ (f)] of molecules C₇₀ illustrative of the dimer structure produced in the process of producing a fullerene polymer;
Fig. 29 is a diagram showing a further dimer structure [C₁₄₀ (g)] of molecules C₇₀ illustrative of the dimer structure produced in the process of producing a fullerene polymer;
Fig. 30 is a diagram showing a further dimer structure [C₁₄₀ (h)] of molecules C₇₀ illustrative of the dimer structure produced in the process of producing a fullerene polymer;
Fig. 31 is a diagram showing a further dimer structure [C₁₄₀ (i): D2h-symmetric] of molecules C₇₀ illustrative of the dimer structure produced in the process of producing a fullerene polymer;
Fig. 32 is a diagram showing a numbering system of a fullerene molecule C₇₀;
Fig. 33 is a schematic diagram showing various examples of carbon clusters used as a base material of a carbonaceous material;
Fig. 34 is a schematic diagram showing further examples (partial fullerene structures) of carbon clusters;
Fig. 35 is a schematic diagram showing further examples (diamond structures) of carbon clusters;
Fig. 36 is a schematic diagram showing further examples (bonded structures) of carbon clusters;
Fig. 37 is a sectional view of a fuel cell using a carbonaceous material for hydrogen storage;
Fig. 38 is a schematic view of an alkali battery;
Fig. 39 is a graph showing one example of a charging/discharging cycle characteristic of the alkali battery;
Fig. 40 is a schematic view of an air cell;
Fig. 41 is a graph showing one example of a discharging characteristic of the air cell;
Fig. 42 is a graph showing another example of the discharging characteristic of the air cell;
Fig. 43 is a schematic diagram showing a complex impedance measuring device;
Figs. 44A and 44B are diagrams showing electric equivalent circuits of a pellet of a carbonaceous material for hydrogen storage in the hydrogen storage state and the hydrogen non-storage state, respectively;
Fig. 45 is a graph showing a result of measuring a complex impedance of C₆₀ on which platinum is supported;
Fig. 46 is a characteristic diagram showing a reduction in resistance component of multi-wall carbon nanotubes ("MWCNTs") when hydrogen is stored in the MWCNTs;
Fig. 47 is a schematic view of a system used for a CVD ("Chemical Vapor Deposition") process;
Fig. 48 is a schematic view of a system used for a laser abrasion process;
Fig. 49 is a graph showing one example of a charging/discharging cycle characteristic of an alkali battery;
Fig. 50 is a graph showing one example of the discharging characteristic of an air cell;
Fig. 51 is a graph showing another example of the discharging characteristic of the air cell;
Fig. 52 is a graph showing a change in hydrogen gas pressure when a voltage is applied to a sample;
Fig. 53 is a graph showing one example of a charging/discharging cycle characteristic of an alkali battery;
Fig. 54 is a graph showing one example of the discharging characteristic of an air cell;
Fig. 55 is a graph showing another example of the discharging characteristic of the air cell;
Fig. 56 is a schematic diagram showing a configuration of one example of a baking system usable for production of a carbonaceous material for hydrogen storage according to the present invention;
Fig. 57 is a diagram showing a microscopic structure of a carbonaceous material for hydrogen storage;
Fig. 58 is a graph showing a relationship between a baking temperature and a storage amount of hydrogen;
Fig. 59 is a graph showing one example of a charging/discharging cycle characteristic of an alkali battery;
Fig. 60 is a graph showing one example of the discharging characteristic of an air cell;
Fig. 61 is a graph showing another example of the discharging characteristic of the air cell;
Fig. 62 is a diagram showing a microscopic structure of another carbonaceous material for hydrogen storage;
Fig. 63 is a graph showing a redox potential curve upon electrolysis;
Fig. 64 is a characteristic diagram showing a hydrogen gas release temperature characteristic of a hydrogen storage material;
Fig. 65 is a characteristic diagram showing another hydrogen gas release temperature characteristic of the hydrogen storage material;
Fig. 66 is a spectrum of TOF-MS of fullerene fluoride;
Fig. 67 is a graph showing one example of a charging/discharging cycle characteristic of an alkali battery;
Fig. 68 is a graph showing one example of the discharging characteristic of an air cell;
Fig. 69 is a graph showing another example of the discharging characteristic of the air cell;
Fig. 70 is a graph showing one example of a charging/discharging cycle characteristic of an alkali battery;
Fig. 71 is a graph showing one example of the discharging characteristic of an air cell;
Fig. 72 is a graph showing another example of the discharging characteristic of the air cell;
Fig. 73 is a diagram showing a microscopic structure of another carbonaceous material for hydrogen storage;
Fig. 74 is a graph showing one example of a charging/discharging cycle characteristic of an alkali battery;
Fig. 75 is a graph showing one example of the discharging characteristic of an air cell;
Fig. 76 is a graph showing another example of the discharging characteristic of the air cell; and
Fig. 77 is characteristic diagram showing a result of power generation test of a fuel cell.

### Best Mode for Carrying Out the Invention

Hereinafter, a carbonaceous material for hydrogen storage to which the present invention is applied, a production method thereof, and cells (including a fuel cell) using the same will be described with reference to the accompanying drawings.

A first embodiment of the present invention is to provide a carbonaceous material for storing hydrogen in the form of protons.

A carbonaceous material for storing hydrogen in the form of protons will be described below.

Such a carbonaceous material for hydrogen storage can be produced, for example, by an arc discharge process using carbon electrodes.

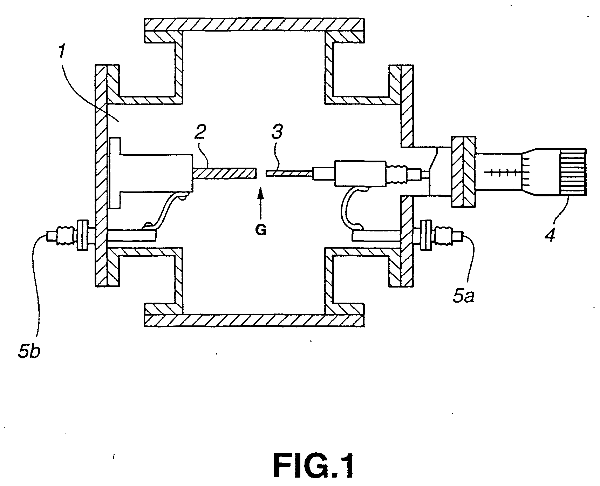

Fig. 1 shows one example of an arc discharge system for producing a carbonaceous material. Referring to Fig. 1, a cathode 2 and an anode 3, each of which is formed by a carbon rod, typically, a graphite rod, are disposed in a reaction chamber 1 called a vacuum chamber in such a manner as to be opposed to each other with a gap G put therebetween. The rear end of the anode 3 is connected to a linear movement mechanism 4, and the cathode 2 and anode 3 are connected to current input terminals 5b and 5a respectively.

The operation of the arc discharge system having the above configuration will be described below. The inside of the reaction chamber 1 is degassed and filled with a rare gas such as helium gas, and a voltage is applied between the cathode 2 and anode 3 to generate arc discharge therebetween, whereby a soot-like carbonaceous material for hydrogen storage is deposited on the cathode 2 and on the inner surface of the reaction chamber 1, that is, on the side wall surface, ceiling surface, and bottom surface of the reaction chamber 1. If a small-sized vessel has been previously mounted on the side wall or the like, the carbonaceous material for hydrogen storage is deposited in the vessel.

Even in the case of adopting an alternating current carrying mode in place of the above-described direct current carrying mode, a carbonaceous material for hydrogen storage can be produced in the reaction chamber 1, although the deposited amount of the carbonaceous material becomes smaller than that obtained by adopting the direct current carrying mode.

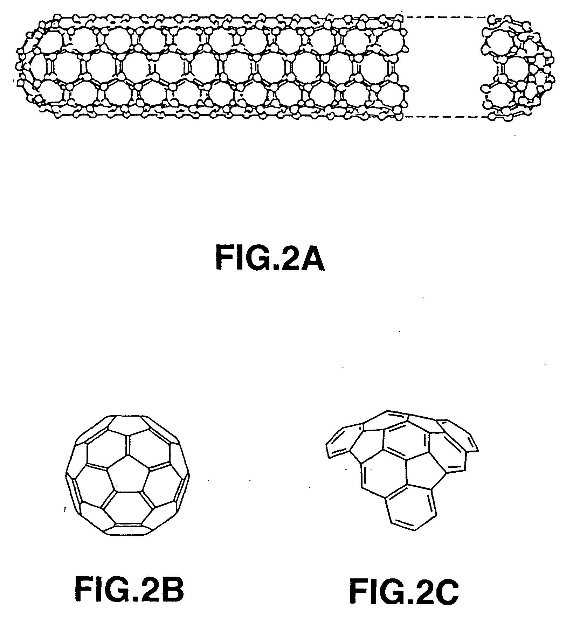

The soot-like carbonaceous material for hydrogen storage, collected from the reaction chamber 1, contains carbon nanotubes shown in Fig. 2A, fullerene C₆₀ shown in Fig. 2B, fullerene C₇₀ (not shown), carbon soot shown in Fig. 2C, and the like. The carbon soot is defined as carbon molecules, which have been not grown to fullerene molecules or carbon nanotubes, but which have structural curvatures. The soot-like carbonaceous material for hydrogen storage typically contains 10 to 20 wt% of fullerenes C₆₀ and C₇₀, several wt% of carbon nanotubes, a large amount of carbon soot, and the like. The wt% (weight percent) is based on the weight of the carbonaceous material.

The carbonaceous material produced by the arc discharge process as described above can exhibit a high hydrogen storage ability mainly due to the presence of carbon nanotubes.

The carbonaceous material whose molecules have structural curvatures, typically, carbon nanotubes have a unique property that the orthogonality between the pi electron orbital and sigma electron orbital disappears, and thereby the level of LUMO (Lowest Unoccupied Molecular Orbital) becomes lower than that of a material having the sigma-pi orthogonality. This means that the carbonaceous material acts as a strong electron acceptor.

When protons derived from hydrogen by charge separation come in contact with the above-described carbonaceous material for hydrogen storage, they can be kept in the carbonaceous material acting as the strong electron acceptor. As a result, a large amount of hydrogen can be densely stored in the state of protons in the carbonaceous material.

A carbonaceous material for hydrogen storage according to the present invention, preferably, contains carbon nanotubes, and one or more kinds of fullerenes expressed by a general chemical formula Cn (n is an even number allowing a fullerene to be of a spherical structure, specifically, 20 or more). The examples of fullerenes Cn may include the above-described fullerenes C₆₀ and C₇₀, and higher-order fullerenes Cn (n: more than 70).

The above-described carbonaceous material for hydrogen storage may contain a transition metal, preferably, iron, nickel, cobalt, palladium, rhodium, platinum, a rare earth element, and an alloy thereof.

The carbonaceous material containing a transition metal can be produced by an arc discharge process using carbon electrodes, at least one of which contains the transition metal.

The production of the carbonaceous material by the arc discharge process using a carbon electrode containing a transition metal can enhance the yield of a carbonaceous component whose molecules have structural curvatures, typically, carbon nanotubes due to the catalytic action of the transition metal. It is known that a transition metal is used as a catalyst in production of carbon nanotubes by a laser abrasion process. Carbon nanotubes produced by the laser abrasion process may be added to the carbonaceous material produced by the arc discharge process.

A metal having a catalytic ability to separate a hydrogen molecule into hydrogen atoms and further separate hydrogen atoms into protons and electrons may be supported at least on the surface of a carbonaceous material containing or not containing a transition metal. The catalyst metal in an amount of 10 wt% by weight of the carbonaceous material or less may be preferably supported on the carbonaceous material by a known process.

Examples of the catalytic metals may include platinum and a platinum alloy.

The support of the catalyst metal on a carbonaceous material makes the hydrogen storage ability of the carbonaceous material higher than that of a carbonaceous material on which no catalyst metal is supported.

A material acting as an electron doner, for example, fluorine, or amine based molecules, such as ammonia, may be added or bonded to the carbonaceous material for hydrogen storage. The addition of the electron doner effectively results in more efficient separation of hydrogen.

The carbonaceous material for hydrogen storage may be configured such that it can store hydrogen in a temperature range of room temperature or more.

According to the above-described carbonaceous material for hydrogen storage, as described above, since the carbonaceous material acts as a strong electron acceptor, hydrogen from which electric charges are separated is kept in the form of protons in the carbonaceous material, so that the occupied volume of hydrogen in the carbonaceous material becomes significantly small. Consequently, according to the present invention, a large amount of hydrogen can be stored in the carbonaceous material as compared with the conventional hydrogen storage mechanism due to chemical absorption of hydrogen atoms. That is to say, the present invention is characterized in that the carbonaceous material for hydrogen storage can densely store a large amount of hydrogen, from which electric charges are separated, in the form of protons.

Next, a work function (unit: eV) of a carbonaceous material, which is concerned with the hydrogen storage ability of the material, will be described.

As a result of measurement by a PEE (Photo Electron Emission) method, it has been known that a work function of graphite having no hydrogen storage ability is about 4,85 eV, and that a work function of amorphous carbon having no hydrogen storage ability is about 4.8 eV. From these data, it has been regarded that a material having a work function of 4.85 eV or less has no hydrogen storage ability.

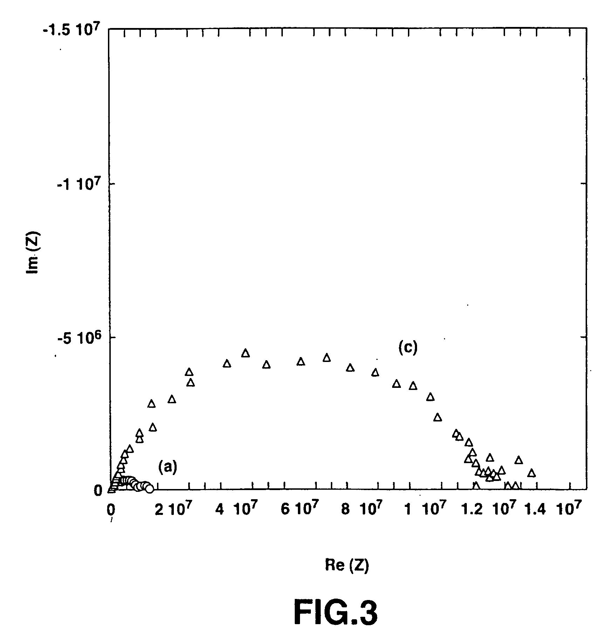

Carbon soot composed of molecules each having structural curvature has a work function of 4.9 eV, and was found to have a hydrogen storage ability on the basis of a mechanism obtained from a measurement result shown in Fig. 3.

The measurement of a complex impedance or a direct current resistance of a carbonaceous material, which is useful as a parameter indicating the hydrogen storage ability of the carbonaceous material will be described with reference to Fig. 3.

The measurement of a complex impedance of a sample composed of a platinum-supported fullerene C₆₀ material was performed in the same manner as that in Example 4 (which will be described later).

Fig. 3 shows results of measuring resistances of the sample before and after hydrogen storage. In this figure, the data (a) shows the resistance of the sample before hydrogen storage, and the data (c) shows the resistance of the sample after hydrogen storage. It should be noted that since the fullerene C₆₀ is a semiconductor material, the resistance thereof is equivalent to a direct current resistance component (indicated by the diameter of a circular-arc on the horizontal axis of Fig. 3) of a complex impedance as further explained in Example 4.

As shown in Fig. 3, the direct current resistance component of the fullerene C₆₀ before hydrogen storage is 1e⁷ and the direct current resistance component of the fullerene C₆₀ after hydrogen storage is 8e⁵. The hydrogen storage ability of this carbonaceous material is about 2wt%. However, the change in direct current resistance component of the fullerene C₆₀ is roughly estimated to be proportional to the inverse of a change in the number of charged particles along with migration of electric charges or generation of charged particles by hydrogen storage, and consequently, the reduction in resistance is equivalent to the increase in the stored amount of hydrogen. As a result, a direct current resistance component of the fullerene C₆₀ after hydrogen storage that is about 50% less than (i.e., about one-half) the direct current resistance component of the fullerene C₆₀ before hydrogen storage means that about 1 wt% of hydrogen has been stored in the fullerene C₆₀.

For the fullerene C₆₀ acting as a semiconductor, the complex impedance thereof must be measured to obtain the direct current resistance component; however, for a general carbon material acting as a conductor, the direct current resistance thereof may be directly measured as shown in Fig. 3. Fig. 3 shows a reduction in resistance due to hydrogen storage.

Not only for a carbon material but also for a material allowing migration of electric charges from or to hydrogen atoms, the above-described measurement method is useful to determine the hydrogen storage ability thereof.

The above-described measurement method is particularly effective to determine the hydrogen storage ability of a carbon material which includes molecules having structural curvatures and which is capable of storing hydrogen in the form of protons.

Examples of preferable carbon materials including molecules having structural curvatures may include fullerenes Cn (n = 36, 60, 70, 72, 74 ...), carbon nanofibers, carbon nanotubes, carbon soot, nanocapsules, and Bucky-onions.

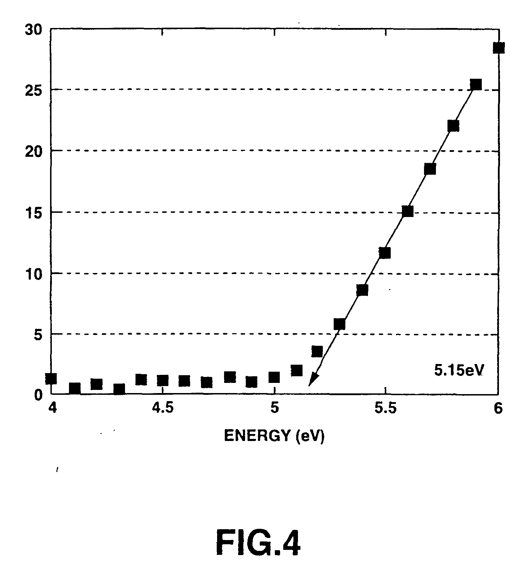

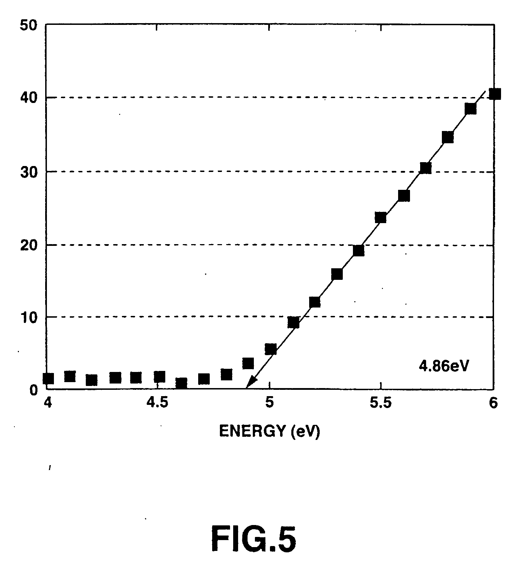

On the other hand, as shown in Fig. 4, a work function of single wall carbon nanotubes is 5.15 eV, and it has been experimentally proved that the single wall carbon nanotubes also have a hydrogen storage ability due to the above-described mechanism. As shown in Fig. 5, the work function of the single wall carbon nanotubes is reduced to 4.86 eV after hydrogen storage.

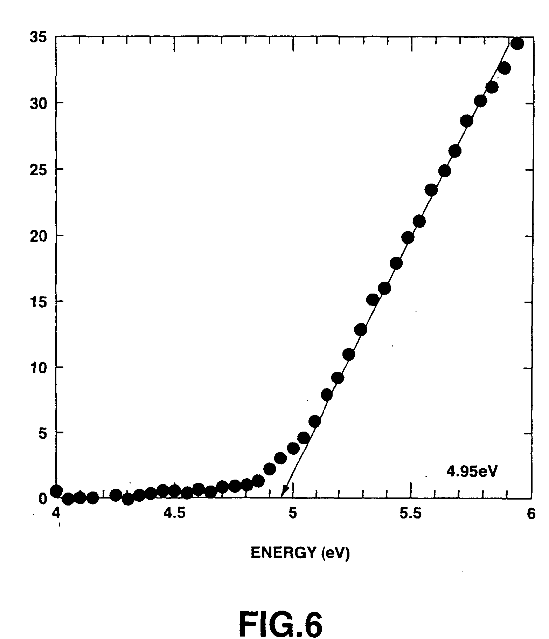

As shown in Fig. 6, a work function of multi-wall carbon nanotubes is 4.95 eV, and it has been experimentally proved that the multi-wall carbon nanotubes have a hydrogen storage ability.

A work function of a fullerene such as C₆₀ is about 6.8 eV, and it has been proved that this carbonaceous material also has a hydrogen storage ability due to the above-described mechanism.

From the above experimental results, it becomes apparent that the hydrogen storage ability of a carbonaceous material is not due to a special structure thereof but due to a value of work function thereof, that is, a site of a valence edge. To be more specific, a carbonaceous material for hydrogen storage, which has a work function more than 4.9 eV, can efficiently store hydrogen from which electric charges are separated, that is, store hydrogen in the state of protons. Accordingly, the carbonaceous material for hydrogen storage can densely store a large amount of hydrogen in the state of protons.

The carbonaceous material for hydrogen storage can be produced not only by an arc discharge process using carbon based electrodes, but also a CVD (Chemical Vapor Deposition) process, a laser abrasion process, or an SiC (Silicon Carbide) high temperature treatment process. The carbonaceous material for hydrogen storage shown in Fig. 2 mainly contains fullerenes, carbon nanotubes, carbon soot, and the like. These components are each composed of molecules having structural curvatures.

As described above, the carbonaceous material for hydrogen storage according to the present invention can store hydrogen in the state of protons.

A second embodiment of the present invention is to provide a method of storing hydrogen in the state of protons in a material for hydrogen storage.

To store hydrogen in the state of protons in a material for hydrogen storage, the material may be treated in a gas atmosphere containing hydrogen while a positive voltage with reference to a specific reference potential is applied to the material.

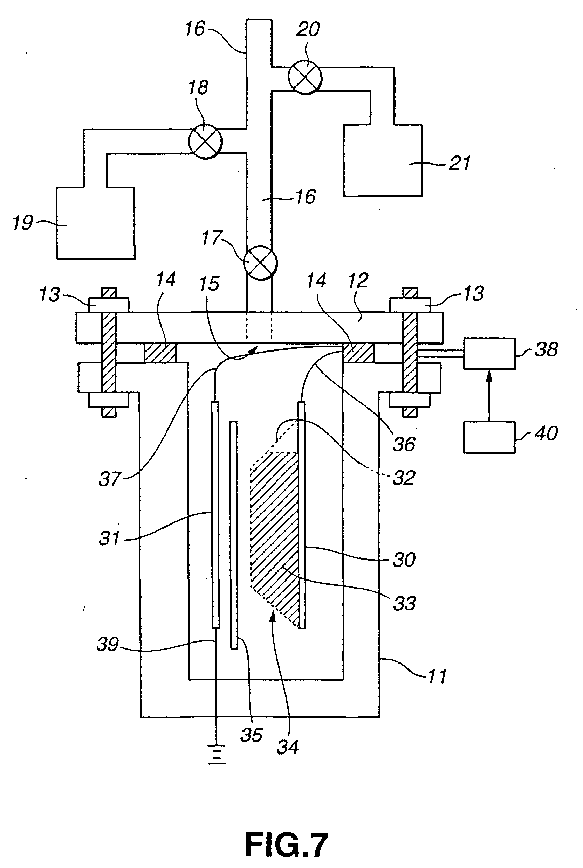

Fig. 7 is a schematic sectional view showing a hydrogen storing/releasing system for realizing the above-described treatment.

As shown in Fig. 7, the hydrogen storing/releasing system includes a pressure vessel 11 made from a stainless steel, and a lid member 12. The lid member 12 is airtightly connected to the pressure vessel 11 by means of screws 13 and metal seals 14. The lid member 12 has an opening 15 connected to a gas passage 16.

A valve 17 is provided in the gas passage 16. A hydrogen gas supply source 19 is connected to the gas passage 16 via a switching valve 18, and a nitrogen gas supply source 21 is connected to the gas passage 16 via a switching valve 20.

A pair of stainless plates 30 and 31 are oppositely provided in the pressure vessel 11. A stainless mesh portion 32 is formed on a peripheral wall of the stainless plate 30, and a hydrogen storage material holder 34 for containing a hydrogen storage material 33 is provided in the stainless mesh portion 32. An insulating plastic mesh plate 35 is disposed between the stainless plates 30 and 31 in such a manner as to be close to the stainless plate 31. In this embodiment, carbon nanotubes as the hydrogen storage material 33 are contained in the hydrogen storage material holder 34.

Lead wires 36 and 37, which are connected to the stainless plates 30 and 31 respectively, are connected to a power source 38 via the metal seals 14. The stainless plate 31 is connected to the pressure vessel 11 kept at a ground potential via a lead wire 39.

The power source 38 is controlled by a controller 40 to apply a specific voltage between the stainless plates 30 and 31.

The hydrogen storing/releasing system configured as described above in this embodiment stores hydrogen in the hydrogen storage material 33 as follows:

The switching valve 20 as well as the valve 17 are opened, to introduce nitrogen gas from the nitrogen gas supply source 21 into the pressure vessel 11 via the gas passage 16, thereby substituting the atmosphere in the pressure vessel 11 with the nitrogen gas.

After the inside of the pressure vessel 11 is fully substituted with the nitrogen gas, the switching valve 20 is closed and the switching valve 18 is opened, to introduce hydrogen gas from the hydrogen gas supply source 19 into the pressure vessel 11 via the gas passage 16.

After the switching valve 18 and the valve 20 are closed, the controller 40 is operated to apply a positive voltage V1, which is set relative to the ground potential of the stainless plate 31 electrically connected to the pressure vessel 11, from the power source 38 to the stainless plate 30.

Since the peripheral wall of the hydrogen storage material holder 34 for containing the hydrogen storage material 33 is formed by the stainless mesh 32, hydrogen gas comes into contact with the carbon nanotubes as the hydrogen storage material 33 contained in the hydrogen storage material holder 34 and is stored in the carbon nanotubes 33.

In this embodiment, since the positive voltage V1 relative to the ground potential of the stainless plate 31 is applied to the stainless plate 30, the electron level of the carbon nanotubes 33 is shifted to decrease both the HOMO level and LUMO level, whereby a larger amount of hydrogen is stored in the carbon nanotubes 33.

The hydrogen stored in the carbon nanotubes 33 as described above is released from the carbon nanotubes 33 as follows:

After the valve 17 is opened, the controller 40 is operated to apply a positive voltage V2 lower than the voltage V1, which is set relative to the ground potential of the stainless plate 31, from the power source 38 to the stainless plate 30.

The electron level of the carbon nanotubes 33 is thus shifted to increase both the HOMO level and the LUMO level, thereby reducing the hydrogen storage ability of the carbon nanotubes 33. As a result, the hydrogen stored in the carbon nanotubes 33 is released as hydrogen gas which is then taken out via the gas passage 16.

The released amount of hydrogen is freely adjusted by controlling a voltage, which is set relative to the ground potential of the stainless plate 31, applied to the stainless plate 30 by the operation of the controller 40. The release of hydrogen can be stopped by applying the positive voltage V1 higher than the positive voltage V2, which is set relative to the ground potential of the stainless plate 31, to the stainless plate 30.

According to this system, a larger amount of hydrogen can be stored in the carbon nanotubes 33 only by applying the positive voltage V1, which is set relative to the ground potential of the stainless plate 31, to the stainless plate 30. In this way, according to this embodiment, the hydrogen storage ability of the carbon nanotubes 33 can be increased and a larger amount of hydrogen can be stored in the carbon nanotubes 33 by a significantly simple method.

According to this system, the hydrogen stored in the carbon nanotubes 33 can be released only by applying the positive voltage V2 lower than the positive voltage V1 having been applied for storing the hydrogen, which is set relative to the ground potential of the stainless plate 31, to the stainless plate 30. The released amount of hydrogen can be adjusted by controlling a voltage applied between the stainless plates 30 and 31 by operation of the controller 40 wherein the release of hydrogen can be stopped by applying a voltage higher than the voltage V2 (which is set relative to the ground potential of the stainless plate 31) to the stainless plate 30. In this way, according to this embodiment, the released amount of hydrogen as well as the release of hydrogen and the stoppage of release of hydrogen can be significantly and simply adjusted and controlled.

A third embodiment of the present invention is to provide various kinds of carbonaceous materials capable of storing hydrogen.

Hereinafter, the carbonaceous materials will be described below:

In an embodiment, the carbonaceous materials for hydrogen storage according to the present invention is a polymer produced by baking one kind or a mixture of fullerene molecules in a non-oxidizing gas.

The history of development of fullerene will be briefly described hereinafter.

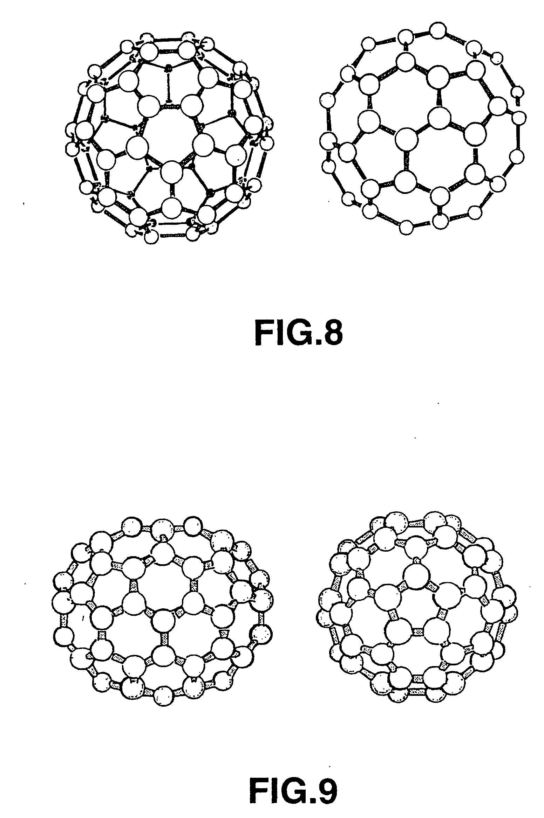

A fullerene is a generic name of spherical carbon molecules, for example, C₆₀ shown in Fig. 8 or C₇₀ shown in Fig. 9. Fullerene molecules were found in a mass spectrum of a cluster beam by laser abrasion of carbon in 1985 (H. W. Kroto, J. R. Heath, S. C. O'Brien, R. F. Curl, and R. E. Smalley, Nature 1985, 318, 162).

A method of producing fullerene C₆₀ by an arc discharge process using carbon electrodes was established after five years, that is, in 1990 and since then, attention has been given to fullerene molecules as a carbon-based semiconductor material or the like [(a) W. Kratschmer, K. Fostiropoulos, D. R. Huffman; Chem. Phys. Lett. 1990, 170, 167; (b) W. Kratschmer, L. D. Lamb, K. Fostiropoulos, and D. R. Huffman, Nature 1990, 347, 354].

Fullerene molecules, which can be easily evaporated under a vacuum or a reduced pressure, can be easily formed into a vapor-deposition film.

In the case of fullerene molecules most suitable for mass-production, for example, C₆₀ or C₇₀, since the dipole moment is zero, only a van der Waals' forces act between molecules. Accordingly, a vapor-deposition film of the fullerene molecules is very brittle. Further, oxygen molecules can be easily and readily diffused between fullerene molecules of the vapor-deposition film, and the oxygen molecules thus diffused cause a paramagnetism center, with a result that the film characteristics of the fullerene molecules cannot be kept constant for a long period of time.

To solve the above-described problems of fullerene molecules, there have been developed methods of producing a so-called fullerene polymer (in the form of a thin film) by polymerizing fullerene molecules, for example, through optical induction [(a) A. M. Rao, P. Zhou, K. A. Wang, G. T. Hager, J. M. Holden, Y. Wang, W. T. Lee, X. X. Bi, P. C. Eklund, D. S. Cornett, M. A. Duncan, and I. J. Amster, Science 1993, 256, 955; (b) D. C. Cornett, I. J. Amster, M. A. Duncan, A. M. Rao, and P. C. Eklund, J. Phys. Chem. 1993,97,5036; (c) J. Li, M. Ozawa, N. Kino. T. Yoshizawa, T. Mitsuki, H. Horiuchi, O. Tachikawa, K. Kishio, and K. Kitazawa, Chem. Phys. Lett. 1994,227, 572].

A fullerene polymer can be produced by pressurizing or heating fullerene molecules, or by making use of molecular collision [Molecular Collision Method (a) C. Yeretzian, K. Hansen, F. Diederich, and R. L. Whetten, Nature 1992, 357, 44; (b) R. L. Whetten, and C. Yeretzian, Int. J. Mod. Phys. 1992, B6, 3801; (c) K. Hansen, C. Yeretzian, and R. L. Whetten, Chem. Phys. Lett. 1994, 218, 462; (d) G. Seifert, and R. Schmidt, Int. J. Mod. Phys. 1992, B6, 3845, Ion Beam Method (a) S. Seraphin, D. Zhou, and J. Jiao, J. Mater. Res 1993, 8, 1895; (b) H. Gaber, H. G. Busmann, R. Hiss, I. V. Hertel, H. Romberg, J. Fink, F. Bruder, and R. Brenn, J. Phys. Chem, 1993, 97, 8244, Pressure Method (a) S. J. Duclos, K. Brister, R. C. Haddon, A. R. Kortan, and F. A. Thiel, Nature 1991, 351, 380; (b) D. W. Snoke, Y. S. Raptis, and K. I. Syassen, Phys. Rev. 1992, B45, 14419; (c) H. Yamakawa, M. Yoshida, Y. Kakudate, S. Usuda, H. Yokoi, S. Fujiwara, K. Aoki, R. Ruoff, R. Malhotra, and D. J. Lorents, J. Phys. Chem. 1993, 97, 11161; (d) C. N. R. Rao, A. GovLndaraj, H. N. Alyer, and R. Seshadri, J. Phys. Chem. 1995, 99, 16814].

On the other hand, the present inventors have developed industrial fullerene polymerization methods in place of the above-described polymerization methods. In an embodiment a plasma polymerization method can be utilized. According to this polymerization method, fullerene molecules are polymerized by way of an electron excitation state and an ionization state into a thin film as discussed in detail below (for example, N. Takahashi, H. Dock, N. Matsuzawa, and M. Ata, J. Appl. Phys. 1993, 74, 5790).

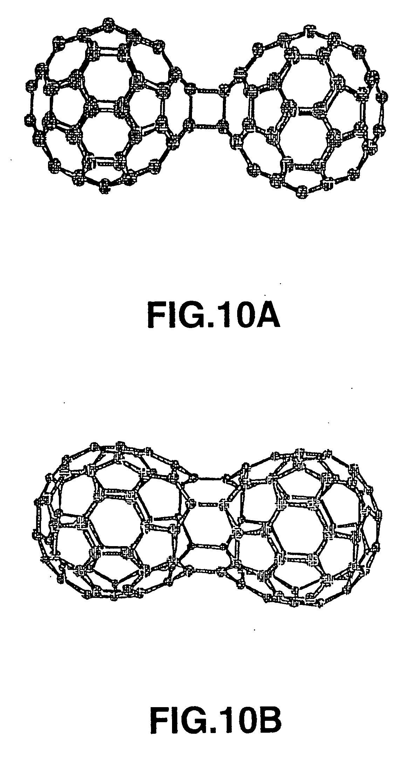

The polymerization degree of a fullerene polymer produced by the plasma polymerization method is generally small. Concretely, the polymer mainly contains dimers of fullerene molecules. For a dimer of C₆₀, a structure 1,2-(C₆₀)₂ shown in Fig. 10A is produced by [2 + 2] type cycloaddition reaction of C₆₀, which is then shifted into a stable structure D2h-symmetric C₁₁₆ shown in Fig. 10B. As a result, the production yield of stable D2h-symmetric C₁₁₆ is higher than that of 1,2-(C₆₀)₂.

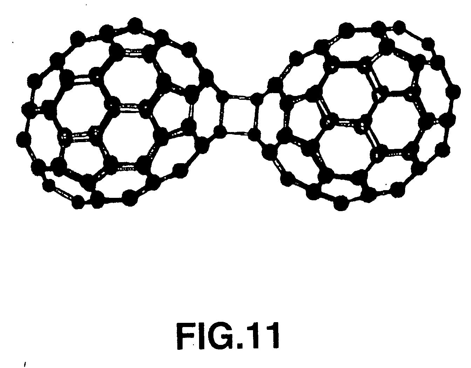

For a dimer of C₇₀, a cycloaddition structure shown in Fig. 11 is first produced by cycloaddition reaction of C₇₀, which is then shifted into a dimer having a stable structure (not shown), like the structure shown in Fig. 10B.

The present inventors have examined a fullerene polymer, and found that a polymer containing at least the above-described stable dimers can be obtained by baking one kind or a mixture of fullerenes in a non-oxidizing atmosphere at a suitable temperature, and that the baked body mainly containing the stable polymer can be used as a basic material for producing a carbonaceous material having a high hydrogen storage.

A metal or a compound thereof for promoting ordering (stabilization of the structure) of carbon upon baking may be preferably added to the fullerene molecules as a raw material and the mixture is baked. Further, preferably, a metal catalyst having a catalytic ability capable of separating a hydrogen molecule into hydrogen atoms and further separating hydrogen atoms into protons and electrons is supported (in the form of fine particles or a layer) on the surface of a baked body including or not including the above-described ordering metal or compound thereof. The baked body on which the metal catalyst is supported can exhibit a high hydrogen storage ability even at room temperature.

Fullerenes as a raw material are expressed by a general chemical formula Cn (n is an even number of 20 or more allowing a spherical structure, for example, 60, 70, 78, 80, 82, 84, ...). In particular, one kind or a mixture of fullerene C₆₀ and fullerene C₇₀, to which higher fullerenes Cn (n is more than 70) may be added, are preferably used as the raw material. These fullerenes can be easily and inexpensively produced by an arc discharge process using carbon electrodes.

One kind or a mixture of rare gases, nitrogen gas, and hydrogen gas may be used as the above-described non-oxidizing gas used for baking fullerene molecules. A partial pressure of hydrogen gas exerts a clear effect on etching of a deposited carbon material; however, according to the present invention, a partial pressure of hydrogen gas may be set in a range of 0% to 100%.

In general, a small amount of a gas of an organic compound such as toluene or acetone, may be added to the non-oxidizing gas. The addition of such a gas of an organic compound promotes coordination of carbon atoms in a baked body or supplements carbon atoms in the baked body, thereby stabilizing the polymer structure and carbonaceous film.

Upon baking of one kind or a mixture of fullerene molecules, as described above, a metal or a compound thereof for promoting ordering of carbon, for example, a metal oxide or a metal coordination compound may be previously added thereto. Thereby, tremendous and desirable ordering effect is obtained.

Examples of the ordering metals may include a transition metal such as iron, nickel or vanadium, and lanthanoid. In particular, a transition metal such as iron or nickel is effective for ordering of carbon in the case of baking fullerene molecules at a baking temperature of about 1000 °C.

The baking step can be carried out by using a known heating apparatus including a supply and discharge of a non-oxidizing gas, for example, an electric furnace or a radio-frequency furnace. In this case, the baking temperature may be set in a range of 600 °C to 2000 °C, preferably, 800 °C to 1300 °C.

When the baking temperature is very low, a single structure of each of fullerene molecules is kept or maintained (fullerene molecules are slightly evaporated even at standard pressure). When the baking temperature is raised to about 600°C, the skeleton of each molecule is changed to produce an unstable polymer structure and a dissociation equilibrium starts between the unstable polymer structure and single molecules. When the baking temperature is raised to more than 600°C, a polymer having a stable structure is produced.

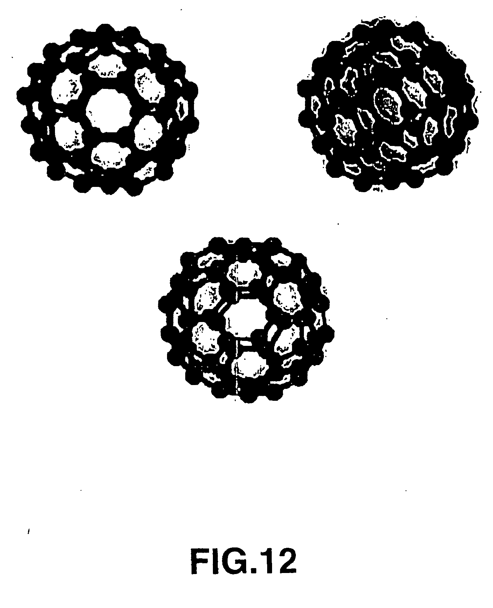

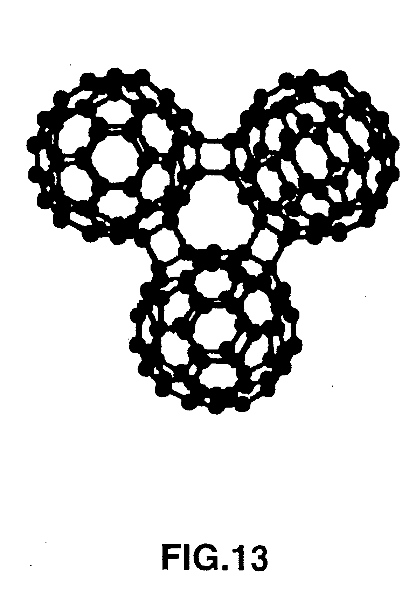

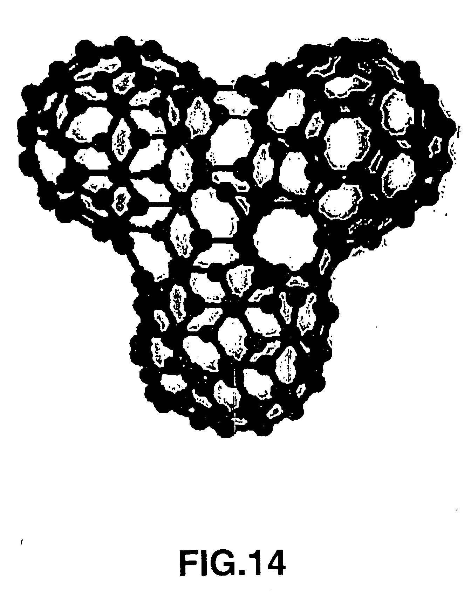

The above polymerization step will be described in detail by example of three molecules of fullerene C₆₀ shown in Figs. 12 to 14. Fig. 12 shows a crystal state of three molecules of fullerene C₆₀, which are separated from each other by a distance equivalent to a van der Waals' radius (3.4 angstroms). When these molecules of Fullerene C₆₀ are heated, an unstable polymer structure shown in Fig. 13 is produced by the thermal effect as well as catalytic effect. A dissociation equilibrium starts between the unstable polymer structure shown in Fig. 13 and the single structure shown in Fig. 12, and when the baking temperature is further raised, a stable polymer structure with a curved graphite plane shown in Fig. 14 is produced.

Even for two molecules of fullerene C₆₀, when the baking temperature is raised to about 600°C, a dissociation equilibrium starts between an unstable dimer structure and single molecules. At this time, any graphite structure is not microscopically observed. And, when the baking temperature is further raised to about 800°C, the unstable dimer structure is shifted to a stable dimer structure of fullerene C₆₀ shown in Fig. 10B.

When the baking temperature is further heated to a temperature ranging from 900°C to 1000°C, graphite and nanotubes are produced around particles of an ordering metal taken as nuclei. At this time, an imperfect strained graphite structure and the like can be microscopically observed. If the ordering metal is previously carbonized, graphite is ordered along the surface structure of the metal carbide.

When the baking temperature is further raised to a temperature of 1000°C or more, it is microscopically observed that graphite nanocapsules are increasingly produced around particles of the metal carbide and metal taken as nuclei. To enhance the hydrogen storage ability of a fullerene polymer, it may be desirable to eliminate the graphite nanocapsules, for example, by mechanically crushing them. When the baking temperature is further raised to a temperature more than 2000°C, ordering of graphite having a planar structure starts. Such a graphite structure is undesirable for hydrogen storage.

From the above description, according to the present invention, the baking temperature may be set in a range of 600°C to 2000°C, preferably, 800°C to 1300°C.

A metal catalyst (or an alloy catalyst) having a catalytic ability capable of separating a hydrogen molecule into hydrogen atoms and further separating hydrogen atoms into protons and electrons may be supported on the surface of the baked body including or not including the ordering additive. With this configuration, the hydrogen storage ability of the baked body can be enhanced with a reduced amount of metal catalyst at room temperature. The metal catalyst can be supported in the form of a layer; however, it may be preferably supported in the form of fine particles. As the average particle size of the particles of the metal catalyst becomes finer, the effect of catalytic reaction of the metal catalyst with the baked body becomes larger, and further the amount of the metal catalyst to be supported on the baked body can be made significantly smaller compared to the metal catalyst supported in the form of coarse particles.

Concretely, the average particle size of the metal catalytic metal may be in a range of 1 micrometer or less, preferably, 100 nm or less, as fine as possible.

The content of fine particles of the metal catalyst supported on the baked body may be preferably of at least about 10 wt% or less by weight of the carbonaceous material.

Examples of the metal catalysts may include platinum, palladium, magnesium, titanium, manganese, lanthanum, vanadium, zirconia, nickel-lanthanum alloy, and titanium-iron alloy. In particular, fine particles of platinum or palladium, or an alloy containing platinum or palladium may be preferably used as the metal catalyst, and fine particles of a platinum alloy may be more preferably used as the metal catalyst.

The metal catalyst may be supported in the form of a layer or in the form of fine particles on the baked body by a known process such as a sputtering process, a vacuum vapor-deposition process, a chemical supporting process, or a kneading process.

In the case of supporting fine particles of platinum or a platinum alloy as a catalyst on the baked body, the fine particles of the catalyst may be supported by a chemical supporting process using a solution containing a platinum complex, or an arc discharge process using a platinum-containing electrode. The chemical supporting process involves putting the baked body in a solution obtained by adding sodium hydrogensulfite or hydrogen peroxide in a water-solution of chloroplatinic acid, followed by agitation of the solution. This process, which is used for preparation of a catalytic electrode of a fuel cell, is sometimes called a liquid-phase chemical supporting process.

The arc discharge process involves partially incorporating platinum or a platinum alloy in an electrode portion, and generating arc discharged by applying a voltage to the electrode portion to evaporate platinum or the platinum alloy, thereby depositing it on the baked body contained in a chamber.

As described above, the baked body including a fullerene polymer having a very stable structure, on the surface of which fine particles of a catalyst such as platinum is supported, can more efficiently store a large amount of hydrogen. Such a baked body is lightweight and easy in transportation, which can be repeatedly used at room temperature without occurrence of structural breakage, and which can enhance safety in handling. The baked body is further advantageous, from the practical viewpoint, in that the amount of the metal catalyst such as platinum to be supported on the baked body can be reduced, fullerenes as a starting material can be easily produced at a low cost, raw materials for producing fullerenes are available, and the baked body can be used for storing/releasing hydrogen with effectively no adverse impacts on the environment.

A carbonaceous material for hydrogen storage according to the present invention, which is composed of a polymer produced from one kind or a mixture of fullerene molecules by electrolytic polymerization, will be described below.

An electrolytic polymer will be described.

As industrial fullerene polymerization methods (or fullerene film formation methods) replaceable with the related art methods, the present inventors have proposed a plasma polymerization method, and a microwave (plasma) polymerization method (for example, N. Takahashi, H. Dock, N. Matsuzawa, and M. Ata, J. Appl. Phys. 1993, 74, 5790).

In accordance with the plasma polymerization method, a thin film of a fullerene polymer (see Figs. 10A and 10B and Fig. 11) is formed by polymerizing fullerene molecules by way of an electron excitation state, which film is higher in strength, density, and flexibility than a fullerene vapor-deposition film. Further, since electronic characteristics of the plasma polymer film are stable both in vacuum and in atmospheric air, the diffusion of oxygen molecules or the like in the plasma polymer film can be effectively suppressed by the dense film structure. The production of a fullerene polymer capable of forming a dense thin film by plasma polymerization can be confirmed by a time-of-flight mass spectroscopy based on a laser abrasion process.

Electronic characteristics of a fullerene polymer film are largely dependent on a structure of the polymer film by polymerization. For example, the result of mass spectroscopy of a polymer film of C₆₀ produced by a microwave plasma polymerization method is very similar to that of a polymer thin film of C₆₀ produced by an argon plasma polymerization method reported by the present inventors [M. Ata, N. Takahashi, and K. Nojima, J. Phys. Chem. 1994, 98, 9960; M. Ata, K. Kurihara, and J. Takahashi, J. Phys. Chem. B 1996, 101,5].

A fine structure of a fullerene polymer can be estimated by a pulse laser induced time-of-flight mass spectroscopy (TOF-MS). In general, a matrix assist method is known as a method of measuring a polymer having a high molecular weight in a non-destructive manner.

According to the matrix assist method, however, it is difficult to directly evaluate a molecular weight distribution of the polymer because of the lack of a solvent capable of dissolving the polymer. According to LDITOF-MS (Laser Desorption Ionization Time-of-Flight Mass Spectroscopy), it is also difficult to accurately evaluate the mass distribution of a fullerene polymer because the matrix assist method cannot be applied due to the lack of a suitable solvent and due to reaction of C₆₀ with matrix molecules.

A structure of a C₆₀ polymer can be estimated from the peak position of a polymer and profiles of dimers appearing in a spectrum of LDITOF-MS observed by laser abrasion of C₆₀ with a laser power being small enough to prevent polymerization of C₆₀. The spectrum of LDITOF-MS of the C₆₀ polymer film obtained by using a plasma power of 50 W shows that the polymerization between C₆₀ molecules involving a loss of four carbon atoms most probably occurs. That is to say, in the case of polymerization of two molecules of C₆₀, C₁₂₀ is a minor product, and C₁₁₆ is major product.

As a calculation result of a dimer of C₆₀ by a semiempirical molecular orbital method, C₁₁₆ may be considered as D2h-symmetric C₁₁₆ shown in Fig. 10B. D2h-symmetric C₁₁₆ is obtained by re-combination of C₅₈. It has been reported that C₅₈ is produced by elimination of C₂ from C₆₀ in an electron excitation state including an ionization state [(a) M. Fieber.Erdmann, et al, Z. Phys. D1993, 26, 308; (b) S. Petrie, et al, Nature 1993, 356, 426; (c) W. C. Eckhoff, and G. E. Scuseria, Chem. Phys. Lett. 1993, 216, 399].

If two open shell molecules C₅₈ are bonded to each other before two pieces of five-membered rings are shifted into an adjacent structure, C₁₁₆ having a structure shown in Fig. 10B is obtained.

The present inventors, however, have suggested that the [2 + 2] type cycloaddition reaction (the reaction product is shown in Fig. 10A) due to a triplet state, where an electron is excited, occurs at the initial stage of plasma polymerization of C₆₀. The reason why C₁₁₆ is highly probably produced is that (C₆₀)₂ is first produced by the [2 + 2] cycloaddition reaction due to a triplet state of C₆₀, and four pieces of SP³ carbon atoms forming a cyclobutane are eliminated, whereby two open shell molecules C₅₈ are re-combined to each other.

For example, when a micro-crystal of C₆₀ on an ionization target of TOF-MS is irradiated with a strong pulse laser beam, fullerene molecules are polymerized by way of an electron excitation state, like the microwave plasma polymerization method. In this case, ions of C₅₈ and C₅₆ are observed together with a peak of optical polymer of C₆₀.

However, fragment ions such as C₅₈²⁺ or C₂⁺ are not observed, and accordingly, in this polymerization, the phenomenon in which C₆₀³⁺ is directly fragmented into C₅₈²⁺ or C₂⁺, described in the document by Fieber.Frdmann et al, does not occur. Further, in the case of forming a film by evaporating C₆₀ in a C₂F₄ gas plasma, only molecules C₆₀ to which fragment ions of F or C₂F₄ are added are observed in the spectrum of LDITOF-MS and the polymer of C₆₀ is not observed. In the spectrum of LDITOF-MS when the polymer of C₆₀ is not observed, ions such as C₅₈ or C₅₆ are not observed either. This observation result also supports that the loss of C₂ occurs after polymerization of C₆₀.

It is examined whether or not the loss of C₂ occurs directly from the structure 1,2-(C₆₀)₂ by [2 + 2] cycloaddition reaction shown in Fig. 10A. With respect to this problem, Murry and Osawa has proposed the structural relief of 1,2-(C₆₀)₂ [(a) R. L. Murry et al, Nature 1993, 366, 655; (b) D. L. Strout et al, Chem. Phys. Lett. 1993,214, 576].

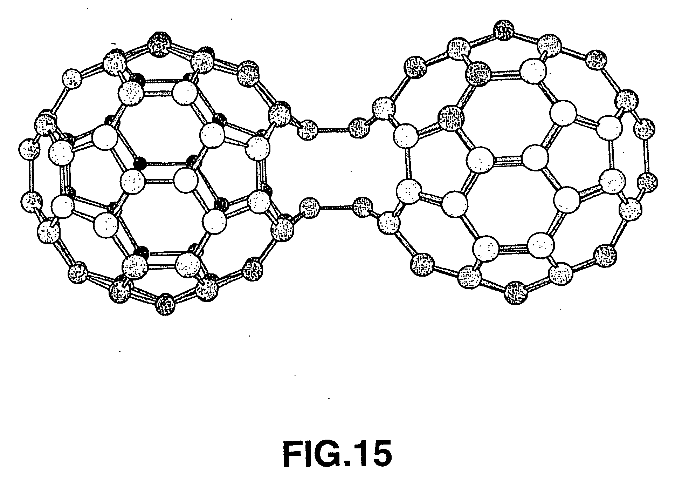

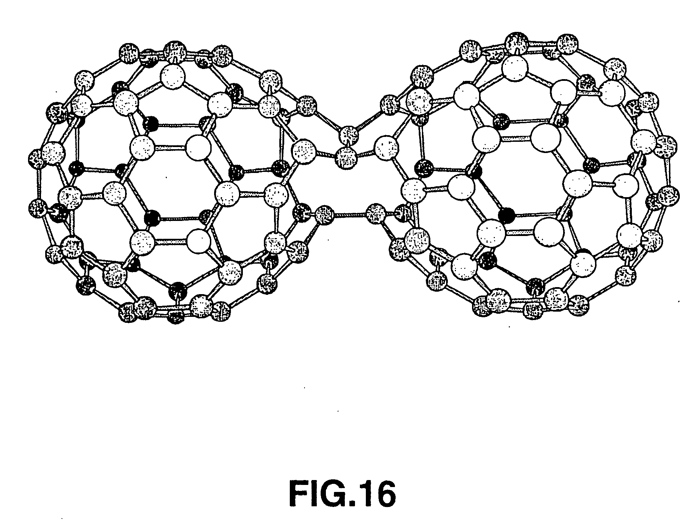

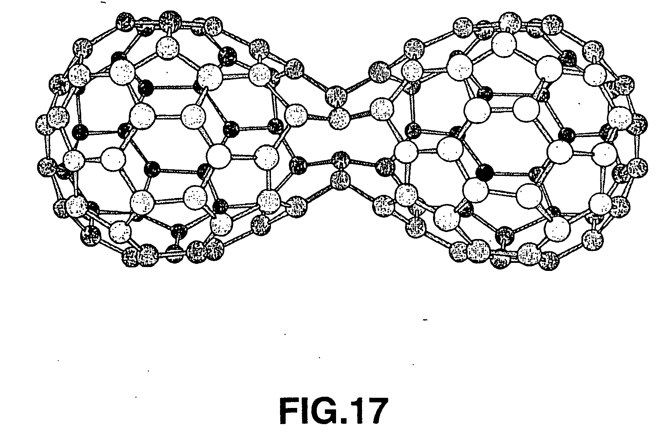

According to the proposal by Murry and Osawa, at the initial stage of the structural relief of 1,2-(C₆₀)₂ shown in Fig. 10A, C₁₂₀(d) shown in Fig. 17 is produced from C₁₂₀ (c), shown in Fig. 16, having a ladder type cross-link due to Stone Wales dislocations (A. J. Stone, D. J. Wales, Chem. phys. Lett. 1986, 128, 501; and (b) R. Saito, Chem. Phys. Lett. 1992,195,537) by way of C₁₂₀ (b) shown in Fig.10 in which 1,2-C-C bond having the largest strain at the cross-like portion is opened. As the structure is shifted from 1,2-(C₆₀)₂ shown in Fig. 10A to C₁₂₀ (b) shown in Fig. 15, the energy of the structure becomes unstable; however, as the structure is shifted from C₁₂₀ (c) shown in Fig. 16 to C₁₂₀ (d) shown in Fig. 17, the energy of the structure becomes stable again.

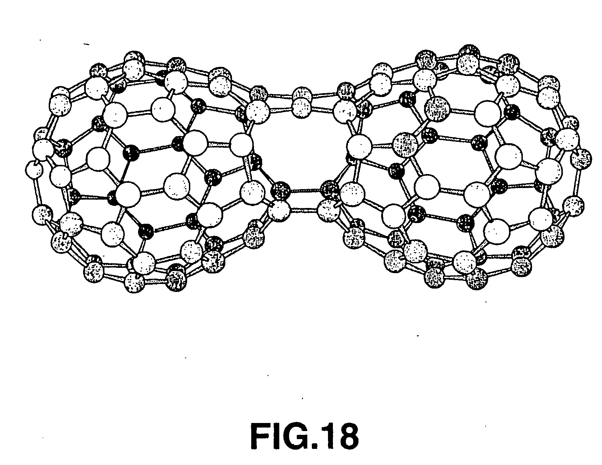

It is unclear whether a loss of nC₂ observed in polymerization of C₆₀ by microwave plasma induction directly occurs from the structure 1,2-(C₆₀) shown in Fig. 10A, initial state, or occurs after the molecular structure is somewhat relieved. However, it may be considered that C₁₁₈ has a structure shown in Fig. 18 by elimination of C₂ from C₁₂₀(d) shown in Fig. 17 and re-bonding of dangling bonds.

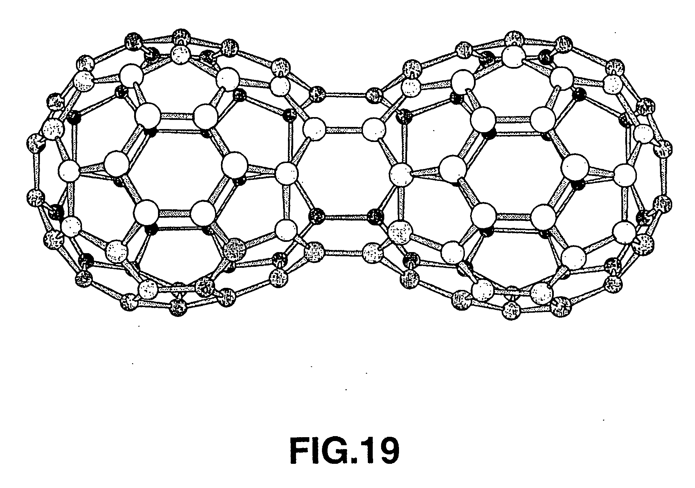

Further, C₁₁₆ having a structure shown in Fig. 19 is obtained by elimination of C₂ from a ladder-like cross-link of C₁₁₈ shown in Fig. 18 and re-bonding of dangling bonds. From the fact that clusters each having carbon atoms of the odd number are hardly observed in the spectrum of TOF-MS of a dimer and the structure is stable, the loss of C₂ may be considered to occur not directly from the structure 1,2-(C₆₀)₂ but from C₁₂₀ (d) shown in Fig. 17.

Osawa et al. has described in the above document that a structure D5d-symmetric C₁₂₀ is obtained from C₁₂₀(a) by way of structural relief due to multi-stage Stone Wales dislocations. The structure C₁₂₀ is obtained by extending a graphite structure of C₇₀ up to C₁₂₀. This suggests that nanotubes can be obtained by a polymer of C₆₀. From the spectrum of TOF-MS of a polymer of C₆₀, it may be considered that in formation of the polymer of C₆₀ by plasma irradiation, the structural relief accompanied by the loss of C₂ takes precedence over the structural relief due to multi-stage dislocations.

As described above, according to the present invention, the cycloaddition polymer difficult to be selectively obtained by the related art method such as the plasma polymerization method, particularly, a polymer of fullerenes polymerized by 1,2-addition reaction (at the cyclohexatrienyl sites) is indispensable for making use of the hydrogen storage ability and can be used as a hydrogen storage material capable of achieving a high hydrogen storage ability. If metal ions or clusters thereof are incorporated in the above polymer material, there can be obtained a charge separation effect, and if particles of a metal such as platinum is supported on the surface of the polymer material, there can be obtained an effect of increasing the hydrogen storage ability of the polymer material.

The above-described hydrogen storage ability results not only from a cycloaddition polymer of fullerene C₆₀ but also from a cycloaddition polymer of a higher fullerene , such as fullerene C₇₀, and further results from fullerene dimers in addition to a cycloaddition polymer having a relatively large degree of polymerization, such as trimers.

The hydrogen storage material of the present invention mainly contains a cycloaddition polymer having a hydrogen storage ability as described above. Such a polymer can be produced by an electrolytic polymerization process, which has been recently developed by the present inventors. The polymer can be also produced by a mechanical shaking process or an ultrasonic wave vibration process. The electrolytic polymerization process involves dissolving fullerene molecules as a raw material and a supporting electrolyte for accelerating electrolyzation in a nonaqueous solvent to prepare an electrolytic solution, and applying a DC potential between electrodes in the electrolytic solution, to obtain a fullerene polymer.

One kind or a mixture of fullerenes expressed by a general chemical formula Cn (n is an even number allowing formation of a spherical structure) may be used as the raw material for the above-described electrolytic polymerization. In particular, one kind or a mixture of fullerene C₆₀ and fullerene C₇₀, to which higher fullerenes (C₇₈, C₈₀, C₈₂, C₈₄, ...) may be added, are preferably used as the raw material.

The fullerene molecules can be easily, inexpensively produced by an arc discharge process using carbon electrodes as shown in Fig. 1.

Soot produced by arc discharge contains various kinds of fullerene molecules such as C₆₀ and C₇₀ in an amount of about 10wt% or more by weight of soot under a suitable condition.

The fullerenes such as C₆₀ and C₇₀ can be extracted from the soot by using a solvent having a pi electron molecular structure, such as toluene, benzene, or carbon disulfide. The fullerenes thus extracted from the soot are called "crude fullerenes", and fullerene C₆₀ and fullerene C₇₀ can be each obtained by separating and refining the crude fullerenes through column chromatography.

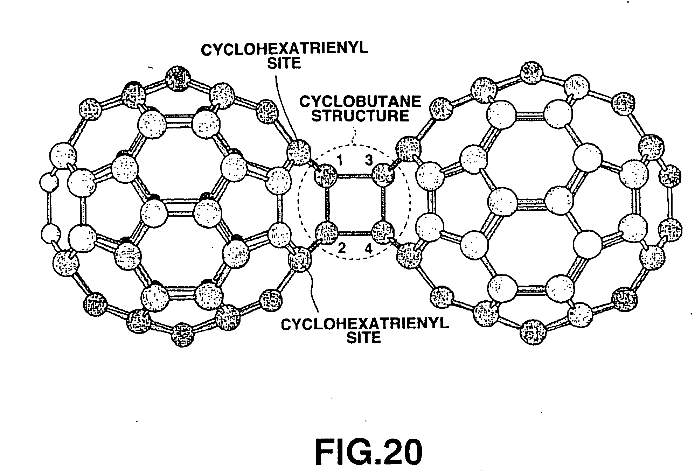

The cycloaddition polymer may be preferably a polymer as shown in Fig. 20, which is expressed by a chemical formula (Cₙ)ₘ (n is an even number allowing formation of a spherical structure, and m is a natural number) composed of fullerene molecules polymerized by 1,2-addition bonding at cyclohexatrienyl sites thereof. In an embodiment, m is 2. The cyclobutane structure is further illustrated in Fig. 20.

According to the present invention, counter ions entrapped from the supporting electrolyte in the electrolytic solution into the electrolytic polymer may be left as trapped in the polymer. The entrapment of the counter ions in the electrolytic polymer may often exhibit a high structural stability of the electrolytic polymer.

The counter ions may be preferably ions of a metal selected from Li, Be, Na, Mg, Ca, K, Ce, Al, Mn, Fe, Co, and the like, and a cluster thereof.

The nonaqueous solvent used for preparation of the electrolytic solution may be preferably a mixed solvent composed of a first solvent for dissolving fullerene molecules and a second solvent for dissolving the supporting electrolyte.

The first solvent may be a low polar solvent having a pi electron molecular structure, and the second solvent may be a polar solvent.

Examples of the first solvents may include carbon disulfide, toluene, benzene, and orthodichlorobenzene, which can be used singly or in combination, and examples of the second solvents may include acetonitrile, dimethylformamide, dimethylsulfoxide, and dimethylacetoamide, which can be used singly or in combination.

The cycloaddition fullerene polymer according to the present invention may be produced, in addition to the above-described electrolytic polymerization process, by a process of vibration of fullerene molecules, for example, a mechanical shaking process or ultrasonic wave irradiation process. The vibration process may be carried out in an atmosphere of an inert gas for preventing oxidation of fullerene molecules.

In production of the cycloaddition polymer by vibration of fullerene molecules, the fullerene molecules may be mixed with fine particles of a catalytic metal before vibration of the fullerene molecules. Examples of the catalytic metals may include an alkali metal such as Li, Na, and K, and further, Be, Mg, Ca, Ce, Al, Mn, Fe and Co. The vibration process may be performed by mechanically shaking fullerene molecules by using a shaker or irradiating fullerene molecules with ultrasonic waves in an inert gas such as argon, helium, or xenon. The structure of a fullerene polymer produced by the vibration process may be nearly equal to that of a fullerene polymer produced by electrolytic polymerization. However, a polymer is produced in the form of a thin film by electrolytic polymerization process, while a polymer having a relatively small polymerization degree, such as a dimer or trimer is mainly provided by the vibration process. In addition, to obtain a polymer by mechanically shaking fullerene molecules, the fullerene molecules may be shaken together with a filler promoting a shaking effect, such as zirconia beads. The incorporation of such a filler is effective for assisting grinding or dispersion of fine particles of a catalytic metal. The polymer produced by the vibration process may be considered to have a structure in which metal atoms or ions are coordinated in the polymer like the polymer produced by electrolytic polymerization process. Additionally, the polymer produced by the shaking process using a powder of lithium is easy to be oxidized as compared with the polymer produced by electrolytic polymerization process, and therefore, it may be treated in an inert gas.

According to the present invention, a metal catalyst (or an alloy catalyst) having a catalytic ability capable of separating a hydrogen molecule into hydrogen atoms and further separating hydrogen atoms into protons and electrons may be supported on the cycloaddition polymer. With this configuration, the hydrogen storage ability of the cycloaddition polymer can be enhanced with a reduced amount of metal catalyst. The metal catalyst can be supported in the form of a layer on the polymer; however, it may be preferably supported in the form of fine particles on the polymer. As the average particle size of the particles of the metal catalyst becomes finer, the effect of catalytic reaction of the metal catalyst with the polymer becomes larger, and further the amount of the metal catalyst to be supported on the polymer becomes significantly smaller.

Concretely, the average particle size of the catalytic metal may be in a range of 1 micrometer or less, preferably, 100 nm or less.

Examples of the metal catalysts may include platinum, palladium, magnesium, titanium, manganese, lanthanum, vanadium, zirconia, nickel-lanthanum alloy, and titanium-iron alloy. In particular, fine particles of platinum or palladium, or an alloy containing platinum or palladium may be preferably used as the metal catalyst, and fine particles of a platinum alloy may be more preferably used as the metal catalyst.

The metal catalyst may be supported in the form of a layer or in the form of fine particles on the polymer by a known process such as a sputtering process, a vacuum vapor-deposition process, a chemical supporting process, or a kneading process.

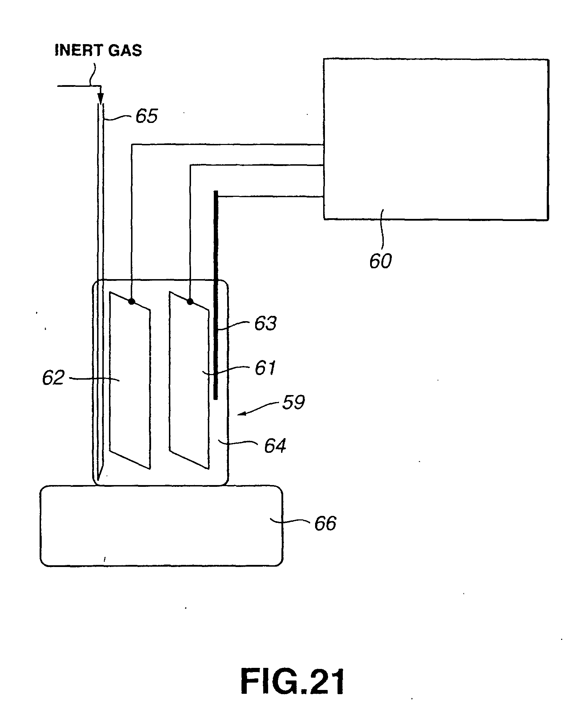

As is apparent from the above description, an embodiment of the present relates to the electrolytic polymerization technology of fullerenes. The electrolytic polymerization will be more fully described with reference to Fig. 21. In addition, the following description is for illustrative purposes only, and it is to be understood that various variations of electrolytic polymerization can be carried out.

Fig. 21 is a schematic diagram showing a configuration of an electrolytic polymerization apparatus used for the present invention. Referring to Fig. 21, an negative electrode 61 and a positive electrode 62, each of which is connected to a potentiostat 60, are disposed in an electrolytic cell 59. A reference electrode 63 is connected to the potentiostat 60 for keeping constant a voltage value or current value between the negative electrode 61 and positive electrode 62. A specific electric potential is applied between the negative electrode 61 and positive electrode 62.

A gas lead pipe 65 for introducing an inert gas for removing oxygen gas and the like in a nonaqueous solvent 64 is provided in the electrolytic cell 59. A magnetic stirrer 66 is provided on the back surface of the electrolytic cell 59 for operating a stirring piece (not shown) disposed in the electrolytic cell 59.

The operation of the electrolytic polymerization apparatus having the above configuration will be described. Fullerene molecules as a raw material, a supporting electrolyte, and the nonaqueous solvent 64 mainly containing a first solvent and a second solvent are put in the electrolytic cell 59. When an specific electrical energy is applied between the negative electrode 61 and positive electrode 62 by operating the potentiostat 60, most of the fullerene molecules become negative radicals (anion radicals) in the electrolytic solution, whereby a polymer is produced in the form of a thin film on the positive electrode 62, and/or in the form of a precipitate. The polymer obtained as the precipitate can be easily recovered by means such as filtering and drying, and the polymer recovered from the precipitate can be used, for example, as a thin film by solidifying the polymer or kneading the polymer with a polymer.

Each of the negative electrode 61 and positive electrode 62 are preferably and substantially formed of a metal; however, it may be made from another conductive material, or formed by a base such as glass or silicon on which a conductive material such as a metal is vapor-deposited. The type of the reference electrode 63 is dependent on the type of supporting electrolyte; however, it is not limited to a specific metal.

The supporting electrolyte may be preferably contained in the nonaqueous solvent. The properties of an electrolytic polymer formed on the electrode (mainly, positive electrode) may somewhat differ depending on the supporting electrolyte added in the nonaqueous solvent.

For example, if tert-butyl ammonium perchlorate is selected as the supporting electrolyte, large positive ions such as ammonium ions derived from the supporting electrolyte are present as counter ions in the electrolytic solution. The positive ions form coordination bonds with fullerene molecules. As a result, a spherical carbon polymer is produced in the state of a complex salt into a thin film on the electrode or into a precipitate. The thin film of such a spherical carbon polymer is brittle. On the other hand, if lithium perchlorate is selected as the supporting electrolyte, lithium ions derived from the supporting electrolyte are present as counter ions in the electrolytic solution. In this case, a spherical carbon polymer is produced in the form of a stable rigid thin film, for example, on the electrode. The film has a mirror-like surface.

In the case of using lithium tetrafluoroborate (LiBF₄), lithium hexafluorophosphate (LiPF₆), sodium perchlorate (NaClO₄), LiCF₃SO₃, or lithium hexafluoroarsenite (LiAsF₆) as another supporting electrolyte, a spherical carbon polymer may be often produced as a precipitate in the electrolytic solution.

Also, if tert-butyl ammonium perchlorate is selected as the supporting electrolyte, a spherical carbon polymer exhibiting a state similar to the sodium perchlorate (NaClO₄).

A mixed solvent of a first solvent for dissolving fullerene molecules and a second solvent for dissolving the supporting electrolyte may be preferably used as the nonaqueous solvent. The mixing volume ratio of the first solvent to the second solvent may be preferably in a range of (1 : 10) to (10: 1).

As described above, a low polar solvent having a pi electron molecular structure, such as carbon disulfide or toluene, may be used as the first solvent.

As described above, a solvent having a high polarity and a high dielectric constant, such as acetonitrile or dimethylformamide may be used as the second solvent. In particular, acetonitrile may be preferably used as the second solvent.

In general, fullerene molecules can be dissolved only in a low polar solvent having a pi electron molecular structure such as carbon disulfide (CS₂), toluene, benzene or orthodichlorobenzene. Even the solubility of fullerene molecules in a fatty acid based solvent such as n-hexane is very low. Of cource, fullerene molecules cannot be dissolved in a polar solvent. This is the largest problem in electrolytic polymerization of fullerene molecules because the supporting electrolyte used for electrolytic polymerization can be dissolved only in a polar solvent such as water.

Accordingly, for electrolytic polymerization of fullerene molecules, it is required to select a solvent system capable of dissolving both fullerene molecules and the supporting electrolyte; however, such a solvent system cannot be attained by a single solvent. Therefore, the mixed solvent composed of the first solvent capable of dissolving fullerene molecules and the second solvent capable of dissolving the supporting electrolyte is used as the above solvent system. The mixed solvent, however, may often become insufficient in solubility of each or either of fullerene molecules and the supporting electrolyte unless the preparation of the first and second solvents is suitably adjusted.

In general, the supporting electrolyte as a salt is dissolved in a water-based solvent such as water having a large dielectric constant; however, water is not dissolved in a low polar solvent having a pi electron molecular structure, such as carbon disulfide, toluene or benzene, capable of dissolving fullerene molecules.

Accordingly, an organic solvent having a high polarity and a large dielectric constant is required to be selected as the second solvent for preparing the mixed solvent in cooperation with the first solvent. As described above, acetonitrile is most suitable as such an organic solvent. In general, acetonitrile is used as a solvent for preparing organic radicals by using a supporting electrolyte in an electrolytic cell. According to the present invention, the second solvent used for electrolytic polymerization is not limited to acetonitrile, but may be dimethylformamide, dimethylsulfoxide, or dimethylacetoamide as described above.

Further, in electrolytic polymerization, the nonaqueous solvent may be preferably sufficiently degassed by introducing an inert gas in the nonaqueous solvent.

Referring to Fig. 21, the nonaqueous solvent is degassed by bubbling the nonaqueous solvent with an inert gas, typically, helium gas fed in the nonaqueous solvent via the gas lead pipe 65. The helium gas may be replaced with the inert gas such as nitrogen gas or argon gas. To perfectly remove oxygen gas from the nonaqueous solvent, each solvent is previously dehydrated by using a dehydrating agent, followed by vacuum deaeration, and each solvent is reserved in an ampoule; and each solvent is introduced in the electrolytic cell 59 via a vacuum line upon start of electrolytic polymerization.

The reason why the electrolytic solution or nonaqueous solvent is degassed is to prevent entrapment of oxygen or the like in a fullerene polymer, and hence to suppress the appearance of a paramagnetism center, thereby improving the stability of the fullerene polymer.

The temperature of the electrolytic solution upon electrolytic polymerization may be preferably set in a range of less than 50°C. If the temperature becomes 50°C or more, a spherical carbon polymer tends to be provided as a precipitate, and the solvent may sometimes exceed a boiling point thereof. Accordingly, the electrolytic polymerization apparatus may be provided with a heater or a cooler. For example, the magnetic stirrer 66 may serve as a heater. The magnetic stirrer 66 serving as a heater can suitably control the temperature of the electrolytic solution during application of an electric potential for formation of a spherical carbon polymer.

Electrolytic polymerization may be preferably performed by applying a DC current in a constant-voltage mode.

An electric potential (particularly, voltage) for electrolytic polymerization can be applied by using the potentiostat. In this case, the electric potential can be applied in either a constant-current mode or a constant-voltage mode. If the constant-current mode is adopted, since a thin film having a high resistance is formed on the electrode, the current value tends to be reduced and thereby the voltage becomes excessively higher. As a result, the state of polyanion of fullerene molecules becomes unstable, thereby making it difficult to keep constant reaction.

Additionally, in the case of carrying out electrolytic polymerization under a constant potential condition, a simple DC power source composed of a commercial dry battery combined with a variable resistance can be used in place of the potentiostat 60 shown in Fig. 21.

A structural example of a spherical carbon polymer will be described below.

A spherical carbon polymer produced by electrolytic polymerization is a cycloaddition polymer produced by addition reaction between anion radicals and electrically neutral molecules of fullerenes. The polymer is produced in the form of a thin film and/or a deposit on an electrode.

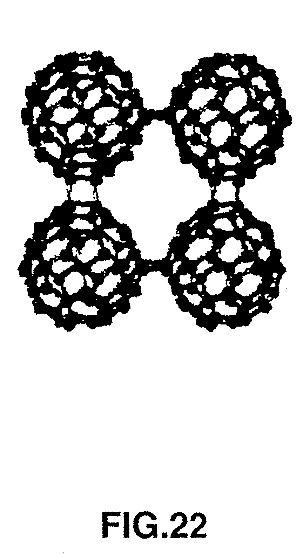

The structure of the spherical carbon polymer may be considered as follows: namely, two-dimensional partial structures, typically, dimers of C₆₀ shown in Fig. 20, trimers of C₆₀ shown in Fig. 13, and tetramers of C₆₀ shown in Fig. 22, are continuous to each other on a two-dimensional plane and further continuous to each other in a three-dimensional space. The polymer having such a structure is formed into a thin film. The spherical carbon polymer formed into a thin film may, of course, further contain dimers, trimers, and tetramers of higher fullerenes, such as C₁₂₀, C₁₈₀, C₂₄₀.

In general, fullerene molecules often called radical sponges easily cause addition reaction with radical seeds, to form radical adducts. The reason for this is that carbon atoms of fullerene molecules are in an intermediate valence state between SP² and SP³, to facilitate the formation of the valence state of SP³ along with formation of radical adducts between fullerene molecules.

As described above, a fullerene polymer is produced by dissolving fullerene molecules in a nonaqueous solvent to change the fullerene molecules into anion radicals, followed by reaction between anion radicals or between anion radicals and electrically neutral molecules, to thereby produce a polymer. In this case, to form a thin film of the polymer thus produced on an electrode, it is needed to finely control the treatment temperature or electrolytic potential, in addition to the above-described selection of the supporting electrolyte.

To be more specific, it is relatively easy to impart electric charges to fullerene molecules by dissolving them in the above-described specific nonaqueous solvent; however, in this case, if the polymerization occurs not on the surface of the electrode but in the solvent, the polymer may be often precipitated on the bottom of the electrolytic cell because of a low solubility of the polymer. As the amount of the precipitate increases, the amount of the thin film formed on the electrode decreases.

Accordingly, to effectively obtain a thin film of a fullerene polymer, that is, a spherical carbon polymer composed of a cycloaddition polymer, the electrolytic polymerization may be preferably performed under a condition that the amount of the precipitate of the polymer becomes smaller. In particular, a rigid bright thin film can be obtained by performing electrolytic polymerization using lithium ions as counter ions of the supporting electrolyte without heating for accelerating the reaction.

In the electrolytic polymerization, counter ions for example, lithium ions may be entrapped from the supporting electrolyte in the cycloaddition polymer.

If the counter ions are left as trapped in the cycloaddition polymer, the spherical carbon polymer containing the cycloaddition polymer may be oxidized in atmospheric air. The counter ions can be removed to some extent if needed.

The process of removing the counter ions involves dipping the cycloaddition polymer containing the counter ions in a solution such as a water solution, and heating and boiling the solution while applying a potential reversed to the potential applied upon electrolytic polymerization. With this process, the counter ions can be removed to some extent.

The process of producing a polymer of fullerenes by electrolytic polymerization has been developed by the present inventors for the purpose of obtaining a film of a fullerene polymer composed of only [2 + 2] type cycloaddition polymer of fullerene C₆₀. Such a polymer cannot be obtained by the plasma polymerization process.

Next, the thermodynamic examination of the above-described electrolytic polymerization of typical fullerene C₆₀ will be made on the basis of a semiempirical molecular orbital method. In addition, it is assumed that the counter ions are lithium ions.

As a result of approximate calculation of heat of formation of fullerene molecules on the basis of an MNDO method (semiempirical molecular orbital method) in which a parameter of lithium atoms is set, the heat of formation of each of fullerenes C₆₀, C₆₀.Li, C₁₂₀.Li, and C₁₂₀.Li₂ is as follows:
C₆₀: 864.4181 kcal/mol
C₆₀.Li: 763.001 kcal/mol
C₁₂₀.Li: 1525.716 kcal/mol
C₁₂₀.Li₂: 1479.057 kcal/mol

Here, C₁₂₀ is a cycloaddition dimer of C₆₀ [1,2-(C₆₀)₂] as shown in Fig. 10A. While not shown, lithium ions are most stable in a state (C₁₂₀.Li or C₁₂₀.Li₂) being held between two molecules of fullerene C₆₀ having a cross-linking structure. It should be noted that the calculation of the polymer containing lithium is all performed by a non-restrictive Hartree-Fock method.

As the above-described calculation results, the following points (1) to (3) become apparent.
(1) C₆₀ is very stabilized by coordination of lithium atoms. This is because the lowest unoccupied molecular orbital of C₆₀ is located at a site significantly lower than that of free electrons.
(2) In the reaction formula of (C₆₀) + (C₆₀.Li) = (C₁₂₀.Li) + Q, the reaction heat Q is calculated at -106.3 kcal/mol. That is to say, since the reaction is exothermic reaction, the product C₁₂₀.Li is very stabilized.
(3) In the reaction formula of 2(C₆₀.Li) = (C₁₂₀.Li₂) + Q, the reaction heat Q is calculated at -46.945 kcal/mol. That is to say, since the reaction is exothermic reaction, the product C₁₂₀.Li₂ is very stabilized.

Each of the above-described calculation results, which is based on a difference in energy between the start state and the end state of the reaction in vacuum, is not concerned with a potential barrier of the reaction; however, since the calculation result has a good relationship with the free energy of the system if the entropy such as steric hindrance less contributes to the reaction, the above-described calculation results can support the fact that the above-described reaction easily occurs.

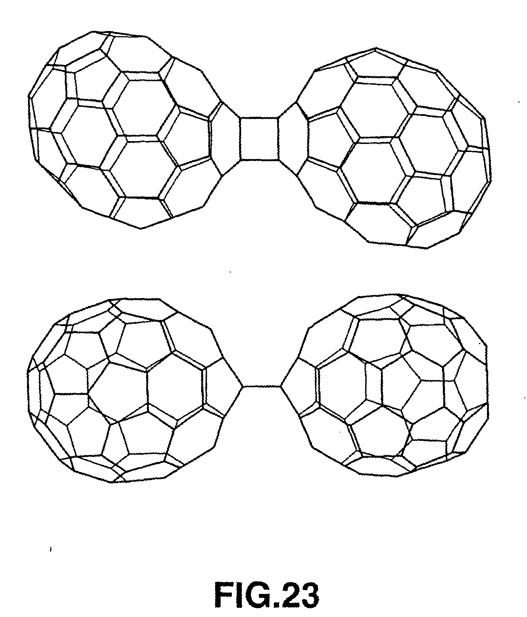

Next, the thermodynamic examination of the above-described electrolytic polymerization of fullerene C₇₀ will be made with reference to Figs. 23 to 31.

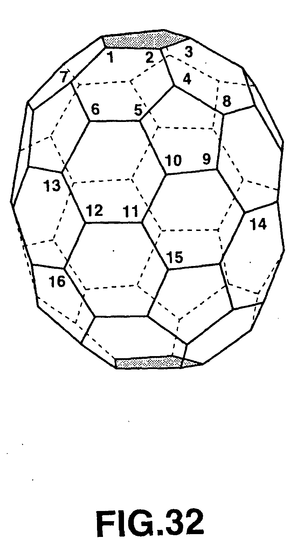

The mechanism of polymerization of molecules of fullerene C₇₀ is more intricate than that of molecules of fullerene C₆₀. The numbering system of carbon atoms of a molecule of fullerene C₇₀, used for the following thermodynamic examination, is shown in Fig. 32.

As shown in Fig. 32, 105 pieces of C-C bonds of one molecule of C₇₀ are classified into eight kinds of C-C bonds represented by C(1)-C(2); C(2)-C(4); C(4)-C(5); C(5)-C(6) ; C(5)-C(10); C(9)-C(10); C(10)-C(11); and C(11)-C(12). Of these C-C bonds, each of C(2)-C(4) and C(5)-C(6) exhibits a double bonding characteristic similar to that of C=C bond of C₆₀.

The pi electrons of a six-membered ring of the molecule, containing carbon atoms C(9), C(10), C(14) and C(15), are delocalized, and the C(9)-C(10) bond forming part of the five-membered ring exhibits a double bond characteristic while the C(11)-C(12) bond forming part of the five-membered ring exhibits a single bonding characteristic.

Taking into account the C-C bonds each exhibiting the double bonding characteristic, that is, C(2)-C(4), C(5)-C(6), C(9)-C(10), C(10)-C(11), the process of polymerization of molecules of fullerene C₇₀ will be examined. In addition, since the C(11)-C(12) bond exhibiting the single bonding characteristic as described above is a bond across two six-membered rings (6,6-ring fusion), the addition reactivity of the C(11)-C(12) is also examined.

The [2 + 2] type cycloaddition reaction of C₇₀ will be first examined. From the [2 + 2] type cycloaddition reaction of the five kinds of C-C bonds, C(2)-C(4), C(5)-C(6), C(9)-C(10), C(10)-C(11), and C(11)-C(12) causes 25 kinds of dimers of C₇₀. However, for convenience of calculation, only nine kinds of addition reactions between the same C-C bonds will be examined.

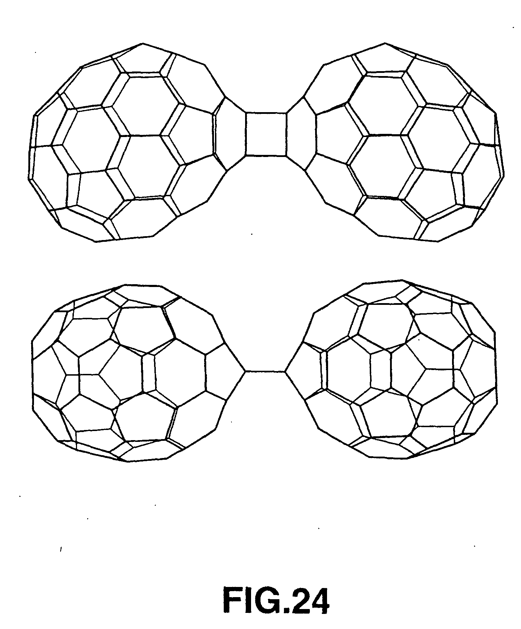

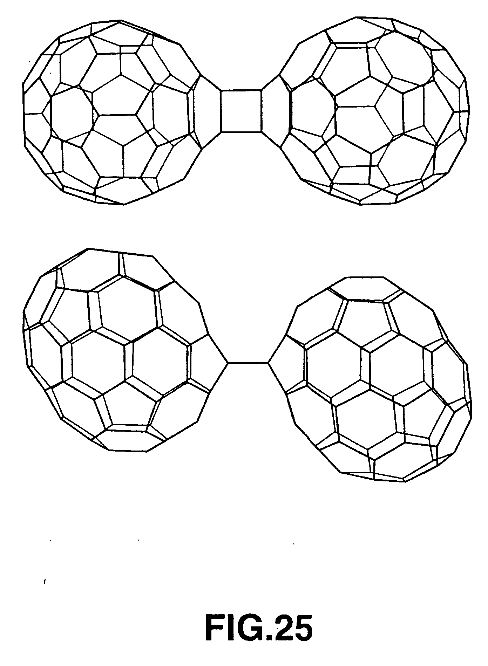

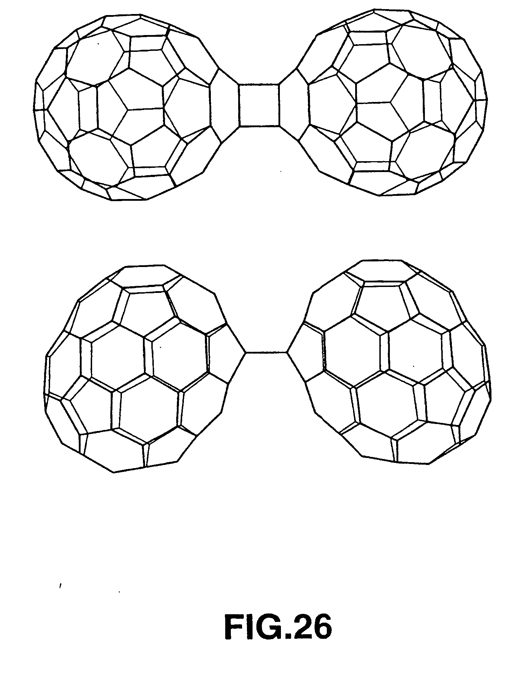

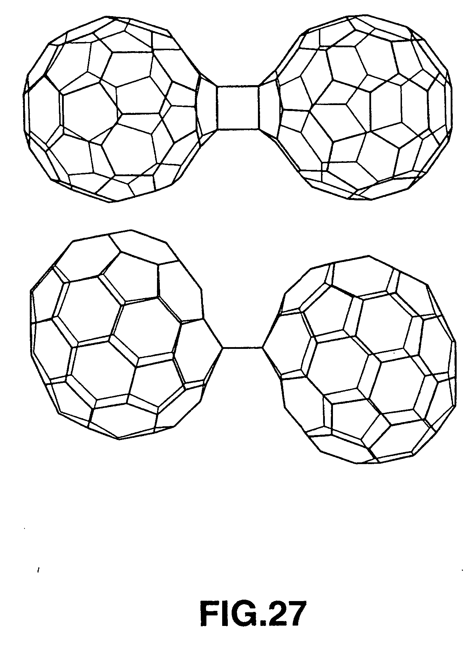

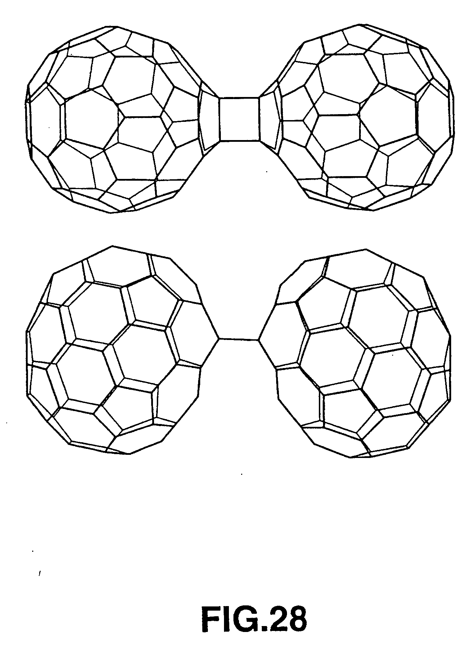

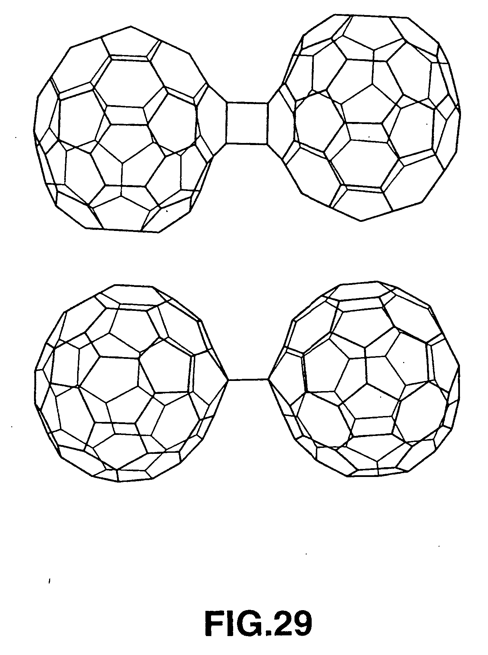

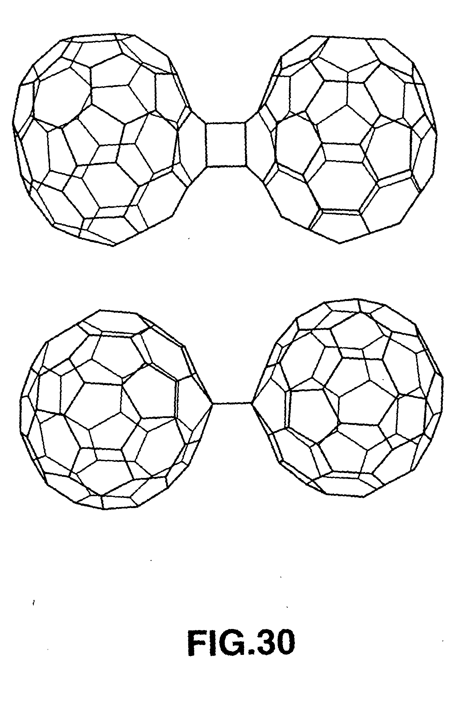

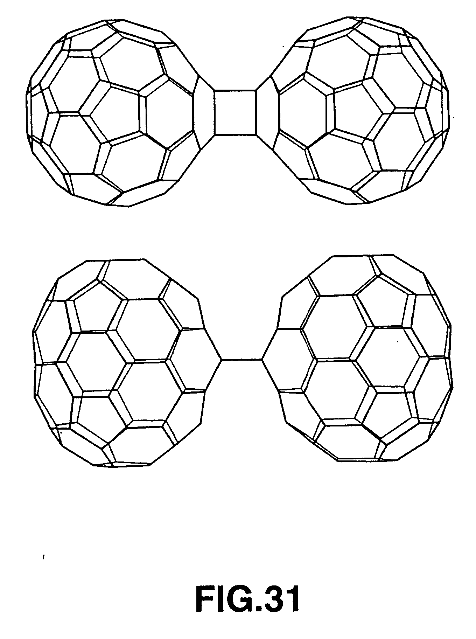

The heats of reaction (ΔHf⁰(r)) at AM-1 and PM-3 levels of MNDO in formation of one molecule of C₁₄₀ from two molecules of C₇₀ are shown in Table 1. In Table 1, C₁₄₀ (a) (see Fig. 23) and C₁₄₀ (b) (Fig. 24), C₁₄₀ (c) (Fig. 25) and C₁₄₀ (d) (Fig. 26), C₁₄₀(e) (Fig. 27) and C₁₄₀ (f) (Fig. 28), and C₁₄₀ (g) (Fig. 29) and C₁₄₀ (h) (Fig. 30) are pairs of anti-symmetric isomers with the C(2)-C(4) bonding, C(5)-C(6) bonding, C(9)-C(10) bonding, and C(10)-C(11) bonding, respectively. The addition reaction between the C(11)-C(12) causes only D2h-symmetric C₁₄₀ (i) (see Fig. 31). In each of Figs. 23 to 31, a model structure viewed from the upper surface side of a molecule of C₁₄₀ is shown in the upper section of each of these figures, and the model structure viewed from a side surface side of the molecule of C₁₄₀ is shown below the model structure viewed from the upper surface in each of these figures. Table 1 is shown below:

**Table 1**

| **Cluster (Reference Drawings)** | **Δ Hf°(r) (kcal/mol) AM-1** | **Δ Hf°(r) (kcal/mol) PM-3** | **Cross-link** | **Bonding length (angstrom)** |
|---|---|---|---|---|
| C₁₄₀(a) | -34.63 | -38.01 | C(2)-C(2'), C(4)-C(4') | 1.544 |
| (Fig. 23) | | | C(2)-C(4),C(2')-C(4') | 1.607 |
| C₁₄₀(b) | -34.33 | -38.00 | C(2)-C(4'),C(4)-C(2') | 1.544 |
| (Fig. 24) | | | C(2)-C(4),C(2')-C(4') | 1.607 |
| C₁₄₀(c) | -33.94 | -38.12 | C(5)-C(5'), C(6)-C(6') | 1.550 |
| (Fig. 25) | | | C(5)-C(6),C(5')-C(6') | 1.613 |
| C₁₄₀(d) | -33.92 | -38.08 | C(5)-C(6'),C(6)-C(5') | 1.551 |
| (Fig. 26) | | | C(5)-C(6),C(5')-C(6') | 1.624 |
| C₁₄₀(e) | -19.05 | -20.28 | C(9)-C(9'),C(10)-C(10') | 1.553 |
| (Fig.27) | | | C(9)-C(10),C(9')-C(10') | 1.655 |
| C₁₄₀(f) | -18.54 | -19.72 | C(9)-C(10'),C(10)-C(9') | 1.555 |
| (Fig.28) | | | C(9)-C(10),C(9')-C(10') | 1.655 |
| C₁₄₀(g) | +3.19 | -3.72 | C(10)-C(10'),C(11)-C(11') | 1.559 |
| (Fig. 29) | | | C(10)-C(11),C(10')-C(11') | 1.613 |
| C₁₄₀(h) | +3.27 | -3.23 | C(10)-C(11'),C(11)-C(10') | 1.560 |
| (Fig. 30) | | | C(10)-C(11),C(10')-C(11') | 1.613 |
| C₁₄₀(i) | +64.30 | +56.38 | C(11)-C(11'),C(12)-C(12') | 1.560 |
| (Fig. 31) | | | C(11)-C(12),C(11')-C(12') | 1.683 |

In addition, the heats of reaction (ΔHf⁰(r)) at AM-1 and PM-3 in Table 1 are calculated on the basis of the MNDO method (semiempirical molecular activation method) using parameterization by J.J.P. Stewart.

The numbering system of the cross-link in Table 1 is based on the numbering of C₇₀ shown in Fig. 32. In addition, the "C (n')" mark where n is an integer, for example, C(2'), in the cross-like column of Table 1 means a carbon atom having the same numbering (n), for example, C(2), of the adjacent molecule of C₇₀. Further, the bonding length in Table 1 means a bonding distance between C-C atoms of a cyclobutane ring constituting the cross-link estimated from the calculated value of the heat of reaction based on the above-described MNDO/AM-1 method.

From the results shown in Table 1, it is found that there is no difference in energy between the anti-symmetric isomers, and that each of the addition reactions between the C(2)-C(4) and between the C(5)-C(6) is an exothermic reaction similar to the above-described exothermic reaction of C₆₀, and the addition reaction between the C(11)-C(12) is a very large endothermic reaction.

While the C(1)-C(2) bond is evidently the single bond, the heats of reaction at the AM-1 and PM-3 levels upon cycloaddition reaction between the C(1)-C(2) are +0.19 kcal/mol and -1.88 kcal/mol, respectively, which values are nearly equal to the heats of reaction of each of C₁₄₀ (g) and C₁₄₀(h) in Table 1. This means that the addition reaction between the C(10)-C(11) does not thermodynamically occur. Accordingly, as the addition polymerization of molecules of C₇₀, the polymerization between the C(2)-C(4) and between the C(5)-C(6) may preferentially occur. Further, the probability that the polymerization between the C(9)-C(10) occurs may be very low.

In addition, the reason why the heat of reaction between the C(11)-C(12) as the single bond is endothermic more than the heat of reaction between the C(1)-C(2) as the single bond may be considered to be due to extremely large strain occurring at the cyclobutane structure of C140(i), particularly, at the C(11)-C(12) bonding.

As a result of comparing the heats of formation of a dimer of C₇₀, a C₇₀-C₆₀ polymer, and C₇₀H2 with each other to evaluate the overlapping effect of a 2Pz lobe (nuclear cloud) of SP² carbons adjacent to the cross-link in the [2 + 2] type cycloaddition polymer, while detailed numerical data is not shown, it is found that the overlapping effect is negligible almost over the C₁₄₀ (a) to C₁₄₀(h).

From the above-described approximate calculation based on the MNDO method, it is found that a spherical carbon polymer composed of a cycloaddition polymer of molecules of C₇₀ can be easily produced by electrolytic polymerization (see Figs. 23 to 31).

A carbonaceous material in which groups allowing hydrogen bonding to protons (H⁺) are introduced, which is used as the carbonaceous material for hydrogen storage according to the present invention, will be described below.

A carbonaceous material mainly containing carbon is taken as a base material, in which groups allowing hydrogen bonding to protons are introduced, to produce a carbonaceous material for hydrogen storage.

Any material mainly containing carbon may be used as the carbonaceous base material.

For example, a carbonaceous material containing carbon clusters as aggregates of carbon atoms or tube-like carbon molecules (so-called nanotubes) can be used as the carbonaceous base material.

Examples of carbon clusters may include fullerenes, carbon molecules each having opening ends of at least part of a fullerene structure, and carbon molecules each having a diamond structure.

The carbonaceous material for hydrogen storage in this embodiment mainly contains a derivative of carbon clusters obtained by introducing groups to carbon atoms constituting the carbon clusters wherein the groups allow or provide hydrogen bonding to protons.

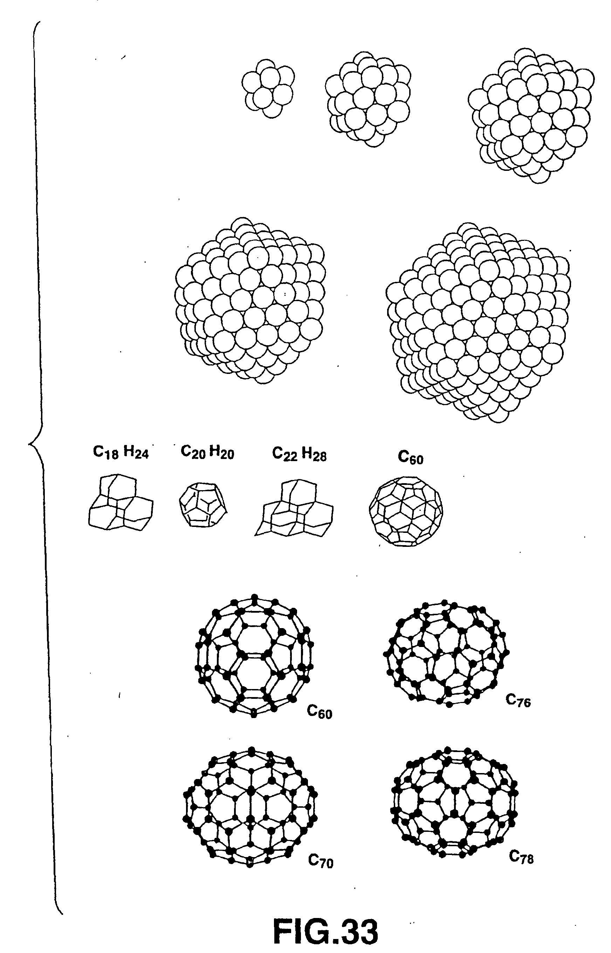

The cluster used for the present invention generally means an aggregate formed by bonding or aggregating atoms in the number of several to several hundreds to each other, and the "cluster mainly containing carbon" used for the present invention means an aggregate formed by bonding carbon atoms in the number of several to several hundreds to each other irrespective of the kind of carbon bonding. Additionally, the cluster mainly containing carbon is not necessarily composed of 100% carbon atoms but may contain other atoms. In this embodiment, an aggregate, in which most of constituent atoms are carbon atoms, is called a carbon cluster. The examples of these aggregates are shown in Figs. 33 to 36, in which groups allowing hydrogen bonding to protons are omitted. The carbon clusters are effectively usable as a raw material of a proton conductor.

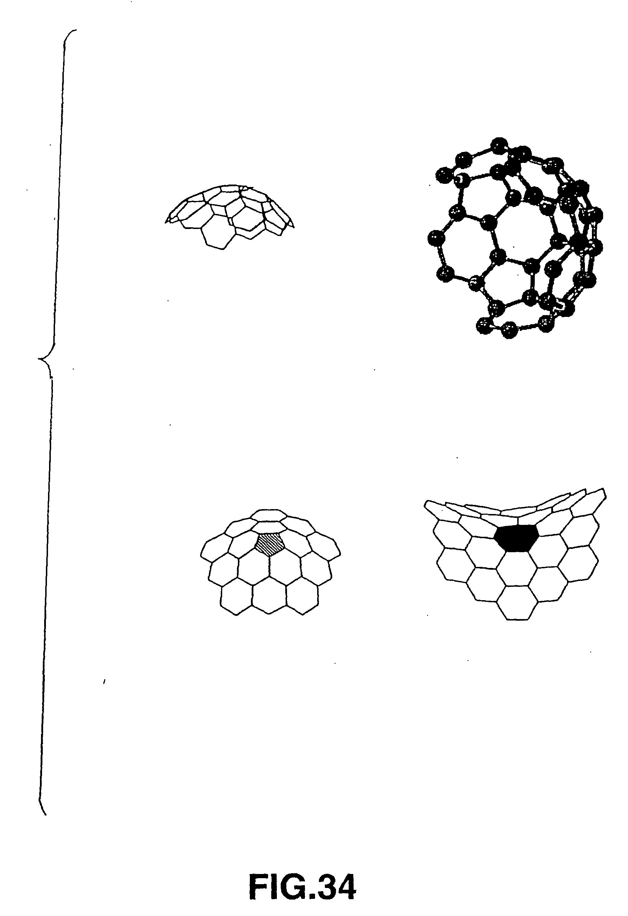

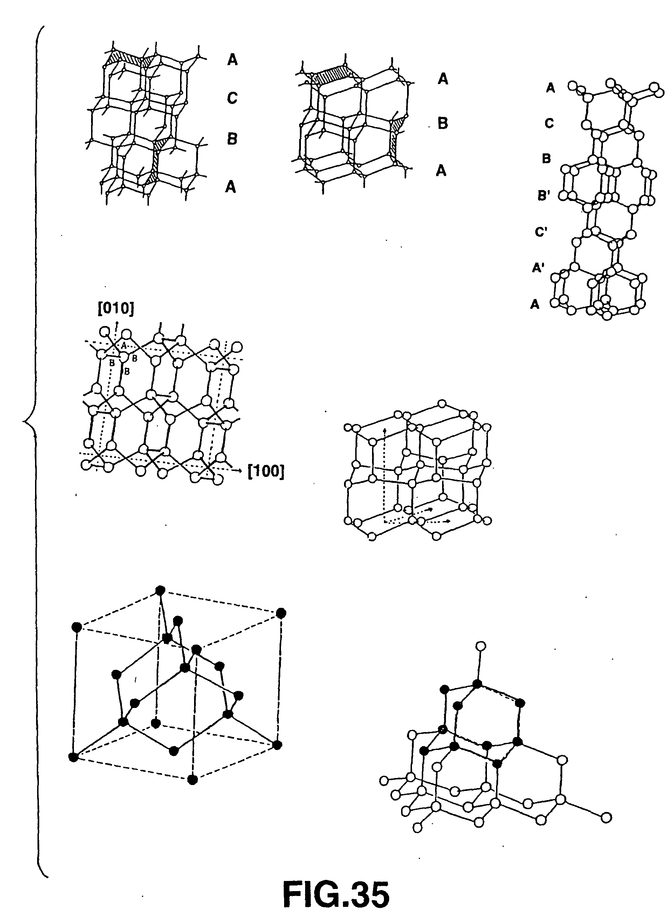

Fig. 33 shows various carbon clusters each having a spherical structure, a fullerene structure, a spheroid structure, or a closed plane structure similar thereto, in each of which a large number of carbon atoms are aggregated. Fig. 34 shows various carbon clusters each having a spherical structure, part of which is lost. The carbon cluster shown in Fig. 34, which is characterized in that the structure has open ends, is often produced as a sub-product during production of fullerenes by arc discharge. Fig. 35 shows various carbon clusters having a diamond structure in which most of carbon atoms of the carbon cluster are bonded to each other in the form of SP³ bonding.

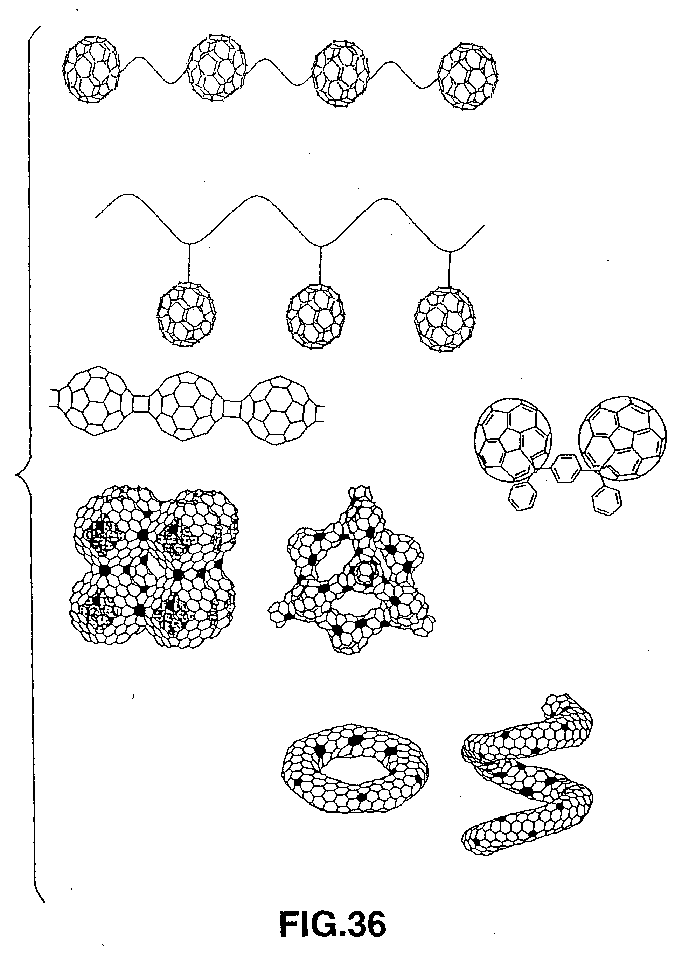

Fig. 36 shows various structures in each of which clusters are bonded to each other. The carbon clusters having such a structure can be applied to the present invention.

According to the present invention, it is required to introduce groups to carbon atoms constituting the above-described carbon clusters wherein the groups allow or provide hydrogen bonding to protons.

The groups allowing hydrogen bonding to protons can be introduced to carbon atoms constituting a carbonaceous base material by baking the carbonaceous base material in a gas atmosphere containing the groups, or treating the carbonaceous base material in a liquid containing the groups.

The carbonaceous base material can be produced, as described above, by the arc discharge process using carbon based electrodes.

To be more specific, substitutional groups are introduced to carbon atoms constituting a carbonaceous base material containing fullerene C₆₀, fullerene C₇₀, carbon nanotubes, fullerene soot, and the like, to produce a carbonaceous material derivative having a good hydrogen storage ability even at a temperature near room temperature. The substitutional groups allow or provide hydrogen bonding to protons, and contain, for example, oxygen atoms, fluorine atoms, nitrogen atoms, sulfur atoms, or chlorine atoms.

The mechanism of hydrogen storage of the carbonaceous material derivative is not perfectly clear but may be considered as follows: namely, to store hydrogen gas in a small volume, it may be effective to separate a hydrogen molecule into hydrogen atoms and further separate hydrogen atoms into protons and electrons; however, the bonding energy between protons and electrons is generally too large to dissociate hydrogen atoms at room temperature.

From this viewpoint, the above-described carbonaceous material derivative, in which the carbon skeleton has a high electron affinity, is easier to attract electrons and to stabilize the electrons thus attracted. For example, the electronegativity (electron acceptability) of fluorine, oxygen, sulfur, or nitrogen introduced in the derivative is 4 for fluorine, 3.5 for oxygen, 2.5 for sulfur, and 3 for nitrogen.

On the other hand, protons derived from hydrogen by electron separation cause hydrogen bonding with oxygen atoms, fluorine atoms, or the like present in the substitutional groups, with a result that hydrogen is kept in a stable energy state. In other words, since the stabilization energy of hydrogen in the state being separated into electrons and protons is large, it is possible to relatively easily ionize hydrogen even at a temperature near room temperature, and hence to store a large amount of hydrogen in the carbonaceous material derivative at the temperature near room temperature.

According to the present invention, fullerene molecules, which are one kind of the carbon clusters as the carbonaceous base material in which the above substitutional groups are to be introduced, are expressed by a chemical formula Cn (n is an even number of 20 or more, preferably, 36, 60, 70, 78, 82 and 84). A mixture of two kinds or more of fullerene molecules may be used.

To introduce the substitutional groups in carbon atoms of the carbonaceous base material, a ratio of the number of carbon atoms to the number of the substitutional groups may be preferably in a range of (10 : 1) to (1 : 1).

The carbonaceous material for hydrogen storage according to the present invention may be composed of one kind or a mixture of two kinds or more of the above-described carbonaceous material derivatives each being produced by introducing the substitutional groups to carbon atoms constituting the carbonaceous base material including fullerene molecules, carbon nanotubes, fullerene soot, and the like.

The substitutional groups can be introduced to carbon atoms of the carbonaceous base material by baking the carbonaceous base material in a gas atmosphere containing groups allowing hydrogen bonding to protons by using a baking system (which will be described later), or by treating the carbonaceous base material in a liquid containing the groups. In the latter case, if the substitutional groups contain sulfur atoms, fuming sulfuric acid may be used as the above liquid, and if the substitutional groups contain nitrogen atoms, benzene (to which a nitrogen oxide gas is bubbled) may be used as the above liquid.

The carbonaceous material thus produced has a desirable hydrogen storage ability. To further enhance the hydrogen storage ability of the carbonaceous material, fine particles of a metal having a catalytic ability capable of dissociating hydrogen molecules into hydrogen atoms and further separating hydrogen atoms into protons and electrons may be supported on at least the surface of the carbonaceous material.

A carbonaceous material composed of molecules having structural bending portions, used as a carbonaceous material for hydrogen storage according to the present invention, will be described below.

A carbonaceous material composed of molecules basically having structural bending portions may be preferably produced by thermally decomposing a carbon-containing compound on the surface of a catalyst composed of at least one kind or more selected from a transition metal, an oxide thereof, and a carbide thereof. The carbonaceous material for hydrogen storage according to the present invention may be a single body of the carbonaceous material thus produced, or a compound of the catalyst and the carbonaceous material produced on the catalyst. The most preferable example of the carbonaceous material produced by thermal decomposition as described above is graphite composed of molecules partially having structural bending portions.

Examples of the above catalysts may include iron, nickel, cobalt, copper, manganese, chromium, vanadium, titanium, zirconium, niobium, molybdenum, ruthenium, palladium, silver, gold, platinum, iridium, tungsten, an oxide thereof, and a carbide thereof. In particular, iron, nickel, cobalt, an oxide thereof, or a carbide thereof may be preferably used as the catalyst.

The carbonaceous material for hydrogen storage can be generated on the surface of the catalyst by thermally decomposing the carbon-containing compound on the catalyst.

As the above carbon-containing compound, there may be used any kind of compound containing carbon atoms; however, from the practical viewpoint, there may be used at least one kind or more selected from toluene, ethylene, acetone, methanol, ethanol, and the like, preferably, toluene and acetone.

In general, the carbon-containing compound in a gaseous state is carried, together with a carrier gas composed of an inert gas such as helium, argon, or nitrogen, followed by thermal decomposition, whereby a carbonaceous material is deposited on the catalyst.

The thermal decomposition temperature may be preferably set at a temperature range of 900°C to 1300°C.

The thermal decomposition process will be more fully described below. First, a carrier gas such as an inert gas fed from a gas tank is bubbled in a carbon-containing compound in a liquid state by a thermal decomposition apparatus (which will be described later in the following examples) to evaporate the carbon-containing compound, and the carbon-containing compound in the gaseous state is fed, together with the carrier gas, in a reaction tube. If the carbon-containing compound is in a gaseous state at room temperature and standard pressure, it may be fed as it is, together with a carrier gas, in the reaction tube.

A catalyst is previously set in the reaction tube which is designed to be heated up to a desired temperature by a heating apparatus.

As the reaction tube is heated, the carbon-containing compound is thermally decomposed on the catalyst, whereby a carbonaceous material is produced on the surface of the catalyst. After termination of the reaction, the carbonaceous material is taken, together with the catalyst, out of the reaction tube. The carbonaceous material may be used as a composite with the catalyst, or may be removed from the catalyst by oxide treatment.

A reducing gas such as hydrogen may be preferably added to and mixed in the carrier gas. This exhibits an effect of improving the hydrogen storage ability of the carbonaceous material. The reason for this may be considered that a reducing gas partially reacts with amorphous carbon as a reaction sub-product, to increase the production yield of a carbonaceous component having a high hydrogen storage ability.

The ratio of the reducing gas mixed in the carrier gas may be set in a range of 0 to 100%.

The thermal decomposition temperature may be basically set at a temperature at which the carbonaceous material can be produced on the catalyst; however, as described above, it may be preferably set in a range of 900°C to 1300°C. If the temperature is less than 900°C, a layer structure of carbon cannot be produced and instead an amorphous carbon is produced. If the temperature is more than 1300°C, a stable graphite structure having no defects and bending portions is grown. Such a stable graphite produced at a high temperature is undesirable for the carbonaceous material for hydrogen storage according to the present invention.

The reason why the carbonaceous material thus produced exhibits a high hydrogen storage ability is not perfectly clear but is suggested as follows: A carbonaceous material produced by thermal decomposition of a gaseous carbon-containing compound is grown on the bent surfaces of fine particles of a catalyst, and accordingly, a layer structure such as a graphite structure of each molecule of the carbonaceous material is partially bent. At such a bending portion of the molecule, the degeneration of an energy level of electrons is released and the energy level is reduced to a deeper stable energy level. At the same time, the carbon molecule become semiconductive. The deeper energy level exerts an effect on electrons of a hydrogen molecule, to make the dissociation of the molecular bond of the hydrogen molecule easier. Since the decomposition of a hydrogen molecule into hydrogen atoms is essential to store a large amount of hydrogen, such a bent structure of each molecule of the carbonaceous material is important to enhance the hydrogen storage ability of the carbonaceous material. Alternatively, it may be considered that electrons of hydrogen are partially migrated to the above deeper energy level, with a result that part of hydrogen is kept stable in the form of protons.

In any event, it is a very important to certainly produce a carbonaceous material composed of molecules having structural bending portions, and the originality of the present invention lies in efficiently realizing the process of producing such a carbonaceous material composed of molecules having structural bending portions.

A material for hydrogen storage, composed of a carbonaceous material on which fine particles of a metal having a catalytic ability capable of separating a hydrogen molecule into hydrogen atoms and further separating hydrogen atoms into protons and electrons are supported, will be described below.

An average particle size of the fine particles of the catalytic metal to be supported on the carbonaceous material may be in a range of 1 micrometer or less, preferably, 100 nanometer (nm) or less.

The content of the fine particles of the catalytic metal in the carbonaceous material may be as small as 10 wt% or less by weight of the carbonaceous material. The reason for this will be described later.

Examples of the catalytic metals may include platinum, palladium, magnesium, titanium, manganese, lanthanum, vanadium, zirconium, a platinum alloy, nickel-lanthanum alloy, and a titanium-iron alloy. Of these metals, platinum or a platinum alloy may be preferably used.

By supporting the catalytic metal in the form of fine particles on the carbonaceous material, it is possible not only to significantly promote the catalytic reaction of the carbonaceous material but also to significantly reduce the supported amount of an expensive catalytic metal such as platinum.

The catalytic metal may be supported on the carbonaceous material by a chemical supporting process using a solution containing a platinum complex, or by an arc discharge process using a platinum-containing electrode. The chemical supporting process involves putting the carbonaceous material in a solution obtained by adding sodium hydrogensulfite or hydrogen peroxide in a water-solution of chloroplatinic acid, followed by agitation of the solution. This process, which is used for preparation of a catalytic electrode of a fuel cell, is sometimes called a liquid-phase chemical supporting process.

The arc discharge process involves partially incorporating platinum or a platinum alloy in an electrode portion, and generating arc discharge by applying a current to the electrode portion to evaporate platinum or the platinum alloy, thereby depositing it on the carbonaceous material contained in a chamber.

Examples of the carbonaceous materials, on each of which the catalytic metal is to be supported, may include fullerene molecules, a polymer of fullerene molecules, carbon nanotubes, a carbonaceous material having a partial fullerene structure, a carbonaceous material derivative obtained by introducing groups to a carbonaceous material wherein the groups allow or provide hydrogen bonding to protons, and a mixture thereof.

A fullerene molecule is composed of only carbon atoms expressed by a general chemical formula Cₙ (n is an even number of at least 20 of the carbon atoms capable of forming a geometrically spherical structure). One kind or a mixture of fullerene molecules Cₙ may be used as the carbonaceous material. Preferably, one kind or a mixture of fullerene C₆₀ (see Fig. 8) and fullerene C₇₀ (see Fig. 9), to which higher fullerenes (C₇₈, C₈₀, C₈₂, C₈₄, ... ) may be further added, are used as the carbonaceous material. These fullerene molecules can be easily and inexpensively produced by an arc discharge process using carbon electrodes.

The polymerization degree of a polymer of fullerene molecules used for the present invention is not particularly limited; however, in general, it is relatively small depending on the production process of the polymer. A polymer of fullerene C₆₀ produced by plasma polymerization, having a polymerization degree of 2, has a structure shown in Figs. 10A and 10B, and a polymer having a polymerization degree of 3 has a structure shown in Fig. 13. Even for a polymer of fullerene C₇₀, the polymerization degree thereof is, in general, relatively small.

Aradio-frequency plasma polymerization process, a DC plasma polymerization process, an ECR plasma polymerization process, or a micro-wave plasma polymerization process can each be used as the plasma polymerization process for producing a polymer of fullerene molecules. Of these processes, a radio- frequency plasma polymerization process is most widely available. The radio-frequency plasma polymerization process involves putting a vessel containing fullerene molecules in a reaction chamber; evacuating the inside of a reaction chamber and filling it with an inert gas such as argon; heating the vessel containing the fullerene molecules by applying a current thereto, to evaporate the fullerene molecules; applying a radio-frequency voltage from a radio-frequency power source between opposed electrodes, to generate a radio-frequency plasma; and irradiating the evaporated fullerene molecules with the radio-frequency plasma generated, to excite the fullerene molecules, thereby producing a film-like plasma polymer on a base or the like set in the reaction chamber.

Additionally, according to the present invention, it may be desirable that carbon nanotubes be contained in fullerene molecules and/or a polymer thereof. Carbon nanotubes are often contained in soot produced, together with fullerene molecules, upon arc discharge using carbon electrodes.

The reason why fullerene molecules or a polymer thereof are desirably used in the present invention is that a carbonaceous material mainly containing fullerene molecules or a polymer thereof can store a large amount of hydrogen. To be more specific, since carbon atoms constituting a carbonaceous material composed of fullerene molecules or a polymer thereof have a relatively low LUMO (Lowest Unoccupied Molecular Orbital) level, hydrogen atoms or protons derived from hydrogen by the catalytic ability of fine particles of a catalytic metal are easier to be stabilized in the carbonaceous material, with a result that a large amount of hydrogen is stably stored in the carbonaceous material.

Such an effect, that is, a high hydrogen storage ability is not limited to the above-described fullerene molecules or a polymer thereof, but is common to other carbonaceous materials having the same mechanism.

The above-described various kinds of carbonaceous materials for hydrogen storage are extensively applicable to systems requiring the supply of hydrogen, for example, automobiles, ships, and small-sized household power supplies and appliances.

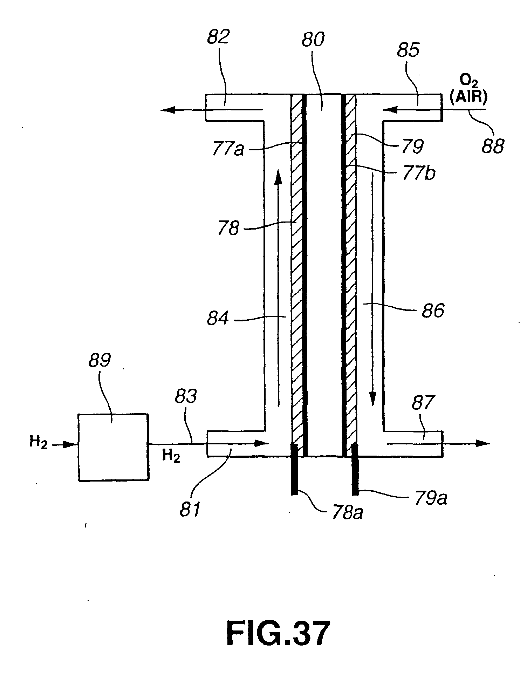

For example, the above-described carbonaceous material for hydrogen storage can be applied to specific configurations of cells, such as an alkali battery, an air cell, and a fuel cell by making effective use of the merit, that is, the hydrogen storage ability of the carbonaceous material. Here, the schematic configuration of a fuel cell will be described with reference to Fig. 37. It should be noted that the alkali battery and air cell will be described later in the following examples.

Referring to Fig. 37, the fuel cell has a negative electrode (fuel electrode or hydrogen electrode) 78 having a terminal 78a and a positive electrode (oxygen electrode) 79 having a terminal 79a. The negative electrode 78 and positive electrode 79 are opposed to each other. A catalyst 77a is in close-contact with or dispersed in the negative electrode 78, and a catalyst 77b is in close-contact with or dispersed in the positive electrode 79. A proton conductor portion 80 is held between both the electrodes 78 and 79. In operation of the fuel cell, on the negative electrode 78, hydrogen is supplied from an inlet 81 and is discharged from an outlet 82 (which may be sometimes omitted). In a period during which fuel (H₂) 83 passes through a flow passage 84, protons are derived from the fuel 83. The protons migrate to the positive electrode 79 side together with protons generated from the proton conductor portion 80 and react with oxygen (air) 88 flowing in a flow passage 86 in the direction from an inlet 85 to an outlet 87, to generate a desired electromotive force.

In the fuel cell having the above configuration, the carbonaceous material of the present invention is contained a hydrogen supply source 89. In addition, the carbonaceous material in which hydrogen is previously stored may be contained in the hydrogen supply source 89.

In the fuel cell having such a configuration, since protons dissociated in the proton conductor portion 80 are migrated from the negative electrode 78 to the positive electrode 79, the conductivity of protons can be enhanced. Here, a proton conductor disclosed in PCT/JP00/04864 may be used as the proton conductor portion 80. Since the proton conductor disclosed in PCT/JP00/04864 can eliminate a need for the use of a humidifier or a humidifying environment (which is commonly known and required for conductance of protons), the system can be simplified and also the weight of the system can be reduced.

The present invention will be more clearly understood by way of the following examples:

### Example 1

The inside of a reaction chamber of an arc discharge system shown in Fig.1 was filled with an atmosphere of helium gas and kept at a pressure of 100 Torr (1.33×10⁴ Pa). An anode 3 was formed by each of a carbon rod containing 4 wt% of iron and 4 wt% of nickel and a carbon rod containing 2 wt% of platinum, and a cathode 2 was formed by a carbon (graphite) rod.

A DC voltage was applied between the anode 3 and cathode 2 for 30 min, to generate arc discharge therebetween. Soot of a carbonaceous material for hydrogen storage, which was deposited on the inner surface of the reaction chamber and on the cathode 2 by arc discharge, was collected.

The carbonaceous material in the form of soot was ground in a mortar, to which platinum as a catalyst was added. The platinum-supported carbonaceous material was taken as a sample.

The sample was fully dried, and was enclosed in an ampoule with a frit-mesh plug for evaluation of the hydrogen storage ability of the sample. First, the ampoule was enclosed in a measurement vessel, evacuated for 30 min while being raised up to 150°C, cooled again and kept at a hydrogen pressure of 100 atm, and was left for 24 hr in such a state. After removal of the sample from the measurement vessel, the hydrogen storage amount of the sample was evaluated by using an integrating flowmeter. As a result, it was found that the sample had a hydrogen storage ability of 100 ml/g.

For comparison, a comparative sample with no catalyst such as iron, nickel or platinum was prepared in the same manner as described above, and was subjected to evaluation of the hydrogen storage ability in the same manner as described above. As a result, it was found that the comparative example has a hydrogen storage ability of about 5 ml/g.

### Example 2

In this example, an alkali battery was produced by using a carbonaceous material produced in Example 1.

### <Preparation of Positive Electrode>

A paste was prepared by adding 3 wt% of carboxymethylcellulose and water to 10 g of particles of nickel hydroxide having an average particle size of 30 micrometer and 1 g of cobalt hydroxide, and kneading the resultant mixture. A sponging porous nickel member having a porosity of 95% was filled with the above paste, followed by drying and pressurization, and was punched to prepare a positive electrode having a diameter of 20 mm and a thickness of 0.7 mm.

### <Preparation of Negative Electrode>

A paste was prepared by adding 5 wt% of carboxymethylcellulose and water to the carbonaceous material for hydrogen storage (on which platinum was supported) produced in Example 1, and kneading the resultant mixture. A sponging porous nickel member having a porosity of 95% was filled with the above paste, followed by drying and pressurization, and was punched to prepare a negative electrode having a diameter of 20 mm and a thickness of 0.5 mm.

### <Production of Alkali Battery>

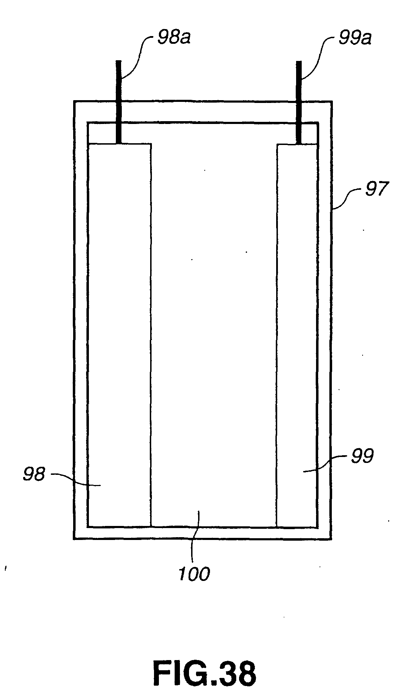

An alkali battery (secondary battery) was produced by using a water solution of potassium hydroxide having a concentration of 7N as an electrolyte as well as the positive electrode and negative electrode prepared in the above-described steps. The structure of the alkali battery thus produced is schematically shown in Fig. 38.

Referring to Fig. 38, a positive electrode 98 and a negative electrode 99 are built in a battery container 97 with an electrolyte 100 put between the electrodes 98 and 99, and a positive electrode lead 98a and a negative electrode lead 99a are extended out of the battery container 97.

### <Charging/discharging Characteristic>

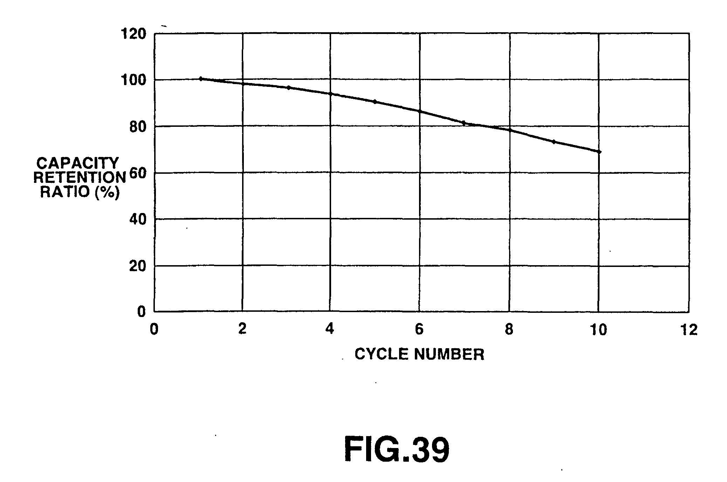

The above alkali battery was subjected to a charging/discharging test under a condition with 0.1 C, upper limit of 1.4 V and lower limit 0.8 V. The cycle characteristic is shown in Fig. 39. As is apparent from Fig. 39, it was found that the alkali battery exhibited a basic charging/discharging characteristic although the cycle life was not insufficient because of the battery structure.

### Example 3

In this example, an air cell was produced by using the carbonaceous material produced in Example 1.

### <Preparation of Air Electrode>

A platinum-supported carbonaceous material for hydrogen storage was produced in the same manner as that described in Example 1. The carbonaceous material and an alcohol solution of a perfluorosulfonic acid based high polymer electrolyte were dispersed in n-butyl acetate, to prepare a catalytic slurry.

A carbon non-woven fabric having a thickness of 250 micrometer was subjected to water-repellent finishing by dipping the carbon non-woven fabric in an emulsion of a fluorine based water-repellent agent, followed by drying, and heating it at 400°C. The carbon non-woven fabric was cut into a size of 4 cm×4 cm, and one surface thereof was coated with the above catalytic slurry.

### <Joining Air Electrode to High Polymer Electrolyte Film>

A perfluorosulfonic acid based high polymer electrolyte film having a thickness of 50 micrometer was joined to the surface, coated with the catalytic slurry, of the carbon non-woven fabric, followed by drying, to obtain the air electrode joined to the high polymer electrolyte film.

### <Preparation of Hydrogen Electrode>

A paste was prepared by adding 5 wt% of carboxymethylcellulose and water to the same platinum-supported carbonaceous material as that used for preparation of the above air electrode, and kneading the resultant mixture. A sponging porous nickel member having a porosity of 95% was filled with the above paste, followed by drying and pressurization, and was cut into a size of 4 cm×4 cm, to prepare a hydrogen electrode having a thickness of 0.5 mm.

### <Production of Air Cell>

The hydrogen electrode was stacked to the joined body of the air electrode and the high polymer electrolyte film, with the high polymer electrolyte film put between both the electrodes, and the outer surfaces of the stack were put between teflon sheets of 3 mm in thickness and fixed thereto with bolts. Additionally, the teflon sheet disposed on the air electrode side has a number of holes of 1.5 mm in diameter for smoothly supplying air to the air electrode.

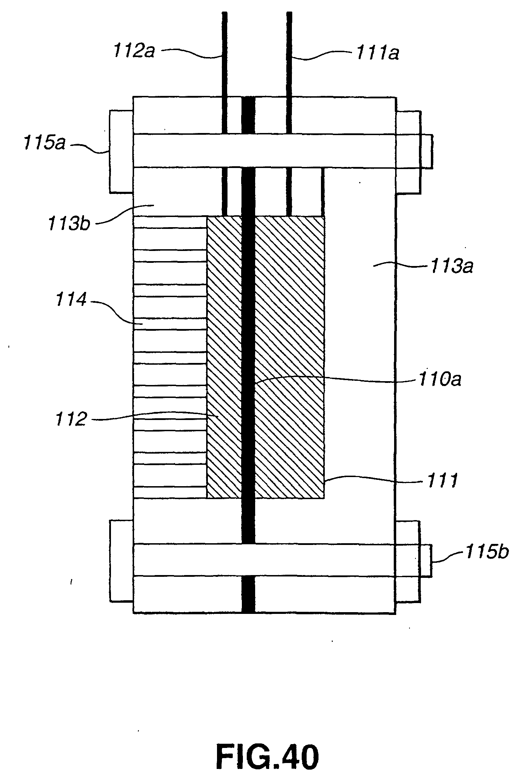

The structure of the air cell thus assembled is schematically shown in Fig. 40.

Referring to Fig. 40, a hydrogen electrode 111 and air electrode 114 are oppositely disposed with a high polymer electrolyte film 110a put therebetween, and the outer surfaces of the stack are put between a teflon sheet 113a and a teflon sheet 113b having a number of air holes 114 and fixed thereto with bolts 115a and 115b. A hydrogen electrode lead 111a and an air electrode lead 112a are extended out of the air cell.

### <Discharging Characteristic of Air Cell>

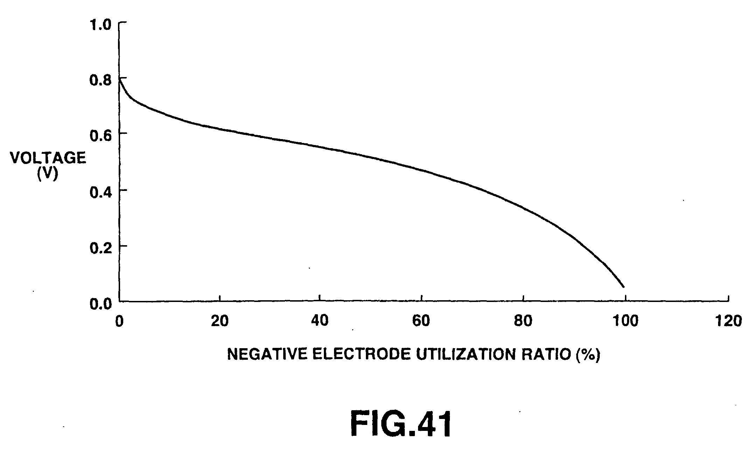

The discharging characteristic of the air cell was examined as follows. The air cell was charged at a current density of 1 mA/cm², hydrogen was stored in the hydrogen electrode, and the air cell was discharged at a current density of 1 mA/cm². As a result, the discharging characteristic shown in Fig. 41 was obtained, which showed that the air cell had a sufficient discharging capability.

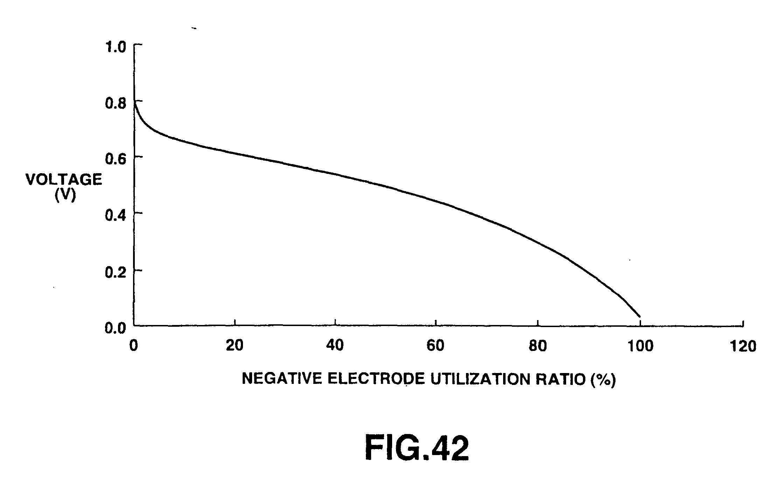

Additionally, the above air cell was assembled by previously storing hydrogen in the hydrogen electrode at a pressure of 100 kg/cm² and stacking the hydrogen electrode to the above joined body, and the discharging characteristic thereof was measured at a current density of 1 mA/cm². As a result, the discharging characteristic shown in Fig. 42 was obtained, which showed that the air cell had a sufficient discharging capability.

### Example 4

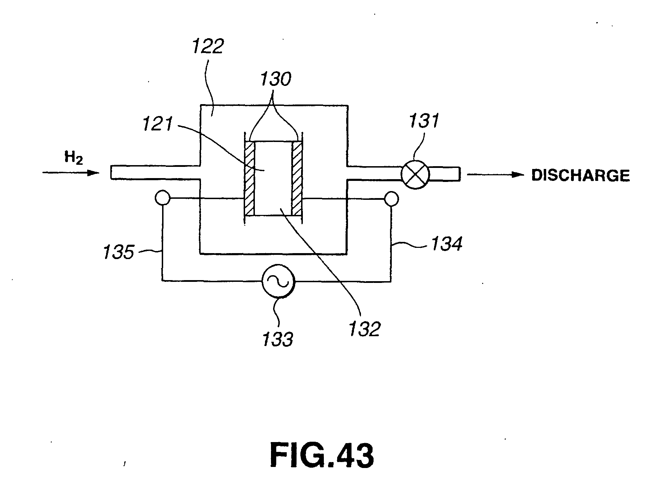

The measurement of a complex impedance will be described below with reference to Fig.43. Referring to Fig. 43, a platinum-supported C₆₀ sample 132 having a hydrogen storage ability of about 110 ml/g, formed into a pellet 121, was held between aluminum electrodes 130, and was enclosed in a pressure chamber 122. Hydrogen was fed in the pressure chamber 122 and was discharged therefrom via a valve 131. The complex impedance was measured by applying a voltage from a power supply 133 between the electrodes 130 by way of lines 134 and 135 under a condition with an amplitude voltage of 0.1 V in a frequency region from 0.1 Hz to 10 MHz. Additionally, all the following measurements were performed in the same frequency region.

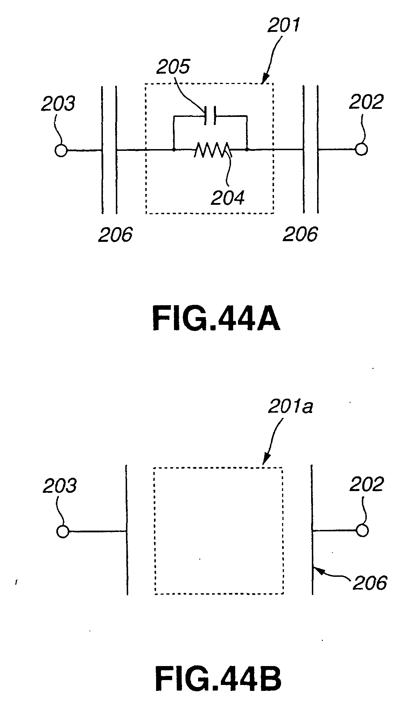

With respect to the impedance measurement, the pellet-shaped carbonaceous material in this example electrically constitutes an equivalent circuit shown in Fig. 44A. Referring to Fig. 44A, a carbonaceous material 201 is expressed by a parallel circuit of a resistance 204 and a capacitance 205, and a capacitance 206 is formed between a first pole 202 and the carbonaceous material 201, and a capacitance 206 is formed between the carbonaceous material 201 and a second pole 203. In addition, the capacitance 205 represents a lag effect upon migration of charged particles (phase lag at a high frequency), and the resistance 204 represents a parameter of non-mobility of charged particles.

Here, a complex impedance Z is expressed by an equation of Z = Re(Z) + i Im (Z). The frequency dependence of the carbonaceous material expressed by the above equivalent circuit was examined as follows:

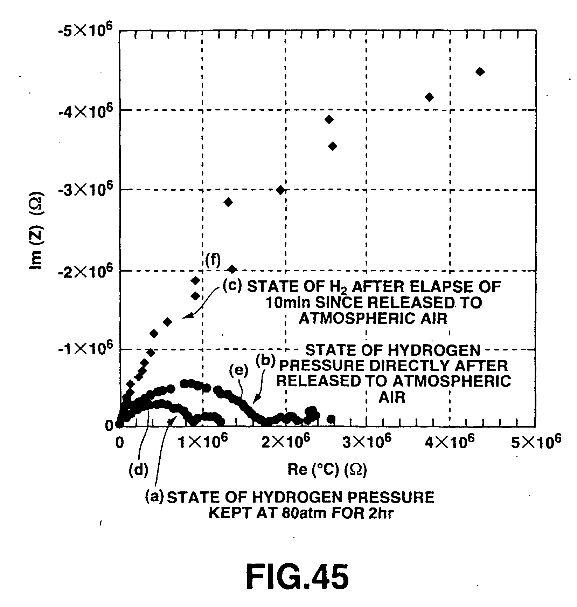

The complex impedance of the sample (platinum-supported fullerene C₆₀ as the carbonaceous material having a hydrogen storage ability) was measured in each of three states (a), (b), and (C). The state (a) was a state that after supply of hydrogen in the pressure chamber 122, the hydrogen pressure was kept at 80 atm for 2 hr; the state (b) was a state directly after the hydrogen pressure was released to atmospheric air; and the state (c) was a state after an elapse of 10 min since the hydrogen pressure was released to atmospheric pressure. The results are shown in Fig. 45. First, in the measurement in the state (a) that the hydrogen pressure was kept at 80 atm for 2 hr, a signal due to migration of charged particles was clearly observed. That is to say, as shown in Fig.45, there appears a very smooth single flattened circular-arc (d) in a high frequency portion. This means that a certain conduction behavior of charged particles occurred in the pellet 121 in the state (a).

As the result of the measurement in the state (b) directly after the hydrogen pressure was released to atmospheric pressure, there appears a circular-arc (e) which is larger than the circular-arc (d), and as the result of the measurement in the state (c) after an elapse of 10 min since the hydrogen pressure was released to atmospheric pressure, there appears a circular-arc (f) which is much larger than the circular arc (e). In the complex impedance, the diameter of a circular-arc on the coordinate axis indicating the real number is equivalent to the resistance 204 of the equivalent circuit shown in Fig. 44A, and can be regarded as a direct current resistance component of a sample. Accordingly, the above-described measured results mean that the impedance of the measurement system becomes larger as the released amount of the hydrogen gas from the carbonaceous material becomes larger.

The reason for this may be considered that the number of charged particles derived from hydrogen becomes smaller with elapsed time upon the release of the hydrogen gas from the carbonaceous material.

Of the charged particles, electrons whose masses are very small cannot be measured in the frequency region from 0.1 Hz to 10 MHz used for this measurement (to observe electrons, an AC voltage at a frequency of several hundreds or more of MHz must be applied). As a result, taking into account the configuration of the measurement system, any charged particles except for protons (H⁺) cannot be considered as the charged particles derived from hydrogen.

For comparison, the same sample as that described above was put in a nitrogen atmosphere, and the frequency characteristic of the complex impedance thereof was measured. As a result, no circular-arc as described above was present, and instead a behavior nearly similar to that a single capacitor expressed by an equivalent circuit shown in Fig. 44B was observed. The equivalent circuit includes an insulator 201a disposed within a capacitor 206 and between a first electrode 202 and second electrode 203 of the capacitor as further shown in Fig. 44B.

This suggests that the carbonaceous material of the present invention has protons derived from hydrogen as charged particles.

Accordingly, the above-described experimental results support the fact that the carbonaceous material of the present invention stores hydrogen in the form of protons.

### Example 5

A carbonaceous material for hydrogen storage was produced by the arc discharge process as follows. The inside of the reaction chamber 1 of the arc discharge system shown in Fig.1 was filled with an atmosphere of helium gas and kept at a pressure of 100 Torr (1.33×10⁴ Pa). A direct voltage was applied between the anode 3 and cathode 2 for 30 min, to generate arc discharge. After termination of arc discharge, a carbonaceous soot material deposited on the inner surface of the reaction chamber 1 and a carbonaceous material for hydrogen storage deposited and grown on the cathode 2 were collected. These materials were ground in a mortar or the like and dispersed in sulfuric acid by an ultrasonic dispersion process, to which potassium permanganate was added, followed by heating for removing amorphous carbon by oxidation, to obtain a sample (carbon nanotubes). The work function of the sample was measured by a PEE (Photo Electron Emission) method. The result is shown in Fig.4, from which it is revealed that the work function of the sample is 5.15 eV. The sample was then left for about one day in a hydrogen atmosphere at room temperature under 100 atm, and the hydrogen storage ability thereof was measured. As a result, it was found that the sample stored hydrogen in an amount of about 5 ml/g.

### Example 6

In this example, platinum as a catalyst was added to the carbonaceous material produced in Example 5, and the hydrogen storage ability thereof was measured.

The platinum-supported sample was left for about one day in a hydrogen atmosphere at room temperature under 100 atm, and the amount of hydrogen stored in the sample was measured. As a result, it was found that the sample stored hydrogen in an amount of about 150 ml/g.

### Example 7

A platinum-supported fullerene C₆₀ as a semiconductor material produced in the same manner as that described in Example 4 was taken as a sample, and the complex impedance of the sample was measured in the same manner as that described in Example 4. The complex impedance of the sample in the state before hydrogen storage performed at 80 atm was compared with the complex impedance of the sample after hydrogen storage. The result is shown in Fig. 3. Here, the hydrogen storage ability of the sample is previously determined at 2 wt%, and as shown in Fig. 3, the direct current resistance component of the complex impedance of the sample in the state after hydrogen storage is at least about an order of magnitude smaller than that in the state before hydrogen storage.

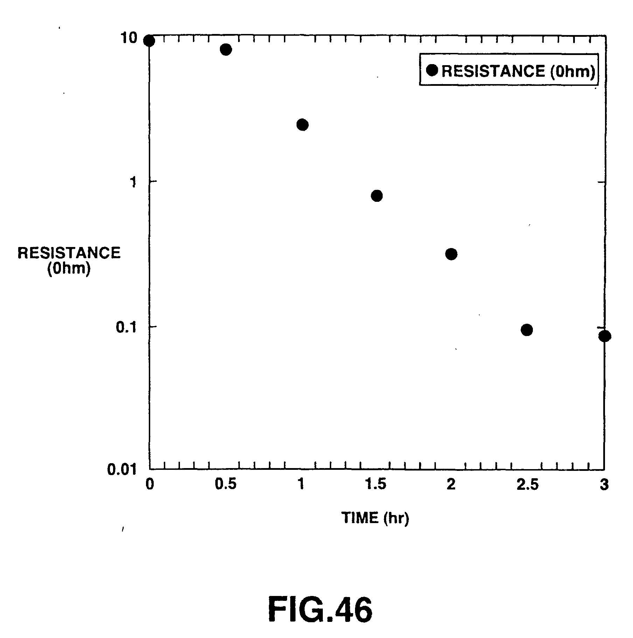

Next, with respect to multi-wall carbon nanotubes (MWCNTs) as a conductive material, a change in complex impedance between the states before and after hydrogen storage was examined. That is to say, a difference in resistance component of the sample between the states before and after hydrogen storage performed in a hydrogen atmosphere of 80 atm was measured. The result is shown in Fig. 46. Here, the hydrogen storage ability of the sample is previously determined at 4 wt%, and as shown in Fig. 46, the resistance component of the sample in the state after hydrogen storage is about two orders of magnitude smaller than that in the state before hydrogen storage. This result is not inconsistent with the above-described result of measurement of the platinum-supported fullerene C₆₀. In addition, it was experimentally confirmed that, for a sample having no hydrogen storage ability, there was little change in resistance component.

### Example 8

In this example, a fullerene fluoride as a carbonaceous material for hydrogen storage was produced by enclosing fluorine gas and a carbonaceous material in an ampoule and heating them for 3 hr at 300°C. The hydrogen storage ability of the sample was measured. As a result, it was found that the sample had a hydrogen storage ability of about 110 ml/g. The complex impedance of the sample was then measured. As a result, a clear signal due to the presence of protons like the signal shown in Fig. 45 was observed.

In this way, it was revealed that even the sample, in which fluorine as an electron doner was added to the carbonaceous material for hydrogen storage, exhibited the hydrogen storage ability like the samples in the previous examples.

It was also revealed that the mixture of the carbonaceous material for hydrogen storage and a transition metal (for example, platinum) functioning as catalyst was effective for increasing the hydrogen storage ability of the sample, and that the mixture of the carbonaceous material and fluorine or amine based molecules such as ammonia functioning as an electron doner was effective for charge separation.

### Example 9

A method of producing a carbonaceous material for hydrogen storage by a CVD process will be described below.

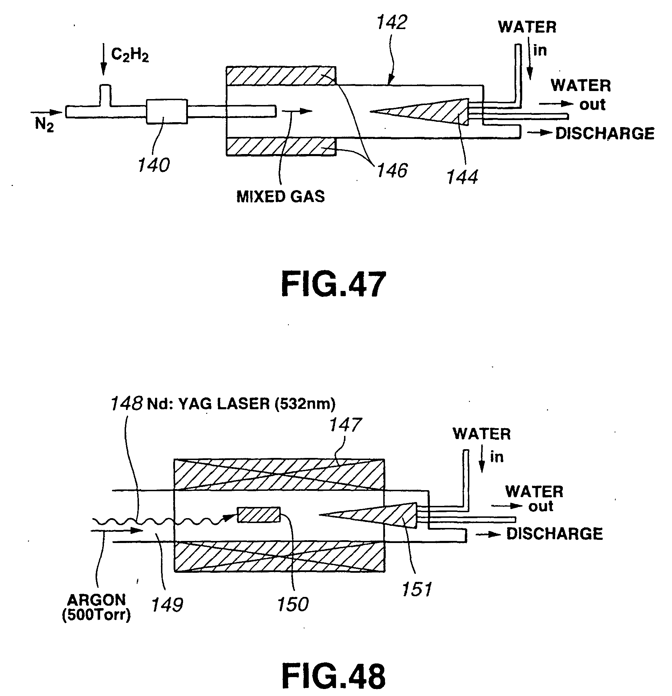

A carbonaceous material for hydrogen storage was produced by using a CVD system shown in Fig. 47. The inside of a pressure chamber 142 was kept at 10⁻³ Torr (0.133 Pa), and N₂ gas and C₂H₂ gas were fed into the pressure chamber 142 at flow rates of 120 ml/min and 15 ml/min, respectively. The N₂ gas and C₂H₂ gas mixed by a mass flow controller 140 were heated at 700°C in a heater 146, to produce carbon molecules by decomposition of the mixed gas. The carbon molecules were brought into contact with a water-cooled copper-made needle 144 (i.e., a copper-made needle cooled by the in and out flow of water as identified in Fig. 47) disposed in the pressure chamber 142, to be trapped on the copper-made needle 144, whereby a carbonaceous material was produced. The reaction time was set at about one hour. After reaction, the carbonaceous material was collected, which was then mixed with 10 wt% of platinum black by weight of the carbonaceous material. The resultant mixture was ground in a mortar, and the hydrogen storage ability thereof was measured in the same manner as that described above. As a result, it was found that the carbonaceous material containing platinum black had a hydrogen storage ability of about 100 ml/g.

### Example 10

A method of producing a carbonaceous material for hydrogen storage by a laser abrasion process will be described below.

A carbonaceous material for hydrogen storage was produced by using a laser abrasion system shown in Fig. 48. A graphite target 150 was disposed in a furnace 149 kept at 1200°C by a heater 147. An Nd:YAG laser 148 (wavelength: 532 nm, 300 mJ/pulse) was used as an excitation light source. The inside of the furnace 149 was filled with the flow of argon and was kept at 500 Torr (6.65×10⁴ Pa), and the graphite target 150 was irradiated with a laser beam emitted from the Nd:YAG laser 148, to produce carbon molecules by decomposition of graphite. The carbon molecules were collected on a water-cooled copper-made needle 151 (i.e., a copper-made needle cooled by the in and out flow of water as further identified in Fig. 48) disposed on the downstream side from the graphite target 150, whereby a carbonaceous material was produced. The carbonaceous material was mixed with 10 wt% of platinum black by weight of the carbonaceous material. The resultant mixture was ground in a mortar, and the hydrogen storage ability thereof was measured in the same manner as that described above. As a result, it was found that the carbonaceous material containing platinum black had a hydrogen storage ability of about 951 ml/g.

### Example 11

In this example, an alkali battery was produced as follows:

### <Preparation of Positive Electrode>

A paste was prepared by adding 3 wt% of carboxymethylcellulose and water to 10 g of particles of nickel hydroxide having an average particle size of 30 micrometer and 1 g of cobalt hydroxide, and kneading the resultant mixture. A sponging porous nickel member having a porosity of 95% was filled with the above paste, followed by drying and pressurization, and was punched to prepare a positive electrode having a diameter of 20 mm and a thickness of 0.7 mm.

### <Preparation of Negative Electrode>

A paste was prepared by adding 5 wt% of carboxymethylcellulose and water to a carbonaceous material for hydrogen storage (on which platinum was supported) produced in the same manner as that described in Example 7, and kneading the resultant mixture. A sponging porous nickel member having a porosity of 95% was filled with the above paste, followed by drying and pressurization, and was punched to prepare a negative electrode having a diameter of 20 mm and a thickness of 0.5 mm.

### <Production of Alkali Battery>

An alkali battery (secondary battery) was produced by using a water solution of potassium hydroxide having a concentration of 7N as an electrolyte as well as the positive electrode and negative electrode prepared in the above-described steps. The structure of the alkali battery thus produced is schematically shown in Fig. 38.

### <Charging/discharging Characteristic>

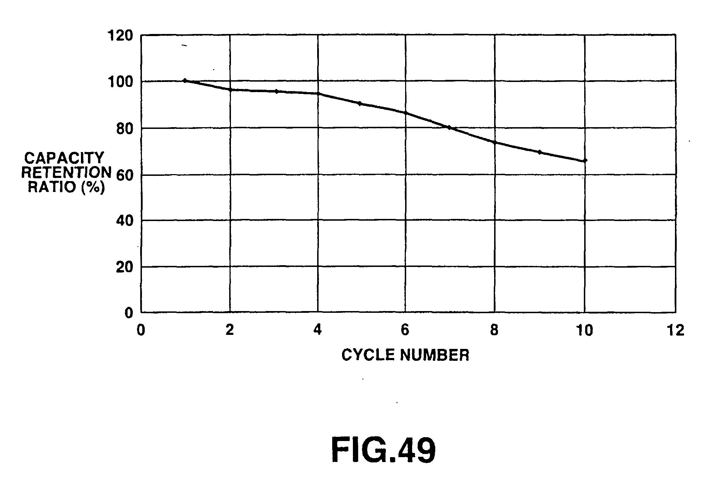

The above alkali battery was subjected to a charging/discharging test under a condition with 0.1 C, upper limit of 1.4 V and lower limit 0.8 V. The cycle characteristic is shown in Fig. 49. As is apparent from Fig. 49, it was found that the alkali battery exhibited a basic charging/discharging characteristic although the cycle life was not insufficient because of the battery structure.

### Example 12

In this example, an air cell was produced as follows:

### <Preparation of Air Electrode>

A platinum-supported carbonaceous material for hydrogen storage was produced in the same manner as that described in Example 7. The carbonaceous material and an alcohol solution of a perfluorosulfonic acid based high polymer electrolyte were dispersed in n-butyl acetate, to prepare a catalytic slurry.

A carbon non-woven fabric having a thickness of 250 micrometer was subjected to water-repellent finishing by dipping the carbon non-woven fabric in an emulsion of a fluorine based water-repellent agent, followed by drying, and heating it at 400°C. The carbon non-woven fabric was cut into a size of 4 cm×4 cm, and one surface thereof was coated with the above catalytic slurry.

### <Joining Air Electrode to High Polymer Electrolyte Film>

A perfluorosulfonic acid based high polymer electrolyte film having a thickness of 50 micrometer was joined to the surface, coated with the catalytic slurry, of the carbon non-woven fabric, followed by drying, to obtain the air electrode joined to the high polymer electrolyte film.

### <Preparation of Hydrogen Electrode>

A paste was prepared by adding 5 wt% of carboxymethylcellulose and water to the same platinum-supported carbonaceous material as that used for preparation of the above air electrode, and kneading the resultant mixture. A sponging porous nickel member having a porosity of 95% was filled with the above paste, followed by drying and pressurization, and was cut into a size of 4 cm×4 cm, to prepare a hydrogen electrode having a thickness of 0.5 mm.

### <Production of Air Cell>

The hydrogen electrode was stacked to the joined body of the air electrode and the high polymer electrolyte film, with the high polymer electrolyte film put between both the electrodes, and the outer surfaces of the stack were put between teflon sheets of 3 mm in thickness and fixed thereto with bolts. Additionally, the teflon sheet disposed on the air electrode side has a number of holes of 1.5 mm in diameter for smoothly supplying air to the air electrode.

The structure of the air cell thus assembled is schematically shown in Fig. 40.

### <Discharging Characteristic of Air Cell>

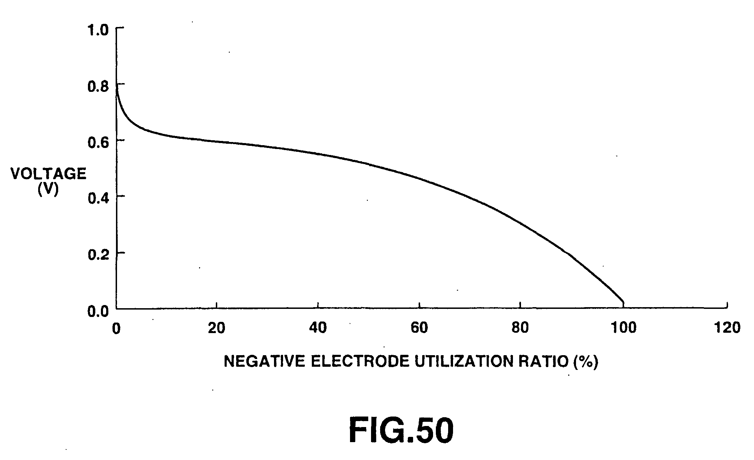

The discharging characteristic of the air cell was examined as follows. The air cell was charged at a current density of 1 mA/cm², hydrogen was stored in the hydrogen electrode, and the air cell was discharged at a current density of 1 mA/cm². As a result, the discharging characteristic shown in Fig. 50 was obtained, which showed that the air cell had a sufficient discharging function.

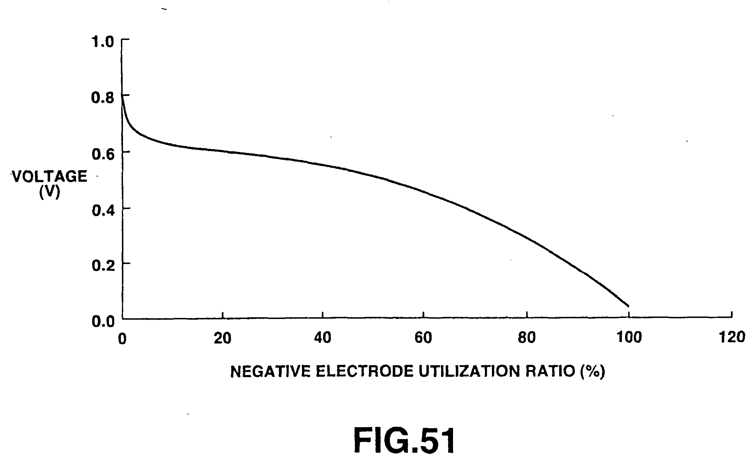

Additionally, the above air cell was assembled by previously storing hydrogen in the hydrogen electrode at a pressure of 100 kg/cm² and stacking the hydrogen electrode to the above joined body, and the discharging characteristic thereof was measured at a current density of 1 mA/cm². As a result, the discharging characteristic shown in Fig. 51 was obtained, which showed that the air cell had a sufficient discharging function.

As the result of this example, it becomes apparent that hydrogen consisting of protons and electrons imparts electrons to the carbonaceous material for hydrogen storage functioning as a strong electron receptor, to be thus stored in the carbonaceous material in the form of protons. Accordingly, since the occupied volume of hydrogen (in the form of protons) in the carbonaceous material becomes significantly small, a large amount of hydrogen can be stored in the carbonaceous material as compared with the conventional storage of hydrogen atoms by chemical absorption. That is to say, the carbonaceous material for hydrogen storage, which can efficiently store protons produced by charge separation of hydrogen atoms, can eventually store a large amount of hydrogen in the form of protons at a high density. In this way, the carbonaceous material for hydrogen storage according to the present invention is advantageous in effectively storing and discharging hydrogen as the next generation clean energy source, and further advantageous in reducing the weight, lowering the cost, enhancing the safety, and improving the transportation characteristic.

### Example 13

The inside of the reaction chamber of the arc discharge system shown in Fig. 1 was filled with an atmosphere of helium gas and kept at a pressure of 100 Torr (1.33×10⁴ Pa). A direct current was applied between a pair of carbon electrodes for 30 min, to generate arc discharge therebetween. After termination of arc discharge, carbon soot deposited on the inner surface of the reaction chamber and a carbonaceous material deposited and grown on the cathode were collected.

The carbon soot and the carbonaceous material thus collected were ground in a mortar and dispersed in sulfuric acid by an ultrasonic dispersion process.

Potassium permanganate was added to the materials dispersed in sulfuric acid, followed by heating for removing amorphous carbon by oxidation, to obtain a sample.

The sample was put in a sample chamber and left for about one day in a hydrogen atmosphere of 100 atm, and the hydrogen storage amount of the sample based on a change in pressure of hydrogen gas was measured. As a result, it was found that the sample had a hydrogen storage ability of 1200 ml/g.

A voltage of +1.5 V with respect to the grounded pressure chamber (sample chamber) was applied to the sample kept in the hydrogen atmosphere. As a result, the pressure of hydrogen gas was reduced, and it was observed that the hydrogen storage amount was increased.

After being continued for 6 hr, the application of the voltage of +1.5 V to the sample was stopped. As a result, the pressure of hydrogen gas was increased again, and after an elapse of 3 hr, the pressure of hydrogen gas was returned to the original value.

Next, a voltage of +3 V with respect to the grounded pressure chamber (sample chamber) was applied to the sample kept in the hydrogen atmosphere. As a result, the pressure of hydrogen gas was reduced to a value less than that in the above case of applying the voltage of +1.5 V, and the hydrogen storage amount was increased to a value more than that in the above case of applying the voltage of 1.5 V.

After being continued for 6 hr, the application of the above voltage of +3 V to the sample was stopped. As a result, the pressure of hydrogen gas was increased again, and after an elapse of 6 hr, the pressure of hydrogen gas was returned to the original value.

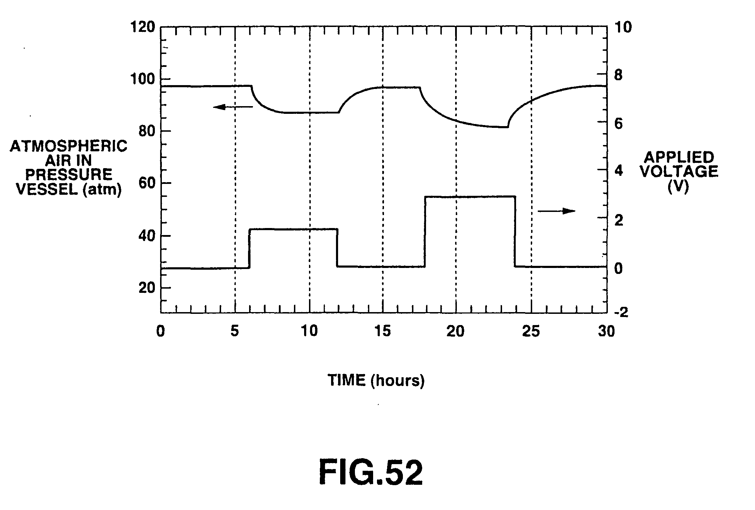

Fig. 52 is a graph showing a change in pressure of hydrogen gas depending on a voltage applied to the sample.

According to this example, the hydrogen storage ability of the carbonaceous material sample is improved by applying, to the sample, a positive voltage with respect to the grounded pressure chamber 11, and the improved degree of the hydrogen storage ability becomes larger as the applied voltage becomes higher.

### Example 14

In this example, an alkali battery was produced as follows:

### <Preparation of Positive Electrode>

A paste was prepared by adding 3 wt% of carboxymethylcellulose and water to 10 g of particles of nickel hydroxide having an average particle size of 30 micrometer and 1 g of cobalt hydroxide, and kneading the resultant mixture. A sponging porous nickel member having a porosity of 95% was filled with the above paste, followed by drying and pressurization, and was punched to prepare a positive electrode having a diameter of 20 mm and a thickness of 0.7 mm.

### <Preparation of Negative Electrode>

A carbonaceous material for hydrogen storage was produced in the same manner as that described in Example 13 and hydrogen was stored in the carbonaceous material by applying a voltage of +3.0 V in the same manner as that described in Example 13.

A paste was prepared by adding 5 wt% of carboxymethylcellulose and water to the above hydrogen stored carbonaceous material, and kneading the resultant mixture. A sponging porous nickel member having a porosity of 95% was filled with the above paste, followed by drying and pressurization, and was punched to prepare a negative electrode having a diameter of 20 mm and a thickness of 0.5 mm.

### <Production of Alkali Battery>

An alkali battery (secondary battery) was produced by using a water solution of potassium hydroxide having a concentration of 7N as an electrolyte as well as the positive electrode and negative electrode prepared in the above-described steps. The structure of the alkali battery thus produced is schematically shown in Fig. 38.

### <Charging/discharging Characteristic>

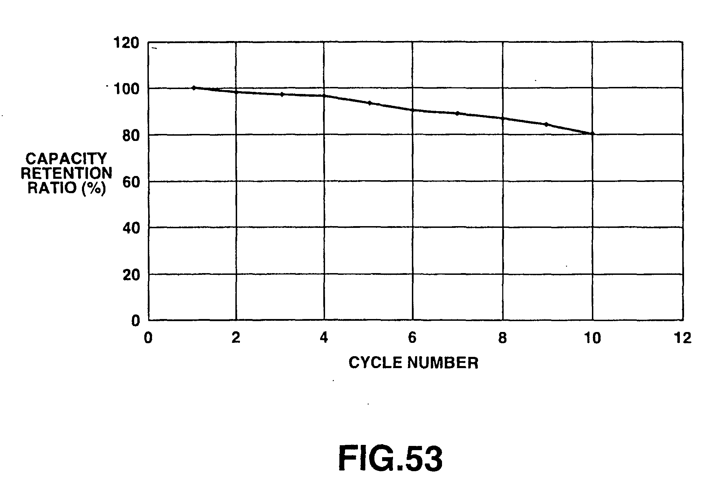

The above alkali battery was subjected to a charging/discharging test under a condition with 0.1 C, upper limit of 1.4 V and lower limit of 0.8 V. The cycle characteristic is shown in Fig. 53.

As is apparent from Fig. 53, it was found that the alkali battery exhibited a basic charging/discharging characteristic although the cycle life was not insufficient because of the battery structure.

### Example 15

In this example, an air cell was produced as follows:

### <Preparation of Air Electrode>

A carbonaceous material for hydrogen storage was produced by the arc discharge process described in Example 1.

The carbonaceous material thus produced and an alcohol solution of a perfluorosulfonic acid based high polymer electrolyte were dispersed in n-butyl acetate, to prepare a catalytic slurry.

A carbon non-woven fabric having a thickness of 250 micrometer was subjected to water-repellent finishing by dipping the carbon non-woven fabric in an emulsion of a fluorine based water-repellent agent, followed by drying, and heating it at 400°C. The carbon non-woven fabric was cut into a size of 4 cm×4 cm, and one surface thereof was coated with the above catalytic slurry.

### <Joining Air Electrode to High Polymer Electrolyte Film>

Aperfluorosulfonic acid based high polymer electrolyte film having a thickness of 50 micrometer was joined to the surface, coated with the catalytic slurry, of the carbon non-woven fabric, followed by drying, to obtain the air electrode joined to the high polymer electrolyte film.

### <Preparation of Hydrogen Electrode>

Hydrogen was stored in the same carbonaceous material for hydrogen storage as that used for preparation of the air electrode by applying a voltage of +3.0 V with respect to the reference potential in the same manner as that described in Example 13. A paste was prepared by adding 5 wt% of carboxymethylcellulose and water to the carbonaceous material thus produced. A sponging porous nickel member having a porosity of 95% was filled with the above paste, followed by drying and pressurization, and was cut into a size of 4 cm×4 cm, to prepare a hydrogen electrode having a thickness of 0.5 mm.

### <Production of Air Cell>

The hydrogen electrode was stacked to the joined body of the air electrode and the high polymer electrolyte film, with the high polymer electrolyte film put between both the electrodes, and the outer surfaces of the stack were put between teflon sheets of 3 mm in thickness and fixed thereto with bolts. Additionally, the teflon sheet disposed on the air electrode side has a number of holes of 1.5 mm in diameter for smoothly supplying air to the air electrode.

The structure of the air cell thus assembled is schematically shown in Fig. 40.

### <Discharging Characteristic of Air Cell>

The discharging characteristic of the air cell was examined as follows.

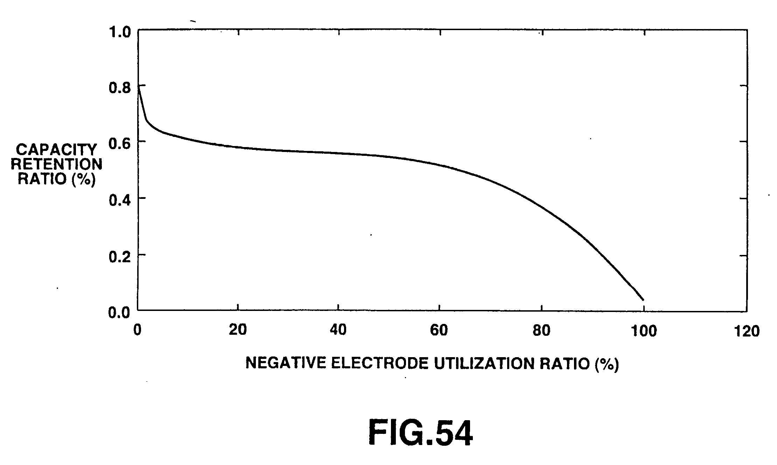

The air cell was charged at a current density of 1 mA/cm², hydrogen was stored in the hydrogen electrode, and the air cell was discharged at a current density of 1 mA/cm². As a result, the discharging characteristic shown in Fig. 54 was obtained, which showed that the air cell had a sufficient discharging function.

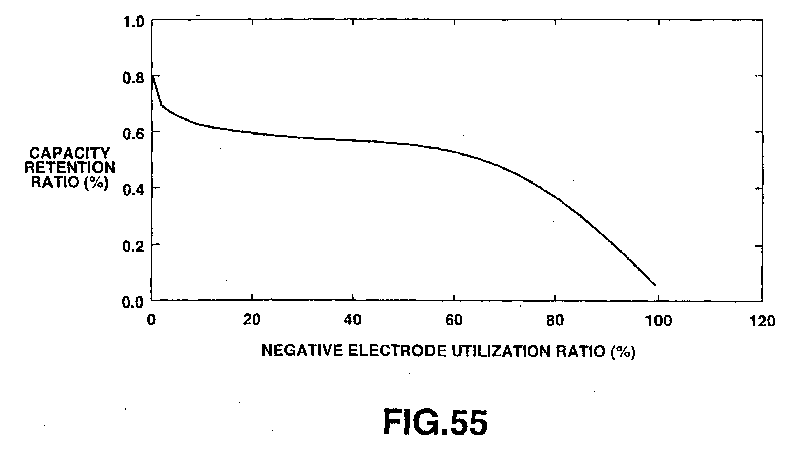

Additionally, the above air cell was assembled by previously storing hydrogen in the hydrogen electrode at a pressure of 100 kg/cm² and stacking the hydrogen electrode to the above joined body, and the discharging characteristic thereof was measured at a current density of 1 mA/cm². As a result, the discharging characteristic shown in Fig. 55 was obtained. Although the discharge characteristic in Fig. 55 is little different from that shown in Fig. 54 since the abscissa is indicated by the utilization factor of the negative electrode; however, the usable time becomes longer by a value corresponding to the charged amount. Even the air cell in this example had a sufficient discharging function.

### Example 16

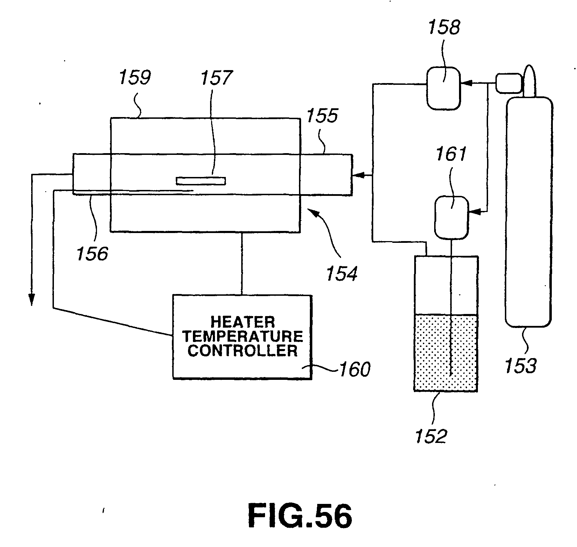

One example of a fullerene baking system will be described with reference to Fig. 56.

The fullerene baking system includes a small-sized organic solvent gas bubbler 152, a gas tank 153 for supplying a non-oxidizing carrier gas to the gas bubbler 152, and a simple electric furnace 154 for thermally decomposing an organic solvent gas for ordering and keeping a baking temperature. A needle valve 158 for adjusting a flow rate is mounted in a flow passage between the gas tank 153 and the electric furnace 154, and a needle valve 158b for adjusting a flow rate is mounted in a flow passage between the gas tank 153 and the organic solvent gas bubbler 152.

The electric furnace 154, having a core portion of 30 mm in diameter, includes an electric heater 159 in which a reaction tube 155 made from, for example, quartz is inserted. A ceramic boat 157 is set in the reaction tube 155, and a thermocouple 156 connected to an external heater temperature controller 160 is set directly under the ceramic boat 157 for accurately measuring a film formation temperature of the ceramic boat 157. The temperature control of the ceramic boat 157 is performed by a PID control type relay circuit. The baking system having the above configuration can bake a material within a temperature error of 1°C.

A carbon raw material was prepared by mixing about 85 wt% of a fullerene C₆₀, about 10 wt% of a fullerene C₇₀, and about 5 wt% of higher fullerenes, and 30 wt% of a powder of nickel was added to and uniformly mixed with the carbon raw material. The wt% (weight percent) is based on the weight of the carbon raw material.

The mixture containing the metal powder was baked by using the baking system shown in Fig. 56. The mixture put in the ceramic boat 157 was set in the reaction tube 155 of the baking system, and was baked under the following condition. In this baking, the use of the needle valve 158b and the organic solvent gas bubbler 152 was omitted. The inside of the reaction tube 155 was filled with nitrogen gas flowing from the gas tank 153 at a flow rate of 50 ml/min, and the mixture containing the metal powder was baked for 3 hr at a baking temperature kept at 950°C.

The baked body formed in the ceramic boat 157 was removed out of the baking system and ground in a mortar, and was then mixed with 10 wt% of fine particles of platinum called "platinum black". The platinum-supported mixture thus obtained was taken as a sample.

The sample of 0.47 g was sufficiently dried, and enclosed in an ampoule with a frit-mesh plug for evaluation of the hydrogen storage ability. First, the ampoule was enclosed in a measurement vessel, evacuated for 30 min while being raised up to 150°C, cooled again and kept at a hydrogen pressure of 100 atm, and was left for 24 hr in such a state. After removal of the sample from the measurement vessel, the hydrogen storage amount of the sample was evaluated by using an integrating flowmeter. As a result, it was found that the sample had a hydrogen storage ability of 10.7 ml/g.

### Example 17

A sample was prepared in the same manner as that described in Example 16, except that fine particles of platinum were supported on the baked body by sputtering before the baked body was ground, in place of the addition to platinum black to the baked body after grinding of the baked body. The sample thus prepared was subjected to evaluation of the hydrogen storage ability in the same manner as that described in Example 16.

As a result, it was found that the sample had a hydrogen storage ability of 58.6 ml/g. In addition, as a result of elemental analysis after the evaluation, it was found that the sample contained 5.3 wt% of platinum.

### Example 18

A sample was prepared in the same manner as that described in Example 16, except that fine particles of platinum were chemically supported on the baked body before the baked body was ground, in place of the addition to platinum black to the baked body after grinding of the baked body. It should be noted that the catalyst chemically supporting process will be described later in connection with Example 57. The sample thus prepared was subjected to evaluation of the hydrogen storage ability in the same manner as that described in Example 16. As a result, it was found that the sample had a hydrogen storage ability of 98.6 ml/g. In addition, as a result of elemental analysis after the evaluation, it was found that the sample contained 5.3 wt% of platinum.

### Example 19

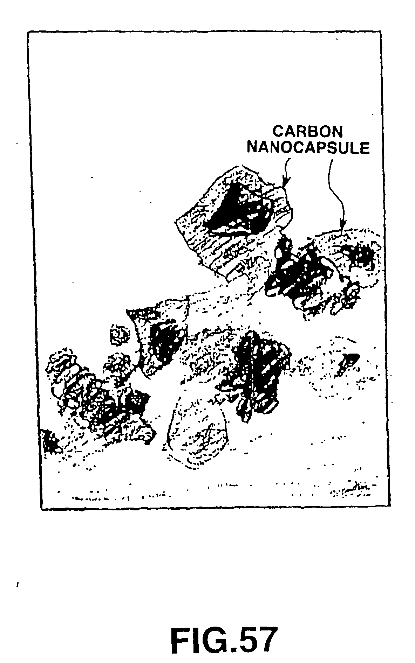

A fullerene mixture produced in the same manner as that described in Example 16 was used as a carbonaceous material for hydrogen storage. The carbonaceous material was mixed with iron-phthalocyanine compound at a weight ratio of 7 : 3. The mixture was baked for 3 hr at 950°C. In this case, a mixed gas containing nitrogen gas and hydrogen gas at a volume ratio of 2:1 was supplied from the gas tank 153 into the reaction tube 155 at a flow rate of 50 ml/min. During this baking, a slight amount of iron-phthalocyanine compound was evaporated. After cooling, the baked body (containing about 4 wt% of iron) was removed out of the baking system, and was ground in a mortar together with about 10 wt% of platinum black. The sample thus prepared was subjected to evaluation of the hydrogen storage ability in the same manner as that described in Example 16. As a result, it was found that the sample had a hydrogen storage ability of 38.9 ml/g. In addition, as a result of microscopic observation of the sample, it was found that a large amount of carbon nanotubes were produced as shown in Fig. 57.

### Example 20

The baked body obtained in Example 19 was ground, on which platinum was chemically supported. The sample thus prepared was sufficiently dried, and subjected to evaluation of the hydrogen storage ability like Example 19. As a result, it was found that the sample had a hydrogen storage ability of 78.0 ml/g. The elemental analysis was performed after the evaluation. As a result, it was found that the sample contained 4.3 wt% of platinum. In addition, the baked body before platinum was supported thereon contained about 4 wt% of iron.

### Example 21

A fullerene mixture produced in the same manner as that described in Example 16 was mixed with 30 wt% of a powder of titanium carbide. The mixture containing the powder of titanium carbide was baked for 5 hr at 1000°C by using a mixed gas containing nitrogen and hydrogen at a volume ratio of 2 : 1. After cooling, the baked body was observed by a transmission electron microscope. As a result, the presence of a capsule structure in which particles of titanium carbide were surrounded by a weakly ordered graphite structure was observed. The capsule structure was too weak to be broken upon observation under an acceleration voltage of 400 KeV. The baked body was then mixed with 10 wt% of platinum black, being ground in a mortar, and was subjected to evaluation of the hydrogen storage ability in the same manner as that described in Example 16. As a result, it was found that the sample had a hydrogen storage ability of 105 ml/g.

### Example 22

Platinum was supported on the baked body produced in Example 21 by sputtering before the baked body was ground, followed by grinding, and was subjected to evaluation of the hydrogen storage ability in the same manner as that described in Example 16. As a result, it was found that the sample had a hydrogen storage ability of 116 ml/g. In addition, as a result of elemental analysis after the evaluation, it was found that the amount of platinum supported on the baked body by sputtering was 2.9 wt%.

### Example 23

The baked body produced in Example 21 was ground, on which platinum was chemically supported. The sample thus prepared was sufficiently dried, and was subjected to evaluation of the hydrogen storage ability in the same manner as that described in Example 16. As a result, it was found that the sample had a hydrogen storage ability of 179.9 ml/g. In addition, as a result of elemental analysis after the evaluation, it was found that the amount of platinum chemically supported on the baked body was 7.7 wt%.

### Example 24

A fullerene mixture produced in the same manner as that described in Example 16 was used as a carbonaceous material for hydrogen storage, and the carbonaceous material was mixed with 30 wt% of a powder of gadolinium oxide. The mixture was baked for 3 hr at 950°C in a baking atmosphere of a mixed gas of hydrogen and argon at a volume ratio of 1 : 1 flowing at a flow rate of 50 ml/min. Platinum was chemically supported on the baked body, being sufficiently dried, and was subjected to evaluation of the hydrogen storage ability in the same manner as that described in Example 16. As a result, it was found that the sample had a hydrogen storage ability of 198.8 ml/g. In addition, as a result of elemental analysis after the evaluation, it was found that the sample contained 6.6 wt% of platinum.

### Example 25

The procedure in Example 24 was repeated, except that a powder of V₂O₅ type vanadium oxide was used in place of gadolinium oxide, to prepare a platinum-supported baked body. Like Example 24, the sample was subjected to evaluation of the hydrogen storage ability. As a result, it was found that the sample had a hydrogen storage ability of 223.7 ml/g. In addition, as a result of elemental analysis after the evaluation, it was found that the sample contained 8.3 wt% of platinum.

### Example 26

The procedure in Example 24 was repeated, except that a powder of scandium oxide was used in place of gadolinium oxide, to prepare a platinum-supported baked body. Like Example 24, the sample was subjected to evaluation of the hydrogen storage ability. As a result, it was found that the sample had a hydrogen storage ability of 2266.5 ml/g. In addition, as a result of elemental analysis after the evaluation, it was found that the sample contained 7.9 wt% of platinum.

### Example 27

The procedure in Example 24 was repeated, except that a powder of titanium oxide was used in place of gadolinium oxide, to prepare a platinum-supported baked body. Like Example 24, the sample was subjected to evaluation of the hydrogen storage ability. As a result, it was found that the sample had a hydrogen storage ability of 11.4 ml/g. In addition, as a result of elemental analysis after the evaluation, it was found that the sample contained 8.5 wt% of platinum.

### Example 28

The procedure in Example 24 was repeated, except that a powder of cobalt oxide was used in place of gadolinium oxide, to prepare a platinum-supported baked body. Like Example 24, the sample was subjected to evaluation of the hydrogen storage ability. As a result, it was found that the sample had a hydrogen storage ability of 173.0 ml/g. In addition, as a result of elemental analysis after the evaluation, it was found that the sample contained 7.3 wt% of platinum.

### Example 29

The procedure in Example 24 was repeated, except that a powder of goethite was used in place of gadolinium oxide, to prepare a platinum-supported baked body. Like Example 24, the sample was subjected to evaluation of the hydrogen storage ability. As a result, it was found that the sample had a hydrogen storage ability of 56.8 ml/g. In addition, as a result of elemental analysis after the evaluation, it was found that the sample contained 9.2 wt% of platinum.

### Example 30

The procedure described in Example 19 was repeated, except that the use of the iron-phthalocyanine compound was omitted, to prepare a platinum-supported baked body. Accordingly, the carbonaceous material for hydrogen storage in this example was structurally changed without effect of a metal catalyst upon baking. Like Example 19, the sample was subjected to evaluation of the hydrogen storage ability. As a result, it was found that the sample had a hydrogen storage ability of 78.9 ml/g.

### Example 31

Platinum was chemically supported on the baked body containing no metal catalyst produced in Example 30. Like Example 30, the sample thus prepared was subjected to evaluation of the hydrogen storage ability. As a result, it was found that the sample had a hydrogen storage ability of 145.7 ml/g. In addition, as a result of elemental analysis of the sample, it was found that the sample contained 10.7 wt% of platinum.

### Example 32

A fullerene mixture produced in the same manner as that described in Example 16 was used as a carbonaceous material for hydrogen storage, and 30 wt% of a powder of iron was added to and uniformly mixed with the carbonaceous material.

The mixture containing the powder of iron was baked by using the baking system shown in Fig.56. The mixture was put in the ceramic boat 157 and was set in the reaction tube 155 of the baking system. A tank filled with a mixed gas containing nitrogen gas and hydrogen gas at a volume ratio 2 : 1 was used as the gas tank 153, and the organic solvent gas bubbler 152 was filled with toluene. The mixed gas was fed from the gas tank 153 into the organic solvent gas bubbler 152, to be bubbled in toluene. Accordingly, the mixed gas was fed, together with toluene gas as a carrier gas, into the reaction tube 155. The baking was performed for 3 hr at a temperature of 950°C.

After cooling, the baked body was removed out of the baking system, and platinum black was chemically supported on the baked body. The sample thus prepared was subjected to evaluation of the hydrogen storage ability in the same manner as that described in Example 16. As a result, it was found that the sample had a hydrogen storage ability of 230.5 ml/g. In addition, as a result of elemental analysis of the sample, it was found that the sample contained 7.2 wt% of platinum.

### Example 33

The procedure described in Example 32 was repeated, except that the organic solvent gas bubbler was filled with acetone in place with toluene, to prepare a platinum-supported baked body. Like Example 32, the sample thus prepared was subjected to evaluation of the hydrogen storage ability. As a result, it was found that the sample had a hydrogen storage ability of 200.0 ml/g. In addition, as a result of elemental analysis of the sample, it was found that the sample contained 7.0 wt% of platinum.

### Example 34

The procedure described in Example 32 was repeated, except that the use of the organic solvent gas bubbler was omitted, to prepare a platinum-supported baked body. Accordingly, the atmosphere in the reaction tube was composed of only the mixed gas of nitrogen gas and hydrogen gas. Like Example 32, the sample thus prepared was subjected to evaluation of the hydrogen storage ability. As a result, it was found that the sample had a hydrogen storage ability of 190.0 ml/g. In addition, as a result of elemental analysis of the sample, it was found that the sample contained 8.3 wt% of platinum.

### Example 35

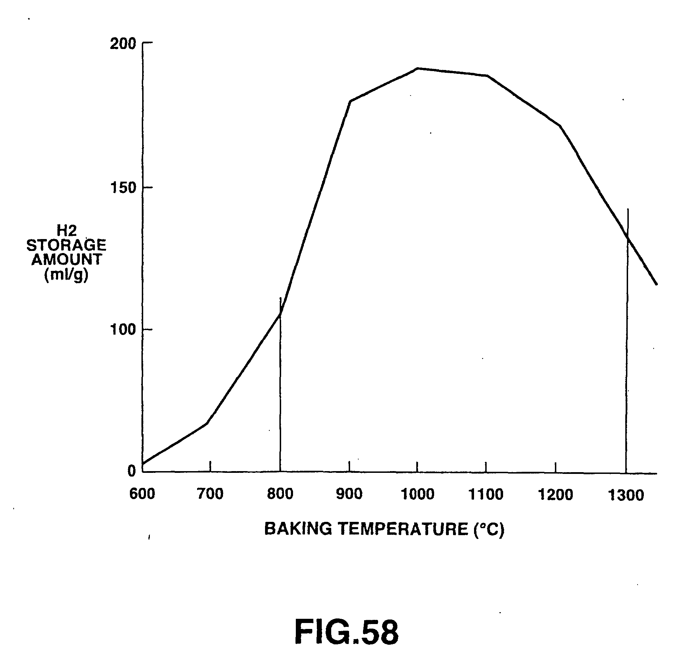

A fullerene mixture produced in the same manner as that described in Example 16 was used as a carbonaceous material for hydrogen storage, and 30 wt% of a powder of iron was added to and uniformly mixed to the carbonaceous material. The mixture was set in the baking system used in Example 16, and was baked for 3 hr at each of 600°C, 700°C, 800°C, 900°C, 1000°C, 1100°C, 1200°C, and 1300°C. After cooling, each baked body was removed out of the baking system, and 10 wt% of platinum black was added to the baked body. The baked body containing platinum was ground in a mortar and pelletized. Each of these pellets was subjected to evaluation of the hydrogen storage ability in the same manner as that described in Example 16. The results are shown in Fig. 58.

### Example 36

An alkali battery and an air cell were produced in the same manners as those shown in Examples 2 and 3, except that the baked body produced in Example 18 was used as a carbonaceous material for forming a negative electrode and a hydrogen electrode.

### <Charging/discharging Characteristic>

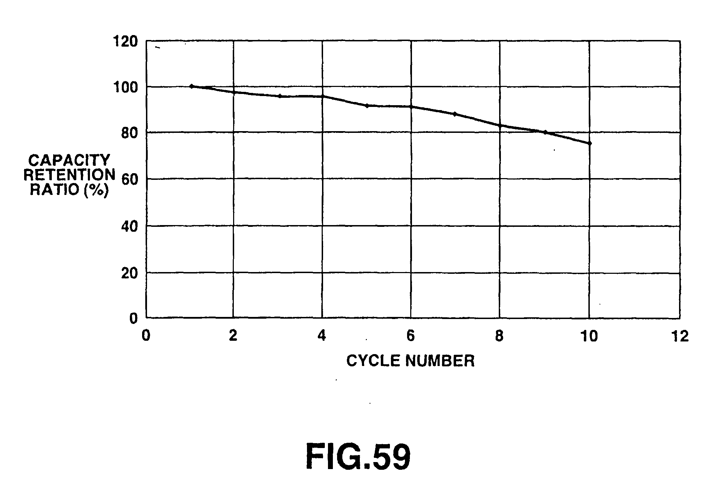

The above alkali battery was subjected to a charging/discharging test under a condition with 0.1 C, upper limit of 1.4 V and lower limit 0.8 V. The cycle characteristic is shown in Fig. 59. As is apparent from Fig. 59, it was found that the alkali battery exhibited a basic charging/discharging characteristic although the cycle life was not insufficient because of the battery structure. Even in the case where the baked body produced in each of Examples 16 and 17, and 19 to 35 was used, the same effect as that described above can be obtained.

### <Discharging Characteristic of Air Cell>

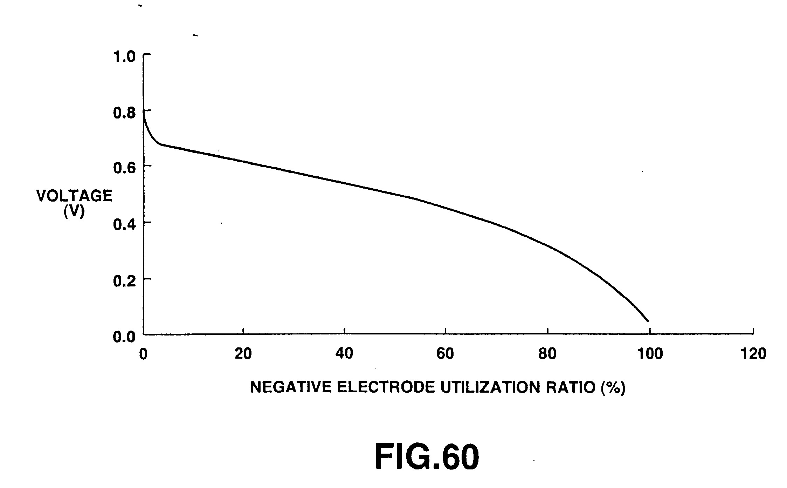

The discharging characteristic of the air cell was examined as follows. The air cell was charged at a current density of 1 mA/cm², hydrogen was stored in the hydrogen electrode, and the air cell was discharged at a current density of 1 mA/cm². As a result, the discharging characteristic shown in Fig. 60 was obtained, which showed that the air cell had a sufficient discharging function.

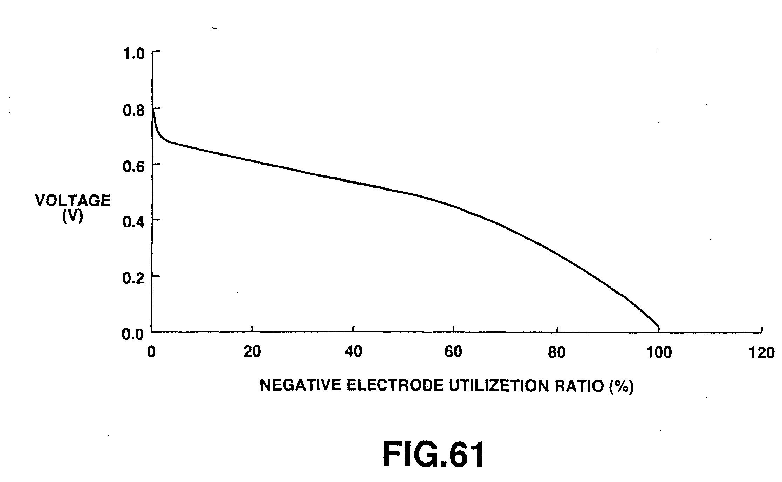

Additionally, the above air cell was assembled by previously storing hydrogen in the hydrogen electrode at a pressure of 100 kg/cm² and stacking the hydrogen electrode to the above joined body, and the discharging characteristic thereof was measured at a current density of 1 mA/cm². As a result, the discharging characteristic shown in Fig. 61 was obtained, which showed that the air cell had a sufficient discharging function. Even in the case where the baked body produced in each of Examples 16 and 17, and 19 to 35 was used, the same effect as that described above can be obtained.

In this embodiment, the baked body produced in Example 18 was used as the carbonaceous material for forming the negative electrode and hydrogen electrode; however, it was confirmed that the baked bodies produced in Examples 16,17, and 19 to 35, which were different from each other in characteristic, each functioned as a carbonaceous material suitable for each of an alkali battery and an air cell.

### Comparative Example 1

Commercial carbon black was sufficiently ground in a mortar. This was taken as a sample. The sample was subjected to evaluation of the hydrogen storage ability in the same manner as that described in Example 16. As a result, it was found that the sample had a hydrogen storage ability of 3 ml/g.

### Comparative Example 2

Commercial carbon black was mixed with 10 wt% of platinum black, and the resultant mixture was sufficiently ground in a mortar. This was taken as a sample. The sample was subjected to evaluation of the hydrogen storage ability in the same manner as that described in Example 16. As a result, it was found that the sample had a hydrogen storage ability of 4.0 ml/g.

### Comparative Example 3

Platinum was chemically supported on commercial carbon black by sputtering, and the resultant mixture was sufficiently ground in a mortar. This was taken as a sample. The sample was subjected to evaluation of the hydrogen storage ability in the same manner as that described in Example 16. As a result, it was found that the sample had a hydrogen storage ability of 4.2 ml/g. As a result of elemental analysis, it was found that the sample contained 2.9 wt% of platinum.

### Comparative Example 4

Commercial carbon black was ground, on which platinum black was chemically supported. This was taken as a sample. The sample was subjected to evaluation of the hydrogen storage ability in the same manner as that described in Example 16. As a result, it was found that the sample had a hydrogen storage ability of 5.5 ml/g. As a result of elemental analysis, it was found that the sample contained 7.7 wt% of platinum.

### Comparative Example 5

A fullerene mixture as a carbonaceous material for hydrogen storage was produced in the same manner as that described in Example 16. The carbonaceous material was pelletized in a dry state. The pellet was subjected to evaluation of the hydrogen storage ability in the same manner as that described in Example 16. As a result, it was found that the sample had a hydrogen storage ability of 3.7 ml/g.

As a result of measurement of the Raman spectrum of the fullerene baked body in each of Examples 16 to 35, it was found that the structure of the fullerene baked body could not be clearly determined but generally specified such that two Raman scattering lines inherent to a fullerene polymer appear at 1460 cm⁻¹ and 1570 cm⁻¹, and a disorder band and a graphite band of amorphous carbon containing a graphite structure appear at 1350 cm⁻¹ and 1590 cm⁻¹, respectively. Additionally, it was confirmed that fullerene molecules little remained in the fullerene baked body.

The appearance of the Raman scattering lines corresponding to the fullerene polymer in the Raman spectrum [P. Strasser, M. Ata, J. Phys, Chem. B, vol.102, P4131 (1998)] means that a polymer structure exists although fullerene molecules do not remain. The fullerene polymer, however, almost disappears under conditions with a baking temperature of 1000°C and a baking time of 3 hr or more.

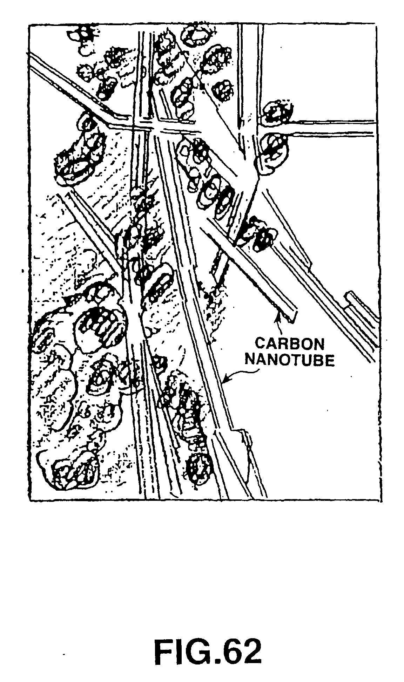

As a result of CuK α-X ray diffraction of the fullerene baked body, a broad line equivalent to the (002) face of graphite was observed. This means that the ordering of graphite is insufficient and domains are small. For the fullerene baked body containing a metal catalyst such as vanadium, gadolinium, or iron, a diffraction line equivalent to a metal carbide was clearly observed. This clearly constitutes support for the formation of a carbide capsule structure which includes carbon nanotubes as shown in Fig.62.

The fullerene baked body in each of Examples 16 to 35 was subjected to the same complex impedance measurement as that described in Example 4. As a result, each fullerene baked body exhibited a circular-arc complex impedance being slightly varied depending on the kind thereof but similar to that shown in Fig. 3. Further, it was observed that the direct current resistance component of the complex impedance of the fullerene baked body in the state after hydrogen storage was at least about an order of magnitude smaller than that in the state before hydrogen storage.

### Example 37

A crude fullerene containing fullerene C₆₀ and fullerene C₇₀ was produced by using the system shown in Fig. 1.

A graphite rod (carbon rod) having a diameter of 10 mm and a length of 35 cm was used as each of the cathode 2 and the anode 3. The arc discharge was generated by applying a direct current of 150 A between the electrodes 2 and 3 in an atmosphere of helium gas at 100 Torr (1.33×10⁴ Pa).

The graphite rod constituting the anode 3 was almost evaporated, to obtain soot containing fullerenes, and then the polarities of the electrodes 2 and 3 are reversed, followed by generation of arc discharge, to further evaporate the deposit such as carbon nanotubes accumulated on the original cathode 2, to obtain soot.

The soot thus deposited within the water-cooled reaction chamber (vacuum chamber) was collected by a cleaner, and extracted by using toluene to obtain a crude fullerene. The crude fullerene was cleaned with hexane, being dried, and refined by vacuum sublimation. The fullerene sample thus prepared was subjected to TOF-MS. As a result, it was found that the fullerene sample contained about 90 wt% of fullerene C₆₀ and about 10 wt% of fullerene C₇₀ by weight of the fullerene sample.

The crude fullerene was dissolved in a mixed solvent of toluene and hexane, and put in an extraction column (length: 200 cm, diameter: 5 cm) filled with active alumina, to separate the fullerenes C₆₀ and C₇₀ from each other by extraction. Each of the fullerenes C₆₀ and C₇₀ separated from each other was cleaned with hexane, and was subjected to vacuum sublimation in high vacuum. The sublimation temperature was set at 570°C for the fullerene C₆₀ and 580°C for the fullerene C₇₀. As a result of measurement of the purity of each of the fullerenes C₆₀ and C₇₀ by using a time-of-flight mass spectrometry, it was found that the content of the fullerene C₇₀ in the fullerene C₆₀ was 1 wt% or less and the content of the fullerene C₆₀in the fullerene C₇₀ was 1 wt% or less.

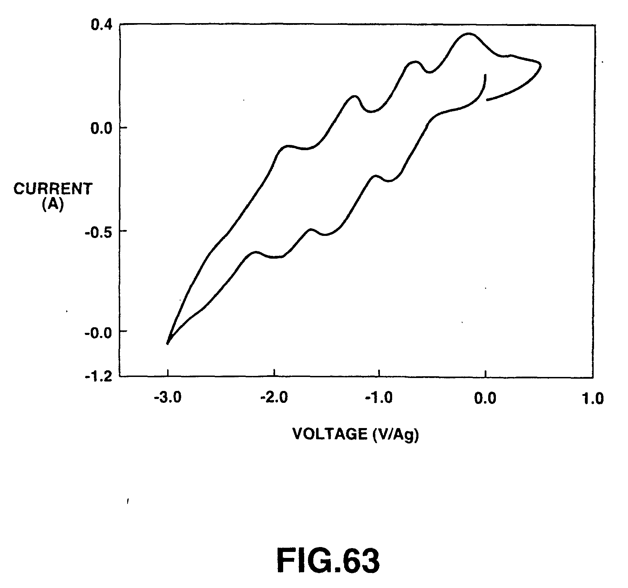

An electrolytic solution was prepared by dissolving a supporting electrolyte made of LiClO₄ and the fullerene C₆₀ in a mixed solvent of toluene and acetonitrile at a volume ratio of 1 : 4. A reduction potential, upon electrolysis performed by using the electrolytic solution, a platinum electrode (obtained by sputtering platinum on a silicon base), and a reference electrode made from silver (Ag), was measured. As a result, redox potential curves shown in Fig. 63 were obtained, from which a first ionization potential and a second ionization potential were determined.

Electrolysis was performed by imparting the first ionization potential in a constant voltage mode, to form a fullerene polymer film on the platinum electrode by electrolytic polymerization. The fullerene polymer film was subjected to measurement of Fourier transformation infrared spectrum (FTIR) and ¹³C nuclear magnetic resonance spectrum. The measured FTIR showed that the original structure of the fullurene C₆₀ was not present in the polymer film produced by electrolytic polymerization.

Since the cross polarization process could not used for measurement of nuclear magnetic resonance, the measurement of mass spectrum only by using magnetic angle spinning was performed. The magnetization of carbon nuclei was 90° flipped with respect to a magnetic field in order to enhance the sensitivity; however, free induction decay was converged after an elapse of several microseconds. Even for Fourier transformation by setting a suitable window function, an absorption line became relatively broad. Notwithstanding these circumstances, an absorption band broadly spread in both directions from an absorption line at 142 ppm inherent to the fullerene C₆₀ and an absorption line inherent to SP³ carbon were clearly observed. In addition, the rapid free induction decay in this measurement may be considered to be due to the presence of unpaired electrons in the C₆₀ polymer derived from the remaining lithium ions. To be more specific, it may be considered that the presence of unpaired electrons in the polymer exert a large effect on magnetic relaxation, particularly, transverse magnetic relaxation of carbon nuclei.

An attempt to remove lithium ions was made as follows: namely, before the fullerene polymer film was removed from the platinum electrode, the platinum electrode with the polymer film was put in high purity water and a potential reversed to that at the polymerization step was applied to remove lithium ions; however, the measurement result of nuclear magnetic resonance spectrum of the polymer film thus treated was nearly equal to that of the polymer film not treated. As a result, it was found that a polarization structure of lithium ions and C₆₀ polymer present in the polymer thin film was not easy to be removed from the thin film.

The fullerene polymer thin film produced by electrolytic polymerization was subjected to mass spectrometry by using a nitrogen laser induced time-of-flight mass spectrometer. From the above-described examination, it is apparent that a polymer having a molecular structure, for example, as described in Fig. 10A cannot be subjected to laser abrasion and laser ionization. Accordingly, while it is a question whether or not the mass spectrometry of the polymer structure can be accurately performed, it may be considered, on the basis of the fact that at least a sequential peak of the fullerene C₆₀ is observed, that the fullerene molecules C₆₀ are three-dimensionally polymerized with the structure thereof left as it is. In addition, as a result of X-ray diffraction of the polymer thin film, the presence of any periodical structure was not observed in the thin film. A partial structure of the fullerene polymer constituting the polymer film produced by electrolytic polymerization is as shown in Fig. 20, in which lithium ions as counter ions are held between two fullerene molecules (see an article: "Electrochemical Synthesis of Polymerized LiC₆₀ Films", Journal of Physical Chemistry, Volume 102, Number 21, page 4131 (1998) by Peter Strasser and Masafumi Ata).

On the other hand, a fullerene polymer was precipitated on the platinum electrode under the same electrolysis condition. The polymer film thus prepared was put in a glove box in vacuum, a solvent of the polymer was removed, and the inside of the box was kept in an argon atmosphere.

A micro-balance was previously disposed in the glove box, and hydrogen gas was introduced in the glove box. A hydrogen partial pressure meter for monitoring the concentration of hydrogen was disposed in the glove box.

Subsequently, 2.223 g of the fullerene polymer removed from the platinum base was placed on the micro-balance, and was left for 2 hr in an atmosphere containing hydrogen at a concentration of 99.96%. As a result of storage of hydrogen in the fullerene polymer, the weight of the fullerene polymer was increased up to 2.390 g. That is to say, the fullerene polymer stored 6.98 wt% of hydrogen.

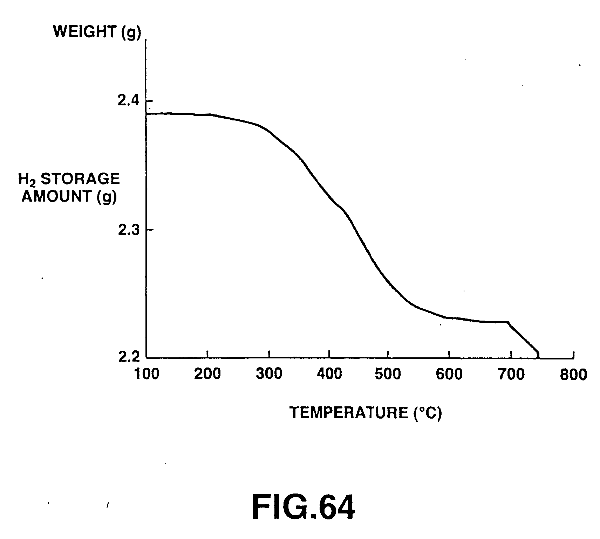

The fullurene polymer with its weight increased up to 2.390 g by hydrogen storage was placed on a heat generator made from silicon carbide, to observe the hydrogen release characteristic by heating. The result is shown in Fig. 64. The heating temperature was stepwise raised by 50°C at a time by PID control. The sample was kept at each temperature for 30 min, and was subjected to measurement of the weight.

The same experiment was repeated, except that the temperature was raised along with discharge of a release gas by using a turboblower, to check the release gas by a remaining gas monitor having a quadrupole mass spectrometry. As a result, it was found that only hydrogen was released in a temperature range from 300°C to 500°C, and hydrocarbon was generated in a temperature range of more than 700°C. Accordingly, the optimum hydrogen release temperature of the hydrogen storage material in this example is in a range of about 300°C to 600°C.

### Example 38

A small-sized paint shaker was disposed in an argon glove box. A mixture of 2 g of a powder of fullurene C₆₀ and 1 g of a powder of lithium was shaken, together with zirconia beads (outside diameter: 5 mm), in the paint shaker. The polymer thus produced was taken as a sample, and the sample was subjected to evaluation of the hydrogen storage ability in the same manner as that described in Example 1. To be more specific, 2.888 g of the sample was placed on a micro-balance, and was kept for 3 hr in an atmosphere containing hydrogen at a concentration of 99.97%. As a result of storage of hydrogen in the sample, the weight of the sample was increased up to 3.105 g. Accordingly, the sample stored 6.88 wt% of hydrogen.

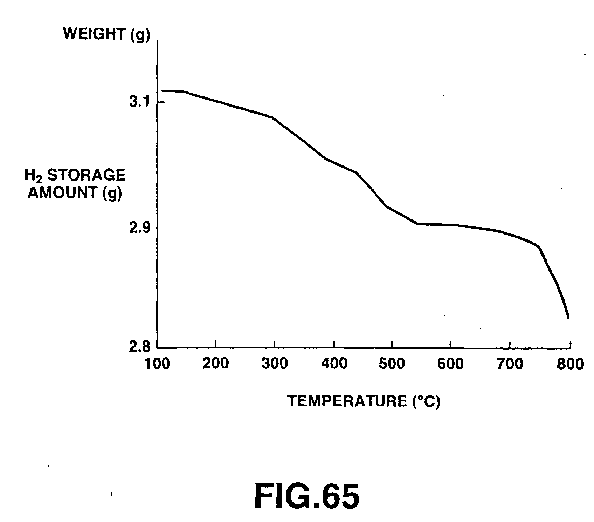

The hydrogen release characteristic of the sample depending on the temperature rise was observed by using the same remaining gas monitor as that described in Example 38. The release gas was discharged by using the same turboblower as that described in Example 37. The result is shown in Fig. 65. Even in this case, the generation of hydrocarbon was clearly observed in a temperature range of 700°C or more. Accordingly, the optimum hydrogen release temperature may be set in a temperature range of about 250°C to about 600°C.

### Comparative Example 6

A sample of fullerene C₆₀ was placed in an atmosphere of hydrogen gas, and a change in weight thereof was monitored. The result showed that the hydrogen storage amount of the sample was as small as only 2 ml/g (converted value at ordinal pressure).

### Comparative Example 7

Only a powder of lithium was shaken together with zirconia beads in the same manner as that described in Example 38. The lithium powder thus treated was taken as a sample. A change in weight of the sample in an atmosphere of hydrogen gas was monitored. As a result, the weight of the sample was increased from 2.58 g to 2.699 g. Accordingly, it was found that the sample contained 4.40 wt% of hydrogen.

### Comparative Example 8

A fullerene polymer was formed on a silicon base in an atmosphere of argon gas by a plasma process. In this process, the rf plasma power was set at 50 W. The polymer collected from the silicon base was taken as a sample, and 0.521 g of the sample was left in a hydrogen atmosphere for 3 hr. As a result, it was found that the hydrogen storage amount of the sample was as small as only 1 ml (converted value at standard pressure).

As described above, it is apparent that the fullerene polymer produced in each of Examples 37 and 38 has a high hydrogen storage ability.

The fullerene polymer in each of Examples 37 and 38 was subjected to the same complex impedance measurement as that described in Example 4. As a result, each fullerene polymer exhibited a circular-arc complex impedance being slightly varied depending on the kind thereof but similar to that shown in Fig. 3. Further, it was observed that the direct current resistance component ofthe complex impedance of the fullerene polymer in the state after hydrogen storage was at least about an order of magnitude smaller than that in the state before hydrogen storage.

The hydrogen storage material produced in each of examples 37 and 38 was used for each of a negative electrode of an alkali battery and a hydrogen electrode of an air cell. As a result, it was found that each of the alkali battery and air cell thus produced exhibited a sufficient function as in the previous examples, although the characteristic of the alkali battery or air cell is slightly varied depending on the kind of the fullerene polymer.

### Example 39

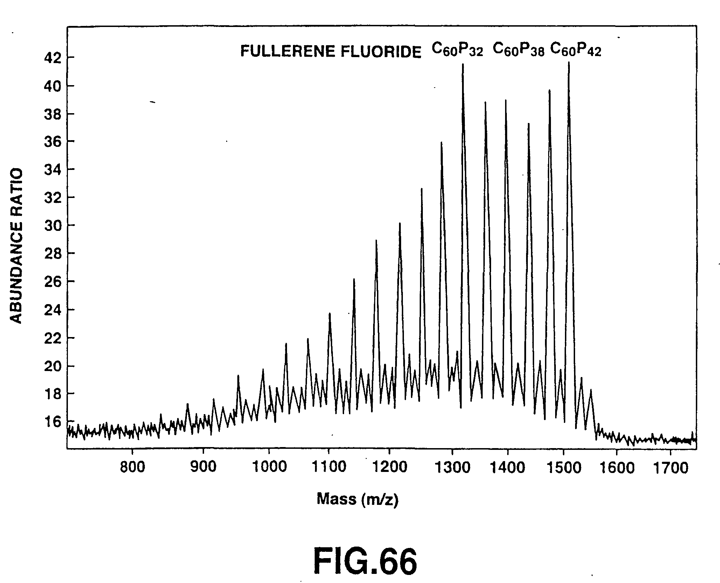

A fullerene powder containing 85 wt% of fullerene C₆₀ and 15 wt% of fullerene C₇₀ was baked by using the baking system shown in Fig. 56. The baking was performed for 3 hr in an argon atmosphere containing 5% of fluorine gas at 300°C, to obtain a fullerene fluoride (sample 39), for example, C₆₀Fₓ where x = about 30 to 50. In particular the fullerene fluoride includes, for example, C₆₀F₃₂, C₆₀F₃₈, and C₆₀F₄₂ as illustrated in the TOF-MS spectrum of the fullurene fluoride in Fig. 66.

### Example 40

A fullerene powder containing 85 wt% of fullerene C₆₀ and 15 wt% of fullerene C₇₀ was put in concentrated sulfuric acid kept at 65°C, and made to react therewith for 3 days. The dispersion solution after reaction was gradually put in water, and a solid material was separated from the solution by a centrifugal separation process, to obtain a fullerene hydrogensulfate (for example C₆₀(OSO₃H)ₓ(OH)_{y}, x = 5 to 20, y = 5 to 20). This was taken as a sample in Example 40.

### Comparative Example 9

A fullerene powder containing 85 wt% of fullerene C₆₀ and 15 wt% of fullerene C₇₀ was taken as a sample in Comparative Example 9.

### Comparative Example 10

A fullerene powder containing 85 wt% of fullerene C₆₀ and 15 wt% of fullerene C₇₀ was mixed with a powder of polytetrafluoroethylene (PTFE) at a mixing ratio of C : F = 1 : 1. The mixture thus obtained was taken as a sample in Comparative Example 10.

### Example 41

Soot was synthesized by the arc discharge process using carbon electrodes, followed by refinement, to obtain nanotubes. The nanotubes were baked by using the baking system shown in Fig. 56. The baking was performed for 5 hr in an argon atmosphere containing 5% of fluorine gas at 300°C, to obtain a fluoride of nanotubes. This was taken as a sample in Example 41.

### Comparative Example 11

The nanotubes produced by refining soot in Example 41 was taken as a sample in Comparative Example 11.

### Example 42

Fullerene soot produced within a chamber by the arc discharge process using carbon electrodes was baked by using the baking system shown in Fig. 56. The baking was performed for 3 hr in an argon atmosphere containing 5% of fluorine gas at 300°C, to obtain a fluoride of fullerene soot (for example C₆₀Fₓ, x = about 30 to 50). This was taken as a sample in Example 42.

### Example 43

Fullerene soot produced within a chamber by the arc discharge process using carbon electrodes was put in concentrated sulfuric acid kept at 65°C, and made to react therewith for 3 days. The dispersion solution after reaction was gradually put in water, and a solid material was separated from the solution by a centrifugal separation process, to obtain a hydrogensulfate of fullerene soot (for example C₆₀(OSO₃H)ₓ(OH)_{y}, x = 5 to 20, y = 5 to 20). This was taken as a sample in Example 43.

### Comparative Example 12

Fullerene soot produced within a chamber by the arc discharge process using carbon electrodes was taken as a sample in Comparative Example 12.

### Example 44

A nitrogen oxide gas produced by catalytic reaction between concentrated nitric acid and a copper catalyst was introduced in a benzene solution of a fullerene powder containing 85 wt% of fullerene C₆₀ and 15 wt% of fullerene C₇₀ and made to react therewith for 10 hr. The reactant was dried in a reduced pressure and refined, to obtain a nitrated fullerene. This was taken as a sample in Example 44.

### <Measurement of Hydrogen Storage Amount>

The sample prepared in each of Examples 39 to 44 and Comparative Examples 9 to 12 was set in a sample chamber of an evaluation system. First, moisture and gas in the sample were removed by heating the sample chamber up to 150°C and simultaneously reducing the pressure in the sample chamber. Subsequently, the temperature of the sample was returned to room temperature, and hydrogen at 100 atm was introduced in the sample chamber. The sample was left for 12 hr under this hydrogen pressure of 100 atm. After that, the hydrogen gas was discharged out of the sample chamber until the pressure in the sample chamber became 1 atm, and the total amount (volume at 1 atm) of the hydrogen gas thus removed was measured. The hydrogen storage amount of the sample is determined by a difference between the total amount of the hydrogen gas removed from the sample chamber in which no sample is set and the total amount of the hydrogen gas removed from the sample chamber in which the sample is set. The results are shown in Table 2.

**Table 2**

| Sample Name | Hydrogen Storage Amount (ml/g) |
|---|---|
| Example 39 | 450 |
| 40 | 120 |
| 41 | 350 |
| 42 | 410 |
| 43 | 230 |
| 44 | 380 |
| Comparative Example 9 | 2 |
| 10 | 1 |
| 11 | 5 |
| 12 | 5 |

As is apparent from Table 2, each of a fluoride or hydrogensulfate of fullerene, nanotubes, and fullerene soot has a high hydrogen storage ability at room temperature. This is because substitutional or functional groups bonded to carbon atoms of a carbon material contain atoms for example, fluorine atoms, oxygen atoms, or sulfur atoms, which facilitate hydrogen bonding. The present invention is not limited to the carbon material as discussed above and can include any suitable carbon material on which substitutional groups can be introduced to facilitate hydrogen bonding, thus, enhancing the hydrogen storage ability of the material. However, as illustrated in Comparative Example 10, a simple mixture of a fullerene or the like and a compound containing fluorine atoms or the like cannot exhibit the effect of the present invention. That is to say, only in the case of directly bonding functional groups containing fluorine atoms or oxygen atoms to carbon atoms of a fullerene, nanotubes, or fullerene soot, the effect of the present invention can be obtained.

The carbonaceous material in each of Examples 39 to 44, having a hydrogen storage ability, was subjected to the same complex impedance measurement as that described in Example 4. As a result, each carbonaceous material exhibited a circular-arc complex impedance being slightly varied depending on the kind thereof but similar to that shown in Fig. 3. Further, it was observed that the direct current resistance component of the complex impedance of the carbonaceous material in the state after hydrogen storage was at least about an order of magnitude smaller than that in the state before hydrogen storage.

### Example 45

In this example, an alkali battery was produced as follows:

### <Preparation of Positive Electrode>

A paste was prepared by adding 3 wt% of carboxymethylcellulose and water to 10 g of particles of nickel hydroxide having an average particle size of 30 micrometer and 1 g of cobalt hydroxide, and kneading the resultant mixture. A sponging porous nickel member having a porosity of 95% was filled with the above paste, followed by drying and pressurization, and was punched to prepare a positive electrode having a diameter of 20 mm and a thickness of 0.7 mm.

### <Preparation of Negative Electrode>

A paste was prepared by adding 5 wt% of carboxymethylcellulose and water to a fullerene fluoride for hydrogen storage produced in the same manner as that described in Example 39, and kneading the resultant mixture. A sponging porous nickel member having a porosity of 95% was filled with the above paste, followed by drying and pressurization, and was punched to prepare a negative electrode having a diameter of 20 mm and a thickness of 0.5 mm.

### <Production of Alkali Battery>

An alkali battery (secondary battery) was produced by using a water solution of potassium hydroxide having a concentration of 7N as an electrolyte as well as the positive electrode and negative electrode prepared in the above-described steps. The structure of the alkali battery thus produced is schematically shown in Fig. 38.

### <Charging/discharging Characteristic>

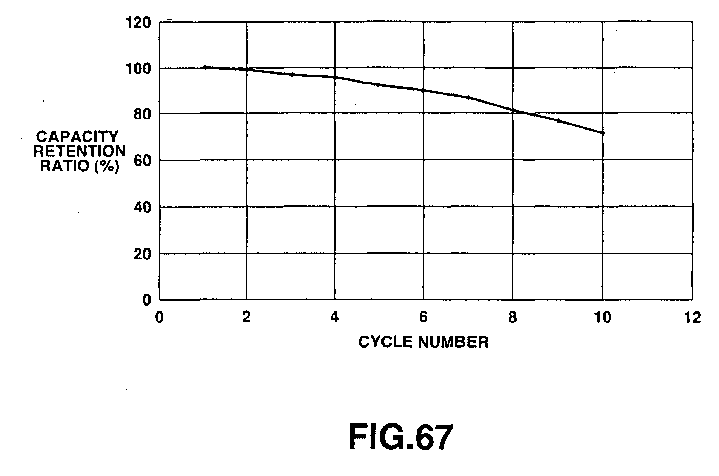

The above alkali battery was subjected to a charging/discharging test under a condition with 0.1 C, upper limit of 1.4 V and lower limit 0.8 V. The cycle characteristic is shown in Fig. 67. As is apparent from Fig. 67, it was found that the alkali battery exhibited a basic charging/discharging characteristic although the cycle life was not insufficient because of the battery structure.

### Example 46

In this example, an air cell was produced as follows:

### <Preparation of Air Electrode>

A fullerene fluoride was produced in the same manner as that described in Example 39. The carbonaceous material (fullerene fluoride) and an alcohol solution of a perfluorosulfonic acid based high polymer electrolyte were dispersed in n-butyl acetate, to prepare a catalytic slurry.

A carbon non-woven fabric having a thickness of 250 micrometer was subjected to water-repellent finishing by dipping the carbon non-woven fabric in an emulsion of a fluorine based water-repellent agent, followed by drying, and heating it at 400°C. The carbon non-woven fabric was cut into a size of 4 cm×4 cm, and one surface thereof was coated with the above catalytic slurry.

### <Joining Air Electrode to High Polymer Electrolyte Film>

A perfluorosulfonic acid based high polymer electrolyte film having a thickness of 50 micrometer was joined to the surface, coated with the catalytic slurry, of the carbon non-woven fabric, followed by drying, to obtain the air electrode joined to the high polymer electrolyte film.

### <Preparation of Hydrogen Electrode>

A paste was prepared by adding 5 wt% of carboxymethylcellulose and water to the same carbonaceous material (fullerene fluoride) as that used for preparation of the above air electrode, and kneading the resultant mixture. A sponging porous nickel member having a porosity of 95% was filled with the above paste, followed by drying and pressurization, and was cut into a size of 4 cm×4 cm, to prepare a hydrogen electrode having a thickness of 0.5 mm.

### <Production of Air Cell>

The hydrogen electrode was stacked to the joined body of the air electrode and the high polymer electrolyte film, with the high polymer electrolyte film put between both the electrodes, and the outer surfaces of the stack were put between teflon sheets of 3 mm in thickness and fixed thereto with bolts. Additionally, the teflon sheet disposed on the air electrode side has a number of holes of 1.5 mm in diameter for smoothly supplying air to the air electrode.

The structure of the air cell thus assembled is schematically shown in Fig. 40.

### <Discharging Characteristic of Air Cell>

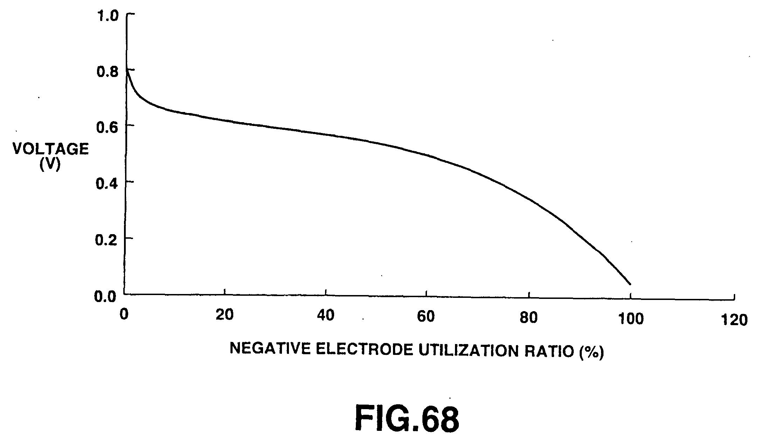

The discharging characteristic of the air cell was examined as follows. The air cell was charged at a current density of 1 mA/cm², hydrogen was stored in the hydrogen electrode, and the air cell was discharged at a current density of 1 mA/cm². As a result, the discharging characteristic shown in Fig. 68 was obtained, which showed that the air cell had a sufficient discharging function.

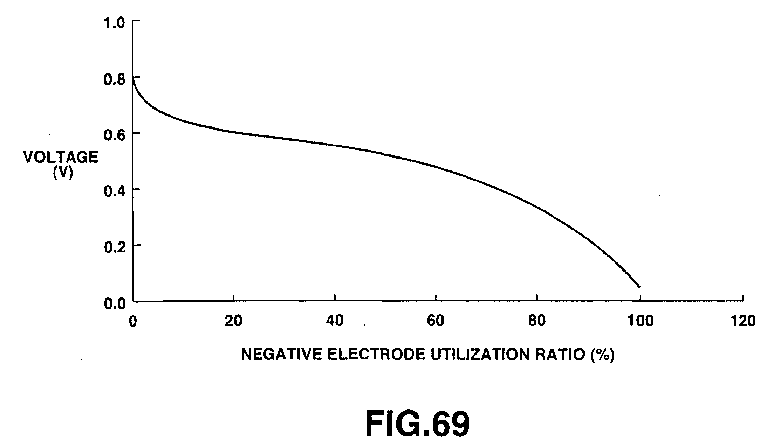

Additionally, the above air cell was assembled by previously storing hydrogen in the hydrogen electrode at a pressure of 100 kg/cm² and stacking the hydrogen electrode to the above joined body, and the discharging characteristic thereof was measured at a current density of 1 mA/cm². As a result, the discharging characteristic shown in Fig. 69 was obtained, which showed that the air cell had a sufficient discharging function.

### Example 47

In this example, a carbonaceous material was produced by using a system shown in Fig. 56 as a thermal decomposition system. A carrier gas composed of a mixed gas containing hydrogen and nitrogen at a volume ratio of 1 : 1 was fed in the organic solvent gas bubbler 152 to be bubbled in toluene in a liquid state. The carrier gas mixed with evaporated toluene was introduced in the reaction tube 155. A crucible in which a powder of nickel was put as a catalyst was previously set in the reaction tube 155. The inside of the reaction tube 155 was heated at 960°C, to produce a carbonaceous material on the catalyst. The carbonaceous material in the state being not separated from the catalyst was taken as a sample in Example 47.

### Example 48

A carbonaceous material was produced in the same manner as that described in Example 47, except that a powder of iron was used as a catalyst. The carbonaceous material thus produced was taken as a sample in Example 48.

### Example 49

A carbonaceous material was produced in the same manner as that described in Example 47, except that a powder of cobalt was used as a catalyst. The carbonaceous material thus produced was taken as a sample in Example 49.

### Example 50

A carbonaceous material was produced in the same manner as that described in Example 47, except that a powder of cobalt oxide was used as a catalyst. The carbonaceous material thus produced was taken as a sample in Example 50.

### Example 51

A carbonaceous material was produced in the same manner as that described in Example 47, except that the heating temperature was set at 1100°C. The carbonaceous material thus produced was taken as a sample in Example 51.

### Example 52

A carbonaceous material was produced in the same manner as that described in Example 47, except that the heating temperature was set at 1300°C. The carbonaceous material thus produced was taken as a sample in Example 52.

### Example 53

A carbonaceous material was produced in the same manner as that described in Example 47, except that the heating temperature was set at 850°C. The carbonaceous material thus produced was taken as a sample in Example 53.

### Example 54

A carbonaceous material was produced in the same manner as that described in Example 47, except that only nitrogen gas (to which toluene gas was not added) was used as the carrier gas. The carbonaceous material thus produced was taken as a sample in Example 54.

### <Measurement of Hydrogen Storage Amount>

The sample prepared in each of Examples 47 to 54 was set in a sample chamber of an evaluation system, and moisture and gas in the sample were first removed by heating the sample chamber up to 150°C and simultaneously reducing the pressure in the sample chamber. Subsequently, the temperature of the sample was returned to room temperature, and hydrogen at 100 atm was introduced in the sample chamber. The sample was left for 12 hr under this hydrogen pressure of 100 atm. After that, the hydrogen gas was discharged out of the sample chamber until the pressure in the sample chamber became 1 atm, and the total amount (volume at 1 atm) of the hydrogen gas thus removed was measured. The hydrogen storage amount of the sample is determined by a difference between the total amount of the hydrogen gas removed from the sample chamber in which no sample is set and the total amount of the hydrogen gas removed from the sample chamber in which the sample is set. The results are shown in Table 3.

**Table 3**

| Sample Name | Hydrogen Storage Amount (ml/g) |
|---|---|
| Example 47 | 234 |
| 48 | 322 |
| 49 | 305 |
| 50 | 289 |
| 51 | 198 |
| 52 | 325 |
| 53 | 68 |
| 54 | 170 |

As is apparent from Table 3, a carbonaceous material produced by thermally decomposing a gas of a carbon-containing compound on a catalyst such as a transition metal can exhibit a high hydrogen storage ability at room temperature.

The carbonaceous material in each of Examples 47 to 54 was subjected to the same complex impedance measurement as that described in Example 4. As a result, each carbonaceous material exhibited a circular-arc complex impedance being slightly varied depending on the kind thereof but similar to that shown in Fig. 3. Further, it was observed that the direct current resistance component of the complex impedance of the carbonaceous material in the state after hydrogen storage was at least about an order of magnitude smaller than that in the state before hydrogen storage.

### Example 55

In this example, an alkali battery was produced as follows:

### <Preparation of Positive Electrode>

A paste was prepared by adding 3 wt% of carboxymethylcellulose and water to 10 g of particles of nickel hydroxide having an average particle size of 30 micrometer and 1 g of cobalt hydroxide, and kneading the resultant mixture. A sponging porous nickel member having a porosity of 95% was filled with the above paste, followed by drying and pressurization, and was punched to prepare a positive electrode having a diameter of 20 mm and a thickness of 0.7 mm.

### <Preparation of Negative Electrode>

A paste was prepared by adding 5 wt% of carboxy methyl cellulose and water to a carbonaceous material produced in the same manner as that described in Example 47, and kneading the resultant mixture. A sponging porous nickel member having a porosity of 95% was filled with the above paste, followed by drying and pressurization, and was punched to prepare a negative electrode having a diameter of 20 mm and a thickness of 0.5 mm.

### <Production of Alkali Battery>

An alkali battery (secondary battery) was produced by using a water solution of potassium hydroxide having a concentration of 7N as an electrolyte as well as the positive electrode and negative electrode prepared in the above-described steps. The structure of the alkali battery thus produced is schematically shown in Fig. 38.

### <Charging/discharging Characteristic>

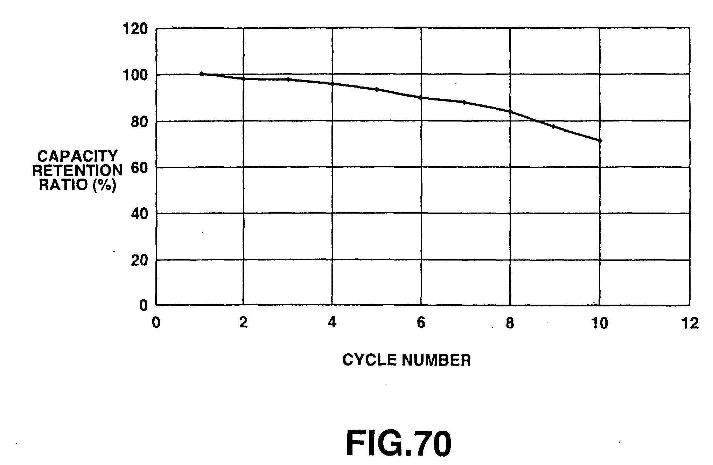

The above alkali battery was subjected to a charging/discharging test under a condition with 0.1 C, upper limit of 1.4 V and lower limit 0.8 V. The cycle characteristic is shown in Fig. 70. As is apparent from Fig. 70, it was found that the alkali battery exhibited a basic charging/discharging characteristic although the cycle life was not insufficient because of the battery structure.

### Example 56

In this example, an air cell was produced as follows:

### <Preparation of Air Electrode>

A carbonaceous material was produced in the same manner as that described in Example 47. The carbonaceous material and an alcohol solution of a perfluorosulfonic acid based high polymer electrolyte were dispersed in n-butyl acetate, to prepare a catalytic slurry.

A carbon non-woven fabric having a thickness of 250 micrometer was subjected to water-repellent finishing by dipping the carbon non-woven fabric in an emulsion of a fluorine based water-repellent agent, followed by drying, and heating it at 400°C. The carbon non-woven fabric was cut into a size of 4 cm×4 cm, and one surface thereof was coated with the above catalytic slurry.

### <Joining Air Electrode to High Polymer Electrolyte Film>

Aperfluorosulfonic acid based high polymer electrolyte film having a thickness of 50 micrometer was joined to the surface, coated with the catalytic slurry, of the carbon non-woven fabric, followed by drying, to obtain the air electrode joined to the high polymer electrolyte film.

### <Preparation of Hydrogen Electrode>

A paste was prepared by adding 5 wt% of carboxymethylcellulose and water to the same carbonaceous material as that used for preparation of the above air electrode, and kneading the resultant mixture. A sponging porous nickel member having a porosity of 95% was filled with the above paste, followed by drying and pressurization, and was cut into a size of 4 cm×4 cm, to prepare a hydrogen electrode having a thickness of 0.5 mm.

### <Production of Air Cell>

The hydrogen electrode was stacked to the joined body of the air electrode and the high polymer electrolyte film, with the high polymer electrolyte film put between both the electrodes, and the outer surfaces of the stack were put between teflon sheets of 3 mm in thickness and fixed thereto with bolts. Additionally, the teflon sheet disposed on the air electrode side has a number of holes of 1.5 mm in diameter for smoothly supplying air to the air electrode.

The structure of the air cell thus assembled is schematically shown in Fig. 40.

### <Discharging Characteristic of Air Cell>

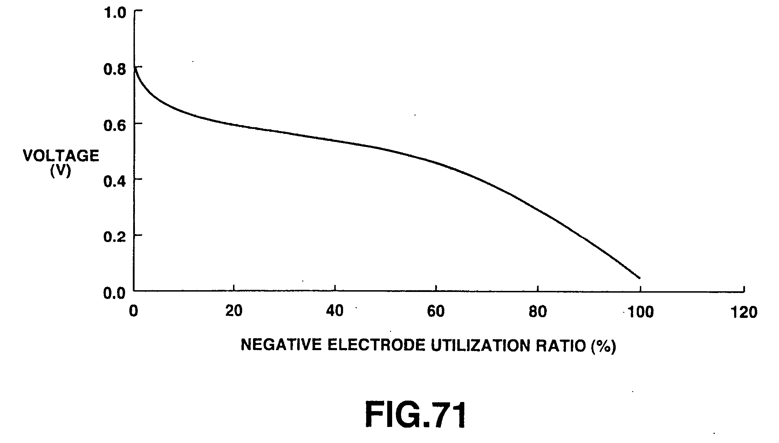

The discharging characteristic of the air cell was examined as follows. The air cell was charged at a current density of 1 mA/cm², hydrogen was stored in the hydrogen electrode, and the air cell was discharged at a current density of 1 mA/cm². As a result, the discharging characteristic shown in Fig. 71 was obtained, which showed that the air cell had a sufficient discharging function.

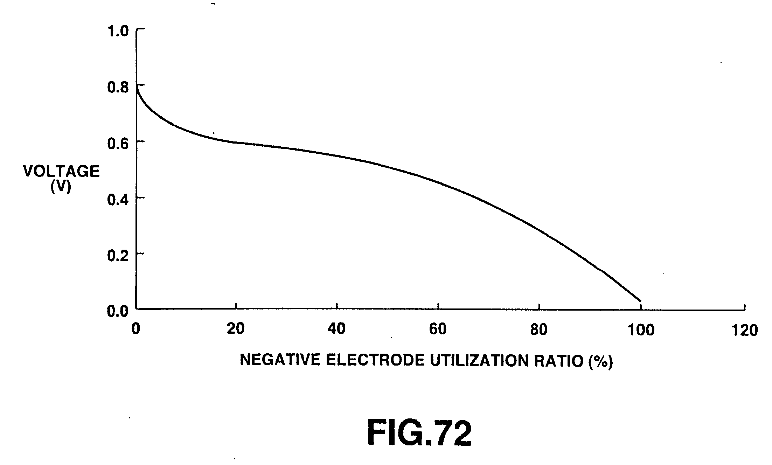

Additionally, the above air cell was assembled by previously storing hydrogen in the hydrogen electrode at a pressure of 100 kg/cm² and stacking the hydrogen electrode to the above joined body, and the discharging characteristic thereof was measured at a current density of 1 mA/cm². As a result, the discharging characteristic shown in Fig. 72 was obtained, which showed that the air cell had a sufficient discharging function.

### Example 57

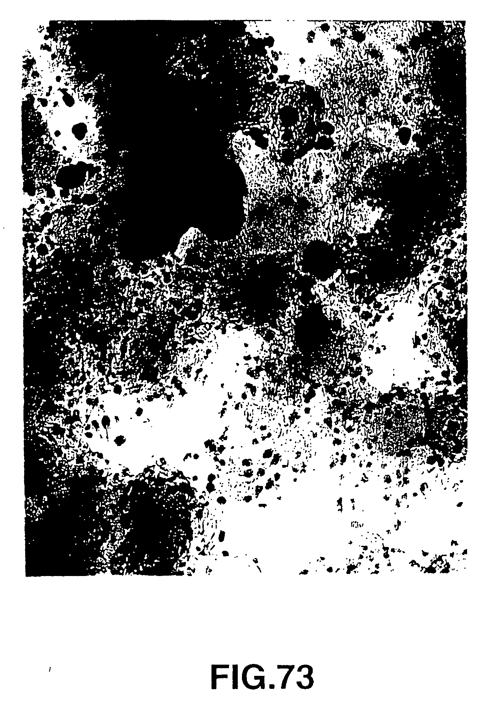

Sodium hydrogensulfite was added in a water solution of chloroplatinic acid, followed by agitation for several hours, and a water solution of hydrogen peroxide was gradually added to the above mixed solution with the pH of the solution kept at about 5 by addition of sodium hydroxide. A carbonaceous material containing 85 wt% of fullerene C₆₀ and 15 wt% of fullerene C₇₀ was added to the platinum-containing solution, and the mixture was strongly agitated. The added amount of the carbonaceous material is determined such that the content of platinum in a final platinum-supported carbonaceous material becomes 10 wt% by weight of the carbonaceous material. The resultant solution was then filtered, and a deposit was cleaned and dried at a reduced pressure, to obtain a platinum-supported carbonaceous material. This was taken as a sample in Example 57. As a result of elemental analysis, it was found that the content of platinum supported on the carbonaceous material was nearly equal to the estimated value, that is, about 10 wt%. The observation by TEM showed that fine particles of platinum having an average particle size of about 10 nm were precipitated in the carbonaceous material. The microscopic photograph is shown in Fig. 73.

### Comparative Example 13

The carbonaceous material containing 85 wt% of fullerene C₆₀ and 15 wt% of fullerene C₇₀ used in Example 57 was taken as a sample in Comparative Example 13.

### Example 58

In this example, a platinum-supported carbonaceous material was produced by the arc discharge process. An electrode having an upper carbon portion and a lower platinum portion joined to the upper portion was prepared as an electrode for arc discharge. The weight ratio between the upper carbon portion and the lower platinum portion was set at 9 : 1. Arc discharge was performed by using such an electrode under conditions with a helium pressure of 0.1 atm (about 1.0×10⁴ Pa), a constant discharge current of 200 A, and an electrode area of 0.8 cm². The arc discharge was stopped until the carbon portion and the platinum portion were evaporated by arc discharge. A carbonaceous material was initially formed within a chamber by arc discharge. As a result of analysis, it was found that the carbonaceous material contained fullerenes, nanotubes, and the like. Following the deposition of the carbonaceous material, fine particles of platinum were deposited on the surface of the carbonaceous material. The observation by TEM showed that an average particle size of the fine particles of platinum was about 10 nm. This was taken as a sample in Example 58.

### <Measurement of Hydrogen Storage Amount>

The sample prepared in each of Examples 57 and 58 and Comparative Example 13 was set in a sample chamber of an evaluation system, and moisture and gas in the sample were first removed by heating the sample chamber up to 150°C and simultaneously reducing the pressure in the sample chamber. Subsequently, the temperature of the sample was returned to room temperature, and hydrogen at 100 atm was introduced in the sample chamber. The sample was left for 12 hr under this hydrogen pressure of 100 atm. After that, the hydrogen gas was discharged out of the sample chamber until the pressure in the sample chamber became 1 atm, and the total amount (volume at 1 atm) of the hydrogen gas thus removed was measured. The hydrogen storage amount of the sample is determined by a difference between the total amount of the hydrogen gas removed from the sample chamber in which no sample is set and the total amount of the hydrogen gas removed from the sample chamber in which the sample is set. The results are shown in Table 4.

**Table 4**

| Sample Name | Hydrogen Storage Amount (ml/g) |
|---|---|
| Example 57 | 200 |
| Comparative Example 13 | 2 |
| Example 58 | 170 |

As is apparent from Table 4, there is a significantly large difference between the sample in Example 57 in which fine particles of platinum is chemically supported on the fullerene material and the sample in Comparative Example 13 in which no platinum is supported on the same fullerene material.

Further, as described in Example 58, a fullerene material on which fine particles of platinum is supported by arc discharge can exhibit a high hydrogen storage ability.

The material for hydrogen material in each of Examples 57 and 58 was subjected to the same complex impedance measurement as that described in Example 4. As a result, each material exhibited a circular-arc complex impedance similar to that shown in Fig. 3. Further, it was observed that the direct current resistance component of the complex impedance of the material in the state after hydrogen storage was at least about one order of magnitude smaller than that in the state before hydrogen storage.

### Example 59

A carbonaceous material containing 85 wt% of fullerene C₆₀ and 15 wt% of fullerene C₇₀ was mixed with a powder of platinum black at a mixing ratio of 9 : 1. This was taken as a sample in Example 59.

The sample was subjected to evaluation of hydrogen storage ability in the same manner as that described above. As a result, it was found that the sample had a hydrogen storage ability of 80 ml/g.

### Example 60

A platinum film having a thickness of about 20 nm was formed on a carbonaceous material containing 85 wt% of fullerene C₆₀ and 15 wt% of fullerene C₇₀ by sputtering platinum. The platinum-supported carbonaceous material was then ground. This was taken as a sample in Example 60. The sample was subjected to evaluation of hydrogen storage ability in the same manner as that described above. As a result, it was found that the sample had a hydrogen storage ability of 100 ml/g.

### Example 61

In this example, an alkali battery was produced as follows:

### <Preparation of Positive Electrode>

A paste was prepared by adding 3 wt% of carboxymethylcellulose and water to 10 g of particles of nickel hydroxide having an average particle size of 30 micrometer and 1 g of cobalt hydroxide, and kneading the resultant mixture. A sponging porous nickel member having a porosity of 95% was filled with the above paste, followed by drying and pressurization, and was punched to prepare a positive electrode having a diameter of 20 mm and a thickness of 0.7 mm.

### <Preparation of Negative Electrode>

A paste was prepared by adding 5 wt% of carboxymethylcellulose and water to a carbonaceous material for hydrogen storage (on which platinum was supported) produced in the same manner as that described in Example 57 or 58, and kneading the resultant mixture. A sponging porous nickel member having a porosity of 95% was filled with the above paste, followed by drying and pressurization, and was punched to prepare a negative electrode having a diameter of 20 mm and a thickness of 0.5 mm.

### <Production of Alkali Battery>

An alkali battery (secondary battery) was produced by using a water solution of potassium hydroxide having a concentration of 7N as an electrolyte as well as the positive electrode and negative electrode prepared in the above-described steps. The structure of the alkali battery thus produced is schematically shown in Fig. 38.

### <Charging/discharging Characteristic>

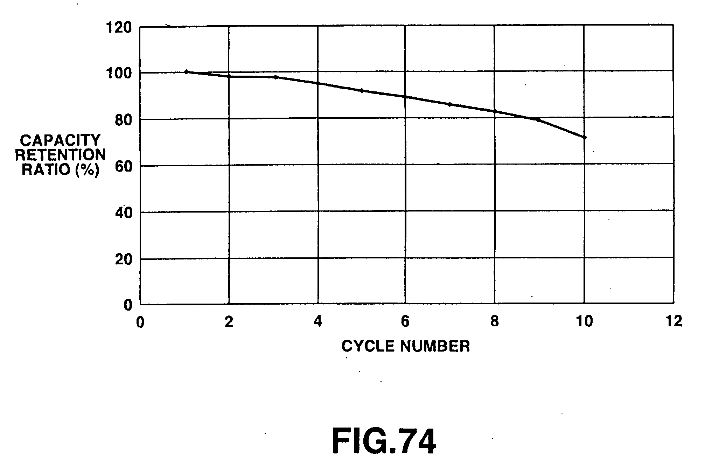

The above alkali battery was subjected to a charging/discharging test under a condition with 0.1 C, upper limit of 1.4 V and lower limit 0.8 V. The cycle characteristic is shown in Fig. 74. As is apparent from Fig. 74, it was found that the alkali battery exhibited a basic charging/discharging characteristic although the cycle life was not insufficient because of the battery structure.

### Example 62

In this example, an air cell was produced as follows:

### <Preparation of Air Electrode>

A platinum-supported carbonaceous material for hydrogen storage was produced in the same manner as that described in Example 57. The carbonaceous material and an alcohol solution of a perfluorosulfonic acid based high polymer electrolyte were dispersed in n-butyl acetate, to prepare a catalytic slurry.

A carbon non-woven fabric having a thickness of 250 micrometer was subjected to water-repellent finishing by dipping the carbon non-woven fabric in an emulsion of a fluorine based water-repellent agent, followed by drying, and heating it at 400°C. The carbon non-woven fabric was cut into a size of 4 cm×4 cm, and one surface thereof was coated with the above catalytic slurry.

### <Joining Air Electrode to High Polymer Electrolyte Film>

A perfluorosulfonic acid based high polymer electrolyte film having a thickness of 50 micrometer was joined to the surface, coated with the catalytic slurry, of the carbon non-woven fabric, followed by drying, to obtain the air electrode joined to the high polymer electrolyte film.

### <Preparation of Hydrogen Electrode>

A paste was prepared by adding 5 wt% of carboxymethylcellulose and water to the same platinum-supported carbonaceous material as that used for preparation of the above air electrode, and kneading the resultant mixture. A sponging porous nickel member having a porosity of 95% was filled with the above paste, followed by drying and pressurization, and was cut into a size of 4 cm×4 cm, to prepare a hydrogen electrode having a thickness of 0.5 mm.

### <Production of Air Cell>

The hydrogen electrode was stacked to the joined body of the air electrode and the high polymer electrolyte film, with the high polymer electrolyte film put between both the electrodes, and the outer surfaces of the stack were put between teflon sheets of 3 mm in thickness and fixed thereto with bolts. Additionally, the teflon sheet disposed on the air electrode side has a number of holes of 1.5 mm in diameter for smoothly supplying air to the air electrode.

The structure of the air cell thus assembled is schematically shown in Fig. 40.

### <Discharging Characteristic of Air Cell>

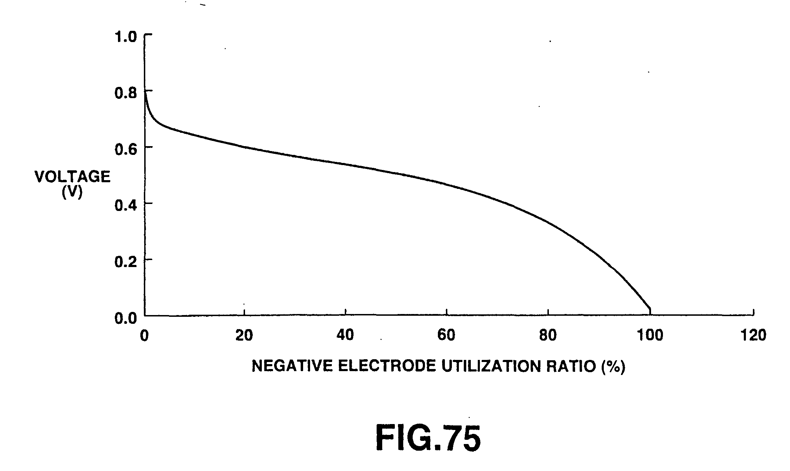

The discharging characteristic of the air cell was examined as follows. The air cell was charged at a current density of 1 mA/cm², hydrogen was stored in the hydrogen electrode, and the air cell was discharged at a current density of 1 mA/cm². As a result, the discharging characteristic shown in Fig. 75 was obtained, which showed that the air cell had a sufficient discharging function.

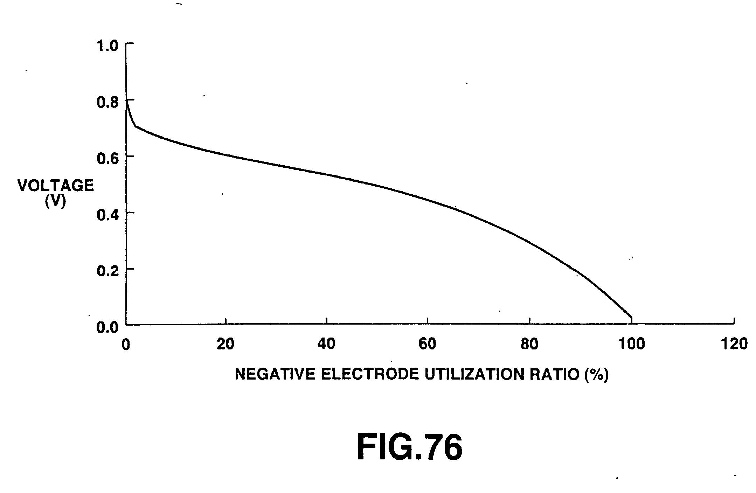

Additionally, the above air cell was assembled by previously storing hydrogen in the hydrogen electrode at a pressure of 100 kg/cm² and stacking the hydrogen electrode to the above joined body, and the discharging characteristic thereof was measured at a current density of 1 mA/cm². As a result, the discharging characteristic shown in Fig. 76 was obtained, which showed that the air cell had a sufficient discharging function.

### Example 63

In this example, a fuel cell having a configuration shown in Fig. 37 was produced.

The fuel cell has a negative electrode (fuel electrode or hydrogen electrode) 78 having a terminal 78a and a positive electrode (oxygen electrode) 79 having a terminal 79a. A catalyst 77a is in close-contact with or dispersed in the negative electrode 78, and a catalyst 77b is in close-contact with or dispersed in the positive electrode 79. A proton conductor portion 80 is held between both the electrodes 78 and 79. In operation of the fuel cell, on the negative electrode 78 side, hydrogen is supplied from an inlet 81 and is discharged from an outlet 82 (which may be sometimes omitted). In a period during which fuel (H₂) 83 passes through a flow passage 84, protons are derived from the fuel 83. The protons migrate to the positive electrode 79 side together with protons generated from the proton conductor portion 80 and react with oxygen (air) 88 flowing in a flow passage 86 in the direction from an inlet 85 to an outlet 87, to generate a desired electromotive force.

In the fuel cell having the above configuration, the carbonaceous material produced in Example 1 was used as a hydrogen supply source 89.

A proton conductor configured as poly(fullerene hydroxide) called fullerenol disclosed in PCT/JP00/04864 was used as the proton conductor portion 80.

The proton conductor was produced in the following procedure. First, 0.5 g of a powder of poly(fullerene hydroxide) was mixed in 1 g of tetrahydrofuran, and was perfectly dissolved therein by imparting ultrasonic vibration to the solution for 10 min, to obtain a fullerenol solution. On the other hand, a first electrode with a Pt catalyst was prepared, and a plastic mask having a rectangular hole was placed on the upwardly directed catalyst side of the first electrode. The above fullerenol solution was dropped on the first electrode to be uniformly spread in the hole of the mask, followed by drying at room temperature, and the mask was removed from the first electrode. A second electrode with a Pt catalyst, identical to the first electrode, was stacked on the first electrode with the catalyst surface of the second electrode directed downwardly. Subsequently, the two electrodes thus stacked were pressed at a pressure of about 5 ton/cm².

The hydrogen supply source as well as the proton conductor were assembled in the fuel cell as shown in Fig. 37. A power generation test was performed in a state in which one side of the proton conductor faced to the flow of hydrogen gas supplied from the hydrogen supply source 89 and the other side thereof was opened to atmospheric air.

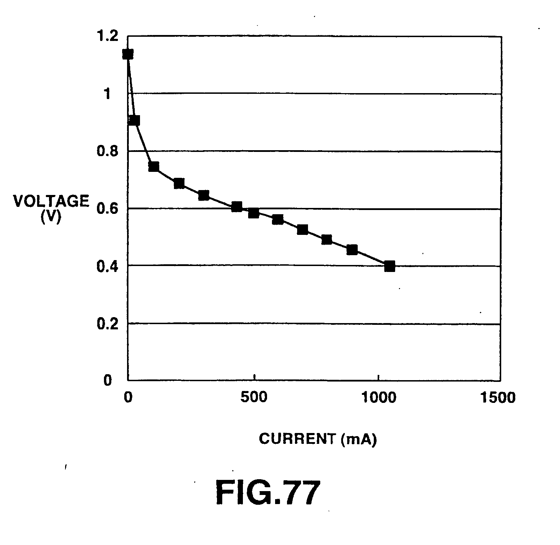

The result is shown in Fig. 77, which indicates an open voltage of about 1.2 V. Accordingly, it becomes apparent that the fuel cell having the hydrogen supply source 89 including the hydrogen storage material of the present invention exhibits a very good output characteristic.

In this example, the carbonaceous material for hydrogen storage produced in Example 1 is used for the hydrogen supply source of the above fuel cell; however, the carbonaceous material for hydrogen storage produced in each of the other examples can be similarly used as the hydrogen supply source of the fuel cell.

## Claims

1. A carbonaceous material for hydrogen storage for storing an amount of hydrogen in a form of protons.

2. The carbonaceous material for hydrogen storage as claimed in claim 1, having structural curvatures.

3. The carbonaceous material for hydrogen storage as claimed in claim 1, having a work function of greater than 4.9 eV.

4. The carbonaceous material for hydrogen storage as claimed in claim 3, consisting essentially of a carbon based material produced by an arc discharge process employing a carbon based electrode.

5. The carbonaceous material for hydrogen storage as claimed in claim 4, wherein the carbon based electrode is an anode and the carbon based material is produced on a cathode by the arc discharge process employing one of a DC power source and an AC power source.

6. The carbonaceous material for hydrogen storage as claimed in claim 4, wherein the carbon based material produced by the arc discharge process is deposited on one of an inner surface or in a vessel set in a reaction chamber.

7. The carbonaceous material for hydrogen storage as claimed in claim 3, wherein the carbon based material includes at least one type of carbon nanotube.

8. The carbonaceous material for hydrogen storage as claimed in claim 3, wherein the carbon based material includes one kind or a mixture of fullerene molecule Cn where n equals an even number of at least 20 such that the carbon based material has a spherical molecular structure.

9. The carbonaceous material for hydrogen storage as claimed in claim 8, wherein one kind of the fullerene molecule is fullerene C₆₀ or fullerene C₇₀, and the mixture of the fullerene molecule includes fullerene C₆₀ and fullerene C₇₀, or a higher molecular weight fullerene.

10. The carbonaceous material for hydrogen storage as claimed in claim 3, wherein the carbon based material is mixed with a transition metal.

11. The carbonaceous material for hydrogen storage as claimed in claim 3, wherein the transition metal is selected from the group consisting of iron, a rare earth metal, nickel, cobalt, palladium, rhodium, platinum, and alloys thereof.

12. The carbonaceous material for hydrogen storage as claimed in claim 3 further comprising a metal at least supported on a surface of the carbon based material, wherein the metal has a catalytic ability for separating a hydrogen molecule into hydrogen atoms and further separating hydrogen atoms into protons and electrons.

13. The carbonaceous material for hydrogen storage as claimed in claim 12, wherein the metal is 10 wt% or less by weight of the carbon based material.

14. The carbonaceous material for hydrogen storage as claimed in claim 12, wherein the metal is selected from the group consisting of platinum and a platinum alloy.

15. The carbonaceous material for hydrogen storage as claimed in claim 3, wherein an electron doner is mixed therewith or bonded thereto.

16. The carbonaceous material for hydrogen storage as claimed in claim 15, wherein the electron doner is selected from the group consisting of fluorine molecules and amine based molecules.

17. The carbonaceous material for hydrogen storage as claimed in claim 3, storing hydrogen at room temperature or higher.

18. A method of producing a carbonaceous material for hydrogen storage comprising the step of producing a carbonaceous material for hydrogen storage for storing an amount of hydrogen in a form of protons by an arc discharge process employing a carbon based electrode, a Chemical Vapor Deposition (CVD) process, a laser abrasion process, or an SiC (Silicon Carbide) high temperature treatment process.

19. The method of producing a carbonaceous material as claimed in claim 18, wherein the carbonaceous material has structural curvatures.

20. The method of producing a carbonaceous material as claimed in claim 18, wherein the carbonaceous material has a work function of greater than 4.9 eV.

21. The method of producing a carbonaceous material as claimed in claim 20, wherein the carbonaceous material includes at least one type of carbon nanotube.

22. The method of producing a carbonaceous material as claimed in claim 20, wherein the carbonaceous material includes one kind or a mixture of fullerene molecule Cn where n equals an even number of at least 20 such that the carbon based material has a spherical molecular structure.

23. The method of producing a carbonaceous material as claimed in claim 22, wherein one kind of the fullerene molecule is fullerene C₆₀ or fullerene C₇₀, and the mixture of the fullerene molecule includes fullerene C₆₀ and fullerene C₇₀, or a higher molecular weight fullerene.

24. The method of producing a carbonaceous material as claimed in claim 20, wherein the carbonaceous material is mixed with a transition metal.

25. The method of producing a carbonaceous material as claimed in claim 24, wherein the transition metal is platinum.

26. The method of producing a carbonaceous material as claimed in claim 18, wherein a carbon based electrode is used as at least one of the electrodes arranged to face to each other in a reaction chamber (vacuum chamber), and the arc discharge is performed in the reaction chamber in the arc discharge process.

27. The method of producing a carbonaceous material as claimed in claim 26, wherein a carbon based electrode including the transition metal is used as at least one of the electrodes.

28. The method of producing a carbonaceous material as claimed in claim 26, wherein the transition metal is selected from the group consisting of iron, a rare earth metal, nickel, cobalt, palladium, rhodium, platinum, and alloys thereof.

29. The method of producing a carbonaceous material as claimed in claim 26, wherein the arc discharge process is performed by employing one of a DC power source and an AC power source to produce the carbonaceous material for hydrogen storage in one of an inner surface or in a vessel set in a reaction chamber.

30. The method of producing a carbonaceous material as claimed in claim 26, wherein the carbon based electrode is an anode and the carbonaceous material for hydrogen storage is produced on a cathode by the arc discharge process employing a DC power source.

31. The method of producing a carbonaceous material as claimed in claim 26, the carbonaceous material for hydrogen storage as claimed in claim 3 further comprising a metal at least supported on a surface of the carbon based material, wherein the metal has a catalytic ability for separating a hydrogen molecule into hydrogen atoms or further separating hydrogen atoms into protons and electrons.

32. The method of producing a carbonaceous material as claimed in claim 31, wherein the metal is 10 wt% or less by weight of the carbonaceous material for hydrogen storage.

33. The method of producing a carbonaceous material as claimed in claim 31, wherein the metal is selected from the group consisting of platinum and a platinum alloy.

34. The method of producing a carbonaceous material as claimed in claim 20, wherein an electron doner is mixed with or bonded to the carbonaceous material for hydrogen storage.

35. The method of producing a carbonaceous material as claimed in claim 34, wherein the electron doner is selected from the group consisting of fluorine molecules and amine based molecules.

36. The method of producing a carbonaceous material as claimed in claim 20, wherein the carbonaceous material stores hydrogen at room temperature or higher.

37. A cell, comprising:
a negative electrode;
a positive electrode, wherein at least one of the negative electrode and the positive electrode includes a carbonaceous material for hydrogen storage capable of storing an amount of hydrogen in a form of protons; and
an electrolyte disposed between the negative electrode and the positive electrode.

38. The cell as claimed in claim 37, which is an alkali battery.

39. The cell as claimed in claim 37, which is an air cell.

40. A fuel cell, comprising:
a negative electrode, a positive electrode, and a proton conductor configured in a stack arrangement; and
a hydrogen storage portion including a carbonaceous material for storing hydrogen in a form of protons, wherein the hydrogen storage portion supplies an amount of hydrogen to the negative electrode.

41. A material for hydrogen storage, wherein at least one of a direct current resistance of the material in a hydrogen storage state is at least 50% lower than a direct current resistance of the material in a hydrogen non-storage state, and a real number portion of a complex impedance component of the material in the hydrogen storage state is at least 50% lower than a real number portion of a complex impedance component of the material in the hydrogen non-storage state.

42. The material for hydrogen storage as claimed in claim 41, wherein the resistance lowering ratio is 1 shift or more.

43. The material for hydrogen storage as claimed in claim 41, wherein a difference between the direct current resistance in the hydrogen storage state and hydrogen non-storage state of at least about 50% is equivalent to an amount of hydrogen storage of at least about 1 wt%.

44. The material for hydrogen storage as claimed in claim 41, wherein the material includes a carbonaceous material.

45. The material for hydrogen storage as claimed in claim 41, wherein the material stores hydrogen in the form of protons.

46. A cell, comprising:
a negative electrode;
a positive electrode, wherein at least one of the negative electrode and the positive electrode includes a material for hydrogen storage, and wherein at least one of a direct current resistance of the material in a hydrogen storage state is at least 50% lower than a direct current resistance of the material in a hydrogen non-storage state, and a real number portion of a complex impedance component of the material in the hydrogen storage state is at least 50% lower than a real number portion of a complex impedance component of the material in the hydrogen non-storage state; and
an electrolyte disposed between the negative electrode and positive electrode.

47. The cell as claimed in claim 46, which is an alkali battery.

48. The cell as claimed in claim 46, which is an air cell.

49. A fuel cell, comprising:
a negative electrode, a positive electrode, and a proton conductor configured in a stack arrangement; and
a hydrogen storage portion including a material having a hydrogen storage ability, wherein the hydrogen storage portion supplies an amount of hydrogen to the negative electrode, and wherein at least one of a direct current resistance of the material in a hydrogen storage state is at least 50% lower than a direct current resistance of the material in a hydrogen non-storage state, and a real number portion of a complex impedance component of the material in the hydrogen storage state is at least 50% lower than a real number portion of a complex impedance component of the material in the hydrogen non-storage state.

50. A method of producing a hydrogen storage material, the method comprising the steps of:
applying a positive voltage to a material capable of storing hydrogen; and
processing the material in a gas atmosphere containing hydrogen.

51. The method of producing a hydrogen storage material as claimed in claim 50, wherein the material capable of storing hydrogen includes a carbonaceous material.

52. The method of producing a hydrogen storage material as claimed in claim 51, wherein the carbonaceous material includes a carbon based material having a large surface area and composed of molecules having structural curvatures.

53. The method of producing a hydrogen storage material as claimed in claim 52, wherein the carbonaceous material is selected from the group consisting of fullerenes, carbon nanofibers, carbon nanotubes, carbon soot, nanocapsules, Bucky onions, and carbon fibers.

54. A material for hydrogen storage comprising a material capable of storing hydrogen produced by applying a positive voltage to the material under a gas atmosphere containing hydrogen.

55. The material for hydrogen storage as claimed in claim 54, wherein the material capable of storing hydrogen includes a carbonaceous material.

56. The material for hydrogen storage as claimed in claim 55, wherein the carbonaceous material includes a carbon based material having a large surface area and composed of molecules having structural curvatures.

57. The material for hydrogen storage as claimed in claim 56, wherein the carbonaceous material is selected from the group consisting of fullerenes, carbon nanofibers, carbon nanotubes, carbon soot, nanocapsules, Bucky onions, and carbon fibers.

58. A method of controlling a release of hydrogen from a hydrogen storage material, the method comprising the steps of:
applying a first positive voltage to the hydrogen storage material to stop the release of hydrogen therefrom; and
applying a second positive voltage, which is lower than the first positive voltage, to the hydrogen storage material to release hydrogen therefrom.

59. The method of controlling a release of hydrogen from a hydrogen storage material as claimed in claim 58, wherein the hydrogen storage material includes a carbonaceous material.

60. The method of controlling a release of hydrogen from a hydrogen storage material as claimed in claim 58, wherein the carbonaceous material includes a carbon based material having a large surface area and composed of molecules having structural curvatures.

61. The method of controlling a release of hydrogen from a hydrogen storage material as claimed in claim 60, wherein the carbonaceous material is selected from a group consisting of fullerenes, carbon nanofibers, carbon nanotubes, carbon soot, nanocapsules, Bucky onions, and carbon fibers.

62. A hydrogen storage and release system, comprising:
a chamber for containing a hydrogen storage material;
a voltage source for applying a positive voltage to the material; and
a controller for controlling the voltage source.

63. The hydrogen storage and release system as claimed in claim 62, wherein the chamber includes a pressure vessel.

64. A cell, comprising:
a negative electrode;
a positive electrode, wherein at least one of the negative electrode and the positive electrode includes a hydrogen storage material which is formed by placing a material capable of storing hydrogen in a gas atmosphere containing hydrogen and applying a positive voltage to the material; and
an electrolyte disposed between the negative electrode and positive electrode.

65. A fuel cell, comprising:
a negative electrode, a positive electrode, and a proton conductor configured in a stack arrangement; and
a hydrogen supply portion including a hydrogen storage material for supplying hydrogen to the negative electrode, and further including a voltage applying means for applying a positive voltage to the material.

66. The fuel cell as claimed in claim 65, wherein the hydrogen supply portion includes a chamber for containing the hydrogen storage material, a voltage source capable of applying the positive voltage to the hydrogen storage material, and a controller for controlling the voltage source.

67. The fuel cell as claimed in claim 66, wherein the chamber includes a pressure vessel.

68. A method of controlling a release of hydrogen for a fuel cell, wherein the fuel cell includes a negative electrode, a positive electrode, and a proton conductor configured in a stack arrangement, and further includes a hydrogen supply portion containing a hydrogen storage material, the method comprising the steps of:
supplying hydrogen to the negative electrode from the hydrogen storage material; and
controlling the supplying of hydrogen to the negative electrode by controlling a positive voltage applied to the material.

69. The method of controlling a release of hydrogen for a fuel cell as claimed in claim 68, wherein the hydrogen storage material includes a carbonaceous material.

70. The method of controlling a release of hydrogen for a fuel cell as claimed in 69, wherein the carbonaceous material includes a carbon based material having a large surface area and composed of molecules having structural curvatures.

71. The method of controlling a release of hydrogen for a fuel cell as claimed in claim 70, wherein the carbonaceous material is selected from a group consisting of fullerenes, carbon nanofibers, carbon nanotubes, carbon soot, nanocapsules, Bucky onions, and carbon fibers.

72. A carbonaceous material for hydrogen storage consisting essentially of a baked body of a polymer of one type of fullerene molecule or a mixture thereof.

73. The carbonaceous material for hydrogen storage as claimed in claim 72, wherein the fullerene molecule has the formula Cₙ where n is an even integer of at least 20 such that the carbonaceous material has a spherical molecular structure, and is polymerized by baking at a temperature ranging from 600°C to 2000°C .

74. The carbonaceous material for hydrogen storage as claimed in claim 73, wherein one kind of the fullerene molecule is fullerene C₆₀ or fullerene C₇₀, and the mixture of the fullerene molecule includes fullerene C₆₀ and fullerene C₇₀, or a higher molecular weight fullerene.

75. The carbonaceous material for hydrogen storage as claimed in claim 72, wherein one type of fullerene molecule or the mixture thereof contains one of a metal or a compound for promoting ordering of carbon during baking of the baked body.

76. The carbonaceous material for hydrogen storage as claimed in claim 75, wherein the metal or the compound for ordering is selected from the group consisting of a metal, a metal oxide, and a metal coordination compound.

77. The carbonaceous material for hydrogen storage as claimed in claim 75, wherein the metal for ordering is a transition metal or lanthanoid.

78. The carbonaceous material for hydrogen storage as claimed in claim 77, wherein the transition metal is iron, nickel, or vanadium.

79. The carbonaceous material for hydrogen storage as claimed in claim 72 further comprising a catalyst material of one of a metal and an alloy supported on a surface of the baked body in a form of one of fine particles and a film, wherein the catalyst material has a catalytic ability for separating a hydrogen molecule into hydrogen atoms and further separating hydrogen atoms into protons and electrons.

80. The carbonaceous material for hydrogen storage as claimed in claim 72, wherein the baked body is produced by baking one type of fullerene molecule or a mixture thereof together with a metal or a compound for promoting ordering of carbon.

81. The carbonaceous material for hydrogen storage as claimed in claim 79, wherein the fine particles of the catalyst include an average particle size of 1 micrometer or less.

82. The carbonaceous material for hydrogen storage as claimed in claim 79, wherein the fine particles of the catalyst are in an amount of 10 wt% or less by weight of the carbonaceous material.

83. The carbonaceous material for hydrogen storage as claimed in claim 79, wherein the fine particles of the catalyst metal supported on the baked body are selected from the group consisting of platinum and palladium, and the catalyst particles of the alloy are the platinum fine particles.

84. The carbonaceous material for hydrogen storage as claimed in claim 79, wherein the catalyst metal is supported on the baked body by a chemical supporting process including a solution containing a metal complex.

85. The carbonaceous material for hydrogen storage as claimed in claim 79, wherein the catalyst metal is supported on the baked body by an arc discharge process including an electrode containing platinum.

86. A method of producing a carbonaceous material for hydrogen storage, the method comprising the steps of:
providing a material of one type of fullerene molecule Cₙ, or a mixture thereof wherein n equals an even integer of at least 20 such that the material has a spherical molecular structure; and
baking the material in a non-oxidizing gas to polymerize one type of fullerene molecule Cₙ or a mixture thereof.

87. The method of producing a carbonaceous material for hydrogen storage as claimed in claim 86, wherein one kind of the fullerene molecule is fullerene C₆₀ or fullerene C₇₀, and the mixture of the fullerene molecule includes fullerene C₆₀ and fullerene C₇₀, or a higher molecular weight fullerene.

88. The method of producing a carbonaceous material for hydrogen storage as claimed in claim 86, wherein the non-oxidizing gas is selected from the group consisting of one type of inert gas, nitrogen gas, and hydrogen gas, or the mixture of two or more kinds.

89. The method of producing a carbonaceous material for hydrogen storage as claimed in claim 86 further comprising the step of mixing the non-oxidizing gas with a gas containing an organic compound.

90. The method of producing a carbonaceous material for hydrogen storage as claimed in claim 86, wherein the baking step includes baking the material at a temperature ranging from 600°C to 2000°C (preferably 800°C to 1300°C).

91. The method of producing a carbonaceous material for hydrogen storage as claimed in claim 86, wherein the baking step includes baking one kind of the fullerene molecule or the mixture thereof together with one of a metal and a compound for promoting ordering of carbon.

92. The method of producing a carbonaceous material for hydrogen storage as claimed in claim 91, wherein the metal or the compound for ordering is selected from a group consisting of a metal, a metal oxide, and a metal coordination compound.

93. The method of producing a carbonaceous material for hydrogen storage as claimed in claim 92, wherein the metal for ordering contains a transition metal or lanthanoid.

94. The method of producing a carbonaceous material for hydrogen storage as claimed in claim 93, wherein the transition metal is one of iron, nickel, and vanadium.

95. The method of producing a carbonaceous material for hydrogen storage as claimed in claim 86 further comprising the step of supporting a catalyst material on a surface of the baked body in a form of one of fine particles and a film, wherein the catalyst material is a metal having a catalytic ability for separating a hydrogen molecule into hydrogen atoms and further separating hydrogen atoms into protons and electrons.

96. The method of producing a carbonaceous material for hydrogen storage as claimed in claim 95, wherein the baking step includes baking one kind of the fullerene molecule or the mixture thereof together with one of a metal and a compound for promoting ordering of carbon.

97. The method of producing a carbonaceous material for hydrogen storage as claimed in claim 95, wherein the fine particles have an average particle size of 1 micrometer or less.

98. The method of producing a carbonaceous material for hydrogen storage as claimed in claim 95, wherein an amount of the fine particles is 10 wt% or less by weight of the carbonaceous material.

99. The method of producing a carbonaceous material for hydrogen storage as claimed in claim 95, wherein the catalyst fine particles of the metal supported on the baked body are platinum and palladium, and the catalyst fine particles of the alloy are platinum fine particles.

100. The method of producing a carbonaceous material for hydrogen storage as claimed in claim 99, wherein the supporting step includes supporting the platinum or platinun catalyst fine particles on the baked body by a chemical supporting process having a solution containing a platinum complex.

101. The method of producing a carbonaceous material for hydrogen storage as claimed in claim 95, wherein the supporting step includes supporting the catalyst metal on the surface of the baked body by one of a sputtering process, a chemical supporting process, and a kneading process.

102. The method of producing a carbonaceous material for hydrogen storage as claimed in claim 99, wherein the supporting step includes supporting the fine particles including one of platinum and a platinum alloy on the surface of the baked body by an arc discharge process having an electrode containing platinum.

103. A cell, comprising:
a negative electrode;
a positive electrode, wherein at least one of the negative electrode and the positive electrode includes a carbonaceous material for hydrogen storage consisting essentially of a polymer of one type of fullerene molecule or a mixture thereof; and
an electrolyte disposed between the negative electrode and positive electrode.

104. The cell as claimed in claim 103, which is an alkali battery.

105. The cell as claimed in claim 103, which is an air cell.

106. A fuel cell, comprising:
a negative electrode, a positive electrode, and a proton conductor configured in a stack arrangement; and
a hydrogen storage portion including a carbonaceous material for storing hydrogen, the carbonaceous material consisting essentially of a baked body of a polymer of fullerene molecule or a polymer of a mixture thereof, wherein the hydrogen storage portion supplies hydrogen to the negative electrode.

107. A carbonaceous material for hydrogen storage consisting essentially of a polymer produced by electrolytic polymerization of one kind of fullerene molecule or a mixture thereof.

108. The carbonaceous material for hydrogen storage as claimed in claim 107, wherein the polymer produced by electrolytic polymerization contains a cycloaddition polymer of fullerene molecule represented by Cn, wherein n equals an integer such that the material can be geometrically formed into a spherical compound.

109. The carbonaceous material for hydrogen storage as claimed in claim 108, wherein the fullerene molecule is fullerene C₆₀ and/or fullerene C₇₀.

110. The carbonaceous material for hydrogen storage as claimed in claim 108, wherein the cycloaddition polymer is produced by polymerization of at least one type of fullerene molecule by 1,2-addition bonding at cyclohexatrienyl sites such that the cycloaddition polymer has the formula (Cₙ)ₘ where n is similar to the above described one and m is an integer.

111. The carbonaceous material for hydrogen storage as claimed in claim 107, wherein the polymer produced by electrolytic polymerization contains counter ions imparted from a supporting electrolyte of an electrolytic solution.

112. The carbonaceous material for hydrogen storage as claimed in claim 111, wherein the counter ions include a metal ion selected from the group consisting of Li, Be, Na, Mg, Ca, K, Ce, Al, Mn, Fe, Co, and clusters thereof.

113. The carbonaceous material for hydrogen storage as claimed in claim 107, wherein the polymer is produced by electrolytic polymerization including a nonaqueous solvent mixture having a first solvent for dissolving at least one type of fullerene molecule and a second solvent for dissolving a supporting electrolyte.

114. The carbonaceous material for hydrogen storage as claimed in claim 113, wherein the first solvent has a pi electron molecular structure and a low polarity, and wherein the second solvent is a polar solvent.

115. The carbonaceous material for hydrogen storage as claimed in claim 113, wherein the first solvent is selected from the group consisting of carbon disulfide, toluene, benzene, orthodichlorobenzene, and mixtures thereof, and wherein the second solvent is selected from a group consisting of acetonitrile, dimethylformamide, dimethylsulfoxide, dimethylacetoamide, and mixtures thereof.

116. A carbonaceous material for hydrogen storage, consisting essentially of a polymer produced by vibration of one type of fullerene molecule or a mixture thereof.

117. The carbonaceous material for hydrogen storage as claimed in claim 116, wherein the vibration is conducted by one of a mechanical shaking process and an ultrasonic wave irradiation process in an inert gas.

118. The carbonaceous material for hydrogen storage as claimed in claim 116, wherein the polymer produced by electrolytic polymerization contains a cycloaddition polymer of fullerene molecule represented by Cn, wherein n equals an integer such that the material can be geometrically formed into a spherical compound.

119. The carbonaceous material for hydrogen storage as claimed in claim 118, wherein the fullerene molecule is fullerene C₆₀ and/or fullerene C₇₀.

120. The carbonaceous material for hydrogen storage as claimed in claim 118, wherein the cycloaddition polymer is produced by polymerization of at least one type of fullerene molecule by 1,2-addition bonding at cyclohexatrienyl sites such that the cycloaddition polymer has the formula (Cₙ)ₘ where n is similar to the above described one and m is an integer.

121. The carbonaceous material for hydrogen storage as claimed in claim 116, wherein the fullerene molecule is polymerized by vibration in a presence of fine particles of a catalytic metal.

122. The carbonaceous material for hydrogen storage as claimed in claim 121, wherein the catalytic metal is selected from the group consisting of Li, Be, Na, Mg, Ca, K, Ce, Al, Mn, Fe, Co.

123. A cell, comprising:
a negative electrode;
a positive electrode, wherein the negative electrode and/or the positive electrode includes a carbonaceous material for hydrogen storage consisting essentially of an electrolytic polymer of one type of fullerene molecule or a mixture thereof, or a polymer produced by vibration of one type of fullerene molecule or a mixture thereof; and
an electrolyte disposed between the negative electrode and positive electrode.

124. The cell as claimed in claim 123, which is an alkali battery.

125. The cell as claimed in claim 123, which is an air cell.

126. A fuel cell, comprising:
a negative electrode, a positive electrode, and a proton conductor configured in a stack arrangement; and
a hydrogen storage portion including a carbonaceous material for hydrogen storage consisting essentially of an electrolytic polymer of one type of fullerene molecule or a mixture thereof, or a polymer produced by vibration of one type of fullerene molecule or a mixture thereof, wherein the hydrogen storage portion supplies hydrogen to the negative electrode.

127. A carbonaceous material for hydrogen storage, comprising a carbonaceous material derivative formed by introducing groups to a carbonaceous material consisting essentially of carbon wherein the groups allow hydrogen bonding with protons.

128. The carbonaceous material for hydrogen storage as claimed in claim 127, wherein the groups at least contain oxygen atoms, fluorine atoms, nitrogen atoms, sulfur atoms, chlorine atoms or mixtures thereof.

129. The carbonaceous material for hydrogen storage as claimed in claim 127, wherein a ratio of a number of carbon atoms of the carbonaceous material to a number of the groups ranges from 10 : 1 to 1 : 1.

130. The carbonaceous material for hydrogen storage as claimed in claim 127, wherein the carbonaceous material contains at least one type of carbon cluster which is an aggregate of carbon atoms.

131. The carbonaceous material for hydrogen storage as claimed in claim 130, wherein the at least one type of carbon cluster is selected from the group consisting of at least one type of fullerene molecule, at least one type of molecule having a partial spherical structure such that at least a portion of the structure has open ends, at least one type of carbon molecule having a diamond structure, and a mixture thereof.

132. The carbonaceous material for hydrogen storage as claimed in claim 130, wherein the at least one type of fullerene molecule includes at least one type of spherical carbon cluster having a formula Cₘ where m equals 36,60,70,78,82, or 84.

133. The carbonaceous material for hydrogen storage as claimed in claim 127, wherein the carbonaceous material includes at least one type of carbon nanotube.

134. The carbonaceous material for hydrogen storage as claimed in claim 127, wherein the carbonaceous material includes a plurality of carbon clusters bonded together.

135. A method of producing a carbonaceous material for hydrogen storage, the method comprising the steps of:
providing a carbonaceous material consisting essentially of carbon; and
introducing groups to the carbonaceous material by one of baking the carbonaceous material in a gas atmosphere containing the groups and treating the carbonaceous material in a solution containing the groups, wherein the groups allow hydrogen bonding with protons.

136. The method of producing a carbonaceous material for hydrogen storage as claimed in claim 135, wherein the groups include at least one of oxygen atoms, fluorine atoms, nitrogen atoms, sulfur atoms, chlorine atoms, and mixtures thereof.

137. The method of producing a carbonaceous material for hydrogen storage as claimed in claim 135, wherein the groups contain sulfur atoms, and wherein the solution is fuming sulfuric acid.

138. The method of producing a carbonaceous material for hydrogen storage as claimed in claim 135 further comprising the step of flowing a nitrogen oxide gas into the solution, wherein the groups contain nitrogen atoms.

139. The method of producing a carbonaceous material for hydrogen storage as claimed in claim 135, wherein a ratio of carbon atoms of the carbonaceous material to the groups ranges from 10 : 1 to 1: 1.

140. The method of producing a carbonaceous material for hydrogen storage as claimed in claim 135, wherein the carbonaceous material contains at least one type of carbon cluster which is an aggregate of carbon atoms.

141. The method of producing a carbonaceous material for hydrogen storage as claimed in claim 140, wherein the carbon clusters are selected from the group consisting of at least one type of fullerene molecule, at least one type of molecule having a partial spherical structure such that at least a portion of the structure has open ends, at least one type of carbon molecule having a diamond structure, and a mixture thereof.

142. The method of producing a carbonaceous material for hydrogen storage as claimed in claim 141, wherein at least one type of fullerene molecule includes at least one type of spherical carbon cluster having a formula Cₘ where m equals 36, 60, 70, 78, 82, or 84.

143. The method of producing a carbonaceous material for hydrogen storage as claimed in claim 135, wherein the carbonaceous material includes at least one type of carbon nanotube.

144. The method of producing a carbonaceous material for hydrogen storage as claimed in claim 135, wherein the carbonaceous material includes a plurality of carbon clusters bonded together.

145. A cell, comprising:
a negative electrode;
a positive electrode, wherein at least one of the negative electrode and the positive electrode includes a carbonaceous material derivative formed by introducing groups to a carbonaceous material consisting essentially of carbon wherein the groups allow hydrogen bonding with protons; and
an electrolyte disposed between the negative electrode and the positive electrode.

146. The cell as claimed in claim 145, which is an alkali battery.

147. The cell as claimed in claim 145, which is an air cell.

148. A fuel cell, comprising:
a negative electrode, a positive electrode, and a proton conductor configured in a stack arrangement; and
a hydrogen storage portion including a carbonaceous material derivative formed by introducing groups allowing hydrogen bonding with protons to a carbonaceous material consisting essentially of carbon, wherein the hydrogen storage portion supplies hydrogen to the negative electrode.

149. A carbonaceous material for hydrogen storage, comprising a carbonaceous material having a structural bending portion.

150. The carbonaceous material for hydrogen storage as claimed in claim 149, wherein the carbonaceous material further comprises a carbon-containing compound and a catalyst selected from the group consisting of a transition metal, a transition metal oxide, and a transition metal carbide, wherein the carbonaceous material is produced by thermal decomposition of the carbon-containing compound on a surface of the catalyst.

151. The carbonaceous material for hydrogen storage as claimed in claim 149, wherein the carbonaceous material is produced by thermal decomposition of a carbon-containing compound on a surface of a catalyst selected from the group consisting of a transition metal, a transition metal oxide, and a transition metal carbide.

152. The carbonaceous material for hydrogen storage as claimed in claim 150 or claim 151, wherein the carbonaceous material includes graphite, and wherein the transition metal contains a metal selected from the group consisting of iron, nickel, and cobalt.

153. A method of producing a carbonaceous material for hydrogen storage, comprising the step of:
producing a carbonaceous material by thermal decomposition of a carbon-containing compound on the surface of a catalyst selected from the group consisting of a transition metal, a transition metal oxide, and a transition metal carbide.

154. The method of producing a carbonaceous material for hydrogen storage as claimed in claim 153, wherein the carbonaceous material haS a structural bending portion on the surface of the catalyst.

155. The method of producing a carbonaceous material for hydrogen storage as claimed in claim 153, wherein a metal selected from the group consisting of iron, nickel, and cobalt is used as the transition metal, and wherein graphite is produced as the carbonaceous material.

156. The method of producing a carbonaceous material for hydrogen storage as claimed in claim 153, wherein a compound containing carbon and hydrogen is used as the carbon-containing compound to be thermally decomposed.

157. The method of producing a carbonaceous material for hydrogen storage as claimed in claim 153, wherein the carbon-containing compound is thermally decomposed at a temperature ranging from 900°C to 1300°C.

158. The method of producing a carbonaceous material for hydrogen storage as claimed in claim 153, wherein the carbon-containing compound is evaporated in the gaseous state, together with the carrier gas.

159. The method of producing a carbonaceous material for hydrogen storage as claimed in claim 158, wherein a reducing gas is added to and mixed in the carrier gas.

160. The method of producing a carbonaceous material for hydrogen storage as claimed in claim 157, wherein the carbonaceous material produced by thermal decomposition is combined with the catalyst.

161. The method of producing a carbonaceous material for hydrogen storage as claimed in claim 160, wherein the catalyst is removed from the carbonaceous material produced by thermal decomposition.

162. A cell, comprising:
a negative electrode;
a positive electrode, wherein at least one of the negative electrode and the positive electrode includes a carbonaceous material having a plurality of molecules forming a structural bending portion of the carbonaceous material; and
an electrolyte disposed between the negative electrode and positive electrode.

163. The cell as claimed in claim 162, which is an alkali battery.

164. The cell as claimed in claim 162, which is an air cell.

165. A fuel cell, comprising:
a negative electrode, a positive electrode, and a proton conductor configured in a stack arrangement; and
a hydrogen storage portion including a carbonaceous material having a plurality of molecules forming a structural bending portion of the carbonaceous material, wherein the hydrogen storage portion supplies hydrogen to the negative electrode.

166. A carbonaceous material for hydrogen storage, comprising a carbonaceous material having a plurality of fine metal particles supported thereon, wherein the material exhibits a catalytic ability to separate a hydrogen molecule into hydrogen atoms and to further separate hydrogen atoms into protons and electrons.

167. The carbonaceous material for hydrogen storage as claimed in claim 166, wherein the fine metal particles have an average particle size of 1 micrometer or less.

168. The carbonaceous material for hydrogen storage as claimed in claim 166, wherein the fine metal particles are in an amount of 10 wt% or less by weight of the carbonaceous material.

169. The carbonaceous material for hydrogen storage as claimed in claim 166, wherein the fine metal particles include one of platinum and a platinum alloy.

170. The carbonaceous material for hydrogen storage as claimed in claim 166, wherein the fine metal particles are supported on the carbonaceous material by a chemical supporting process including a solution containing a platinum complex.

171. The carbonaceous material for hydrogen storage as claimed in claim 166, wherein the fine metal particles are supported on the carbonaceous material by an arc discharge process including a platinum-containing electrode.

172. The carbonaceous material for hydrogen storage as claimed in claim 166, wherein the carbonaceous material contains one of at least one type of fullerene molecule and a polymer containing at least one type of fullerene molecule produced by plasma polymerization.

173. The carbonaceous material for hydrogen storage as claimed in claim 172, wherein the at least one type of fullerene molecule has a formula Cₙ where n is an even integer of at least 20 such that the carbonaceous material has a spherical molecular structure.

174. The carbonaceous material for hydrogen storage as claimed in claim 172, wherein one kind of the fullerene molecule is fullerene C₆₀ or fullerene C₇₀, and the mixture of the fullerene molecule includes fullerene C₆₀ and fullerene C₇₀, or a higher molecular weight fullerene.

175. The carbonaceous material for hydrogen storage as claimed in claim 166, wherein the carbonaceous material contains at least one type of carbon nanotube.

176. A method of producing a carbonaceous material for hydrogen storage, the method comprising the steps of:
providing a carbonaceous material having a surface;
providing a metal-based material; and
supporting a plurality of fine metal particles obtained from the metal-based material on the surface of the carbonaceous material, wherein the fine metal particles exhibit a catalytic ability to separate at least one hydrogen molecule into hydrogen atoms and to further separate hydrogen atoms into protons and electrons.

177. The method of producing a carbonaceous material for hydrogen storage as claimed in claim 176, wherein the fine metal particles have an average particle size of 1 micrometer or less.

178. The method of producing a carbonaceous material for hydrogen storage as claimed in claim 176, wherein the fine metal particles are in an amount of 10 wt% or less by weight of the carbonaceous material.

179. The method of producing a carbonaceous material for hydrogen storage as claimed in claim 176, wherein the metal-based material includes platinum or a platinum alloy.

180. The method of producing a carbonaceous material for hydrogen storage as claimed in claim 179, wherein the supporting step includes supporting the fine metal particles on the carbonaceous material by a chemical supporting process including a solution containing a platinum complex.

181. The method of producing a carbonaceous material for hydrogen storage as claimed in claim 179, wherein the supporting step includes supporting the fine metal particles on the carbonaceous material by an arc discharge process including a platinum-containing electrode.

182. The method of producing a carbonaceous material for hydrogen storage as claimed in claim 176, wherein the carbonaceous material contains one of at least one type of fullerene molecule and a polymer produced from at least one type of fullerene molecule by plasma polymerization.

183. The method of producing a carbonaceous material for hydrogen storage as claimed in claim 182, wherein the at least one type of fullerene molecule has a formula Cₙ where n is an even integer of at least 20 such that the at least one type of fullerene molecule has a spherical molecular structure.

184. The method of producing a carbonaceous material for hydrogen storage as claimed in claim 182, wherein one kind of the fullerene molecule is fullerene C₆₀ or fullerene C₇₀, and the mixture of the fullerene molecule includes fullerene C₆₀ and fullerene C₇₀, or a higher molecular weight fullerene.

185. The method of producing a carbonaceous material for hydrogen storage as claimed in claim 176, wherein the carbonaceous material contains at least one type of carbon nanotube.

186. A cell, comprising:
a negative electrode;
a positive electrode, wherein at least one of the negative electrode and the positive electrode includes a carbonaceous material having a plurality of fine metal particles supported thereon, wherein the carbonaceous material exhibits a catalytic ability to separate a hydrogen molecule into hydrogen atoms and to further separate hydrogen atoms into protons and electrons; and
an electrolyte disposed between the negative electrode and positive electrode.

187. The cell as claimed in claim 186, which is an alkali battery.

188. The cell as claimed in claim 186, which is an air cell.

189. A fuel cell, comprising:
a negative electrode, a positive electrode, and a proton conductor configured in a stack arrangement; and
a hydrogen storage portion including a carbonaceous material having a plurality of fine metal particles supported thereon, wherein the carbonaceous material exhibits a catalytic ability to separate a hydrogen molecule into hydrogen atoms and to further separate hydrogen atoms into protons and electrons, wherein the hydrogen storage portion supplies hydrogen to the negative electrode.
